# EUROPÄISCHE PATENTSCHRIFT

(11) **EP 4 064 606 B1**
(45) Veröffentlichungstag und Bekanntmachung des Hinweises auf die Patenterteilung: **18.06.2025**
(21) Anmeldenummer: 22163659.0
(22) Anmeldetag: 22.03.2022
(51) Int. Cl.: H04L 9/40, H04L 9/00, H04L 9/32, G06Q 20/06, G06Q 20/32, G06Q 20/38

(54) **SERIENNUMMERNSPEZIFISCHE BLOCKCHAIN-STÜTZUNG FÜR MOBILE TRAGBARE ENDGERÄTE**
SERIAL NUMBER-SPECIFIC BLOCKCHAIN SUPPORT FOR MOBILE PORTABLE TERMINALS
CHAÎNE DE BLOCS COMME SUPPORT SPÉCIFIQUE AU NUMÉRO DE SÉRIE POUR TERMINAUX PORTABLES MOBILES

(30) Priorität: 24.03.2021 DE 102021107379
(43) Veröffentlichungstag der Anmeldung: 28.09.2022
(73) Patentinhaber: Bundesdruckerei GmbH, 10969 Berlin (DE)
(72) Erfinder: PETERS, Florian, 10437 Berlin (DE)
(74) Vertreter: Richardt Patentanwälte PartG mbB

(56) Entgegenhaltungen:
- WO-A1-2017/182601
- WO-A2-2021/245244
- US-B1- 10 402 823
- ELDEFRAWY MOHAMED HAMDY ET AL: "Banknote Validation through an Embedded RFID Chip and an NFC-Enabled Smartphone", MATHEMATICAL PROBLEMS IN ENGINEERING, vol. 2015, 1 January 2015 (2015-01-01), CH, pages 1 - 8, XP055861880, ISSN: 1024-123X, Retrieved from the Internet <URL:https://downloads.hindawi.com/journals/mpe/2015/264514.pdf> DOI: 10.1155/2015/264514

## Beschreibung

Die Erfindung betrifft Zahlungsverfahren unter Verwendung von mobilen tragbaren Endgeräten, insbesondere Banknoten, mit einer seriennummernspezifischen Blockchain-Stützung sowie ein Computersystem und System zum Ausführen des Verfahrens.

Im Zuge der zunehmenden Digitalisierung rücken heutzutage mehr und mehr bargeldlose Zahlungsinstrumente in den Vordergrund, insbesondere basierend auf elektronischen Verfahren zur Zahlungsabwicklung. Im bargeldlosen Zahlungsverkehr erfolgt ein Transfer von Zahlungsmitteln, ohne dass dabei Bargeld transferiert wird. Bei Barzahlungen wird Bargeld, d.h. Banknoten oder Münzen, zwischen Zahlungspflichtigem und Zahlungsempfänger ausgetauscht, während es bei einer bargeldlosen Zahlung nicht zu einem solchen Austausch von Bargeld kommt.

Bargeld hat beispielsweise den Vorteil, dass es für jedermann verfügbar ist und schnell sowie überall eingesetzt werden kann. So ist beispielsweise für eine bargeldbasierte Zahlungsabwicklung kein Bankkonto erforderlich. Zudem wird Bargeld von den Besitzern oftmals als Wertaufbewahrungsmittel geschätzt.

Bargeldlose Zahlungsverfahren haben demgegenüber beispielsweise den Vorteil, dass sie eine effiziente Zahlungsabwicklung ermöglichen, selbst wenn sich Zahlungspflichtiger und Zahlungsempfänger an entfernten Orten aufhalten, wie es beispielsweise bei Einkäufen über das Internet der Fall ist. Dies können bekannte Banknoten nicht leisten.

Die WO 2021 /245244 A2 beschreibt eine Banknote mit einem Sicherheitselement mit einem Prozessor und einem Speicher. In einem geschützten Speicherbereich des Speichers ist ein privater kryptographischer Schlüssel eines asymmetrischen Schlüsselpaars der Banknote gespeichert ist. Das asymmetrische Schlüsselpaar ist einer banknotenindividuellen Blockchainadresse in einer Blockchain zugeordneten. Ein mit der Banknote ausgeführtes Zahlungsverfahren umfasst ein Empfangen einer Zahlungsanfrage für eine Zahlung mit der Banknote in Form einer Transaktion eines zu zahlenden Betrags von der Blockchainadresse der Banknote an eine Blockchainadresse eines Zahlungsempfängers, ein Signieren einer Transaktionsfreigabe mit dem privaten kryptographischen Schlüssel der Banknote und ein Senden der signierten Transaktionsfreigabe.

Die WO 2017/182601 A1 beschreibt ein elektronisches Verfahren zur kryptographisch gesicherten Überweisung eines Betrags einer Kryptowährung durch eine Transaktion des Betrags von einer einem ersten Client zugeordneten Ausgangsadresse auf eine einem zweiten Client zugeordnete Zieladresse. Dabei ist eine Mehrzahl von Clients vorgesehen, welche zumindest den ersten und den zweiten Client umfasst. Auf den Clients ist jeweils ein Walletprogramm zur Realisierung eines Client-Nodes der Kryptowährung installiert. Ferner ist ein Transaktionsserver vorgesehen, auf dem ein Transaktionsprogramm zur Realisierung eines Server-Nodes der Kryptowährung installiert ist. Das Transaktionsprogramm ist dazu konfiguriert Blöcke der Blockchain mit Transaktionsdaten zu erzeugen. Der Transaktionsserver umfasst einen privaten und einen öffentlichen Serverschlüssel eines asymmetrischen Serverschlüsselpaars sowie ein Serverzertifikat einer hierarchischen PKI mit einer zentralen Wurzelzertifizierungsinstanz, welches dazu konfiguriert ist als Nachweis der Authentizität des öffentlichen Serverschlüssels und der Berechtigung des Transaktionsservers zum Erzeugen von Blöcken der Blockchain zu dienen.

Der Erfindung liegt daher die Aufgabe zugrunde, eine verbessertes Zahlungsverfahren mit einem mobilen tragbaren Endgerät zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ausführen einer Zahlung unter Verwendung eines ersten mobilen tragbaren Endgeräts einer Mehrzahl von mobilen tragbaren Endgeräten und eines Blockchain-Systems. Das Blockchain-System umfasst eine Mehrzahl von Blockchains. Jeder der Blockchains sind jeweils ein oder mehrere Blockchain-Server zugeordnet, welche die entsprechende Blockchain verwalten. Jedes der mobilen tragbaren Endgeräte der Mehrzahl von mobilen tragbaren Endgeräten ist jeweils eine Seriennummer aus einem Raum von Seriennummern zugeordnet. Der Raum von Seriennummern ist unterteilt in eine Mehrzahl von Bereichen von Seriennummern. Jedem der Bereiche von Seriennummern ist jeweils eine der Blockchains des Blockchain-Systems zugeordnet, welche Zahlungen von banknotenindividuellen Blockchain-Adressen protokolliert, welche mobilen tragbaren Endgeräten mit Seriennummern aus dem entsprechenden Bereich von Seriennummern zugeordnet sind.

Das Verfahren umfasst:
- Empfangen einer Nachricht des ersten mobilen tragbaren Endgeräts mit einer Transaktionsfreigabe, wobei die Transaktionsfreigabe unter Verwendung eines banknotenindividuellen privaten kryptographischen Schlüssels eines asymmetrischen Schlüsselpaars des ersten mobilen tragbaren Endgeräts signiert ist, wobei das asymmetrische Schlüsselpaar einer banknotenindividuellen erste Blockchain-Adresse des ersten mobiles tragbaren Endgeräts zugeordnet ist, wobei die Transaktionsfreigabe die erste Blockchain-Adresse der ersten Banknote, eine zweite Blockchain-Adresse des Zahlungsempfängers und einen zu zahlenden Betrag umfasst,
- Bestimmen unter Verwendung einer ersten Seriennummer der ersten Banknote, welche die Nachricht umfasst, einer ersten Blockchain der Mehrzahl von Blockchains, welche demjenigen Bereich von Seriennummern zugeordnet ist, welcher die erste Seriennummer umfasst,
- Weiterleiten der Nachricht an einen ersten Blockchain-Server, welcher die bestimmte erste Blockchain verwaltet, zum Prüfen und Eintragen der von der Transaktionsfreigabe freigegebenen Transaktion in die erste Blockchain.

Ausführungsformen können den Vorteil haben, dass unter der Verwendung des mobilen tragbaren Endgeräts eine bargeldlose Zahlung ermöglicht wird. Bei einer Verwendung für eine bargeldlose Zahlung, d.h. ohne Übergabe einer Banknote bzw. Übergang des Eigentums an der Banknote, erfolgt die Zahlung durch ein Bereitstellen einer signierten Transaktionsfreigabe, d.h. eine Transaktionsautorisierung, durch das mobile tragbare Endgerät. Diese signierte Transaktionsfreigabe des mobilen tragbaren Endgeräts autorisiert eine Transaktion bzw. gibt die Transaktion frei, bei welcher der zu zahlende Betrag von einer Blockchain-Adresse des mobilen tragbaren Endgeräts an die Blockchain-Adresse des Zahlungsempfängers transferiert wird.

Auch im Falle eines mobilen tragbaren Endgeräts in Form einer Banknote handelt es sich um eine bargeldlose Zahlung, da die entsprechende Banknote zwar die Zahlung freigibt, nicht aber selbst übergeben wird. Bei den Seriennummern kann es sich um jede Art von geordneten Nummern, d.h. Zahlen- und/oder Buchstabenfolgen handeln.

Die Zahlungsabwicklung erfolgt dabei in kryptographischer gesicherter Art und Weise unter Verwendung der Blockchain-Technologie. Hierbei kommt aber nicht nur eine einzige Blockchain zum Einsatz, sondern es wird ein Blockchain-System verwendet, welches eine Mehrzahl von Blockchains umfasst. Jede dieser Blockchains ist jeweils für die Abwicklung von Zahlungen bestimmter mobiler tragbarer Endgeräte zuständig. Hierzu werden die verwendeten mobilen tragbaren Endgeräte anhand der ihnen zugeordneten Seriennummern in Kontingente aufgeteilt. Für jedes dieser Kontingente ist jeweils eine eigenständige Blockchain zuständig. Dies kann den Vorteil haben, dass Zahlungen mit Backnoten, welche zu unterschiedlichen Kontingenten gehören und daher unterschiedlichen Blockchains zugeordnet sind, durch die entsprechenden Blockchains zeitgleich, d.h. parallel, abgewickelt werden können. Mithin kann die Zahlungsabwicklung von Zahlungen mit den mobilen tragbaren Endgeräten parallelisiert werden. Jeder der Blockchains sind jeweils ein oder mehrere Blockchain-Server zugeordnet sind, welche die entsprechende Blockchain verwalten. Mit anderen Worten sind die Blockchain-Server unterschiedlicher Blockchains unabhängig voneinander und können ihre jeweilige Blockchain parallel zueinander verwalten.

Durch eine solche Parallelisierung kann die Effizienz der Abwicklung von Zahlungen gesteigert werden, insbesondere kann Durchlaufzeit, d.h. die zur Abwicklung einer Zahlung benötigte Zeitspanne, verkürzt werden.

Die Aufteilung der mobilen tragbaren Endgeräte in Kontingente erfolgt auf Basis der ihnen zugeordneten Seriennummern. Hierzu wird der Raum von Seriennummern, welche den verwendeten mobilen tragbaren Endgeräten zugeordnet sind, in Bereiche unterteilt. Jeder dieser Bereiche von Seriennummern entspricht einem Kontingent von Banknoten, deren Seriennummern von dem entsprechenden Bereich umfasst sind. Jedem der Bereiche von Seriennummern ist jeweils eine der Blockchains des Blockchain-Systems zugeordnet. In diese Blockchain werden Zahlungen eingetragen von banknotenindividuellen Blockchain-Adressen, welche mobile tragbare Endgeräte mit Seriennummern aus dem entsprechenden Bereich von Seriennummern zugeordnet sind.

Für eine effektive Parallelisierung müssen die Transaktionsfreigaben der mobilen tragbaren Endgeräte jeweils zu dem Blockchain-Server geleitet werden, welcher für die Blockchain zuständig ist, die den Bereich von Seriennummern verwaltet, in welchen die Seriennummer des jeweiligen mobilen tragbaren Endgeräts fällt, welches die Transaktionsfreigabe erzeugt. Zu diesem Zweck umfasst die Nachricht des mobilen tragbaren Endgeräts mit der Transaktionsfreigabe die Seriennummer der entsprechenden Banknote. Die Seriennummer kann Bestandteil der Angaben der Transaktionsfreigabe sein, etwa falls die Seriennummer als Blockchain-Adresse des mobilen tragbaren Endgeräts verwendet wird. Ebenso kann die Nachricht die Seriennummer des mobilen tragbaren Endgeräts zusätzlich zu der Transaktionsfreigabe umfassen. Beispielsweise kann die Seriennummer des mobilen tragbaren Endgeräts in einem Header der Nachricht bereitgestellt werden. Dies ist beispielsweise von Vorteil, falls der Inhalt der Nachricht, insbesondere die Transaktionsfreigabe, verschlüsselt ist. Unter Verwendung der von der Nachricht bereitgestellten Seriennummer wird diejenige Blockchain der Mehrzahl von Blockchains bestimmt, welche dem Bereich von Seriennummern zugeordnet ist, der die angegebene Seriennummer umfasst. Diese Blockchain wird von ein oder mehreren Blockchain-Servern verwaltet. Die Nachricht dann an einen Blockchain-Server zum Prüfen und Eintragen der von der Transaktionsfreigabe freigegebenen Transaktion in die bestimmte Blockchain an einen dieser Blockchain-Server weitergeleitet. Falls die bestimmte Blockchain von mehreren Blockchain-Severn verwaltet wird, kann die Nachricht beispielsweise an den nächstgelegenen Blockchain-Sever weitergeleitet werden.

Anhand der Seriennummer wird die Nachricht somit an den zuständigen Blockchain-Server weitergeleitet. Das Weiterleiten der Nachricht kann beispielsweise direkt vor Ort durch ein Terminalcomputersystem, etwa eines Point-of-Sales, oder durch einen Server erfolgen, an welchen das Terminalcomputersystem eine empfangene Nachricht zum Weiterleiten sendet. Alternativ kann eine Zahlung beispielsweise über ein Netzwerk, wie das Internet, erfolgen, wobei ein Nutzer unter Verwendung eines Nutzercomputersystems die Nachricht an einen Server zur weiteren Zahlungsabwicklung sendet. Der entsprechende Server leitet die Nachricht dann weiter. Ebenso kann ein Weiterleiten durch einen Blockchain-Sever des Blockchain-Systems erfolgen, welcher beispielsweise zunächst prüft, ob er selbst bzw. die von ihm verwaltete Blockchain für die von der Nachricht bereitgestellte Seriennummer zuständig ist. Falls er selbst nicht zuständig ist, wird die zuständige Blockchain identifiziert und die Nachricht an einen der Blockchain-Sever der zuständigen Blockchain weitergeleitet.

Die Zahlung kann beispielsweise vor Ort an einem Point-of-Sale, etwa an einem Terminal erfolgen, oder online, etwa über ein Nutzercomputersystem des Nutzers, welches über das Internet kommuniziert und die Nachricht mit der Transaktionsfreigabe an einen Server, etwa einen Dienstserver sendet. Bei dem Dienstserver kann es sich beispielsweise um einen Server handeln, welcher einen Dienst bereitstellt, den der Nutzer gegen Bezahlung in Anspruch nehmen möchte. Ebenso kann es sich bei dem Service um einen Zahlungsdienstserver handeln, welcher eine Zahlung in Form der Transaktion für einen Dritten abwickelt.

Nach Ausführungsformen Prüfen die Blockchain-Server in ihrer freien Zeit, d.h. wenn sie nicht dem Prüfen und Eintragen Transaktionen in die eigene Blockchain beschäftigt sind, andere Blockchains der Mehrzahl von Blockchains auf Konsistenz.

Nach Ausführungsformen werden die Blockchains von einer die Banknoten ausgebenden Zentralbank verwaltet. Beispielsweise können die Blockchains regional oder national zugeordneten, insbesondere wenn die Bereiche der Seriennummern regional oder national zugeordnet sind. Werden Banknoten mit bestimmten Seriennummern in bestimmten Regionen oder Staaten ausgegeben, kann diese den Vorteil haben, dass beispielsweise Zahlungen statistisch gehäuft zwischen Banknoten bzw. unter Verwendung von Banknoten erfolgen, die demselben Bereich von Seriennummern zugeordnet sind und mithin unter Verwendung derselben Blockchain abgewickelt werden. In diesem Fall können beispielsweise die Blockchain-Adresse der Banknote und die Blockchain-Adresse des Zahlungsempfängers mit hoher Wahrscheinlichkeit derselben Blockchain zugeordnete sein.

Nach Ausführungsformen handelt es sich bei dem ersten mobilen tragbaren Endgerät um eine von einer Zentralbank ausgegebenen ersten Banknote. Bei der ersten Blockchain-Adresse handelt es sich um eine banknotenindividuelle Blockchain-Adresse. Bei dem privaten kryptographischen Schlüssel um einen banknotenindividuellen privaten kryptographischen Schlüssel eines banknotenindividuellen asymmetrischen Schlüsselpaars handelt. Ausführungsformen können den Vorteil haben, dass es sich bei dem mobilen tragbaren Endgerät um eine Banknote handeln kann.

Nach Ausführungsformen handelt es sich bei dem privaten kryptographischen Schlüssel des ersten mobilen tragbaren Endgeräts um einen abgeleiteten privaten kryptographischen Schlüssel einer Blockchain-Adresse, welche von einer Blockchain-Adresse einer zweiten Banknote abhängig ist. Die zweite Banknote umfasst ein Sicherheitselement mit einem Prozessor und einem Speicher mit Programminstruktionen. In dem Speicher des Sicherheitselements die Blockchain-Adresse der zweiten Banknote gespeichert ist. In einem geschützten Speicherbereich des Speichers des Sicherheitselements der zweiten Banknote ist ein banknotenindividueller kryptographischer Schlüssel der zweiten Banknote gespeichert.

Ein Ableiten des privaten kryptographischen Schlüssels des ersten mobilen tragbaren Endgeräts umfasst:
- Empfangen einer Ableitungsanfrage zum Ableiten des privaten kryptographischen Schlüssels für das erste mobile tragbare Endgerät durch die zweite Banknote,
- Initiieren eines Ableitens des privaten kryptographischen Schlüssels für das erste mobile tragbare Endgerät unter Verwendung einer Einwegfunktion und des banknotenindividuellen kryptographischen Schlüssels der zweiten Banknote,
- Senden der ersten Seriennummer an das erste mobile tragbare Endgerät durch die zweite Banknote.

Beispielsweise liegen den mobilen tragbaren Endgeräten, bei welchen es sich um keine Banknoten handelt, jeweils zumindest eine Banknote zugrunde, welche den privaten kryptographischen Schlüssel des entsprechenden mobilen tragbaren Endgeräts zur Verfügung stellt. Beispielsweise sind die Seriennummer der mobilen tragbaren Endgeräte jeweils von einer Seriennummer einer Banknote abgeleitete. Beispielsweise handelt es sich bei der abgeleiteten Seriennummer um die Seriennummer der Banknote mit einem Zusatz. Beispielsweise ist diese abgeleitete Seriennummer demselben Bereich von Seriennummern zugeordnet, wie die Seriennummer der Banknote. Beispielsweise sind in den Speichern der Banknoten jeweils zusätzliche Seriennummern gespeichert, welche im Zuge des Ableitens an die mobilen tragbaren Endgeräte ausgegeben werden. Somit kann eine Banknote beispielsweise nur für so viel mobilen tragbaren Endgeräte private kryptographische Schlüssel ableiten, wie sie Seriennummern umfasst.

Nach Ausführungsformen leitet die zweite Banknote den privaten kryptographischen Schlüssel für mobile tragbare Endgerät unter Verwendung des banknotenindividuellen kryptographischen Schlüssels der zweiten Banknote ab und sendet den abgeleiteten privaten kryptographischen Schlüssel in Antwort auf die Ableitungsanfrage an das erste mobile Endgerät.

Ausführungsformen können den Vorteil haben, dass die Schlüsselableitung auf der zweiten Banknote erfolgt. Nach außen wird alleine der abgeleitete Schlüssel sichtbar. Ohne die zweite Banknote gibt es mithin keinen Weg an den abgeleiteten Schlüssel zu gelangen.

Bei der Einwegfunktion handelt es sich um eine Funktion zur Schlüsselableitung, d.h. eine sogenannte "Key Derivation Function" (KDF). Diese führt eine kryptographische Operation aus, welche aus einem kryptographischen Schlüssel als Eingangswert einen oder mehrere weitere kryptographische Schlüssel als Ausgangswerte erzeugt. Eine Verwendung eines abgeleiteten kryptographischen Schlüssels kann den Vorteil haben, dass ein Angreifer, der Zugriff auf den abgeleiteten Schlüssel erhält, keine nützlichen Informationen über den ursprünglichen kryptographischen Schlüssel oder einen der anderen abgeleiteten kryptographischen Schlüssel erlangt.

Nach Ausführungsformen leitet die zweite Banknote zusätzlich einen zu dem abgeleiteten privaten kryptographischen Schlüssel zugehörigen öffentlichen kryptographischen Schlüssel für das erste mobile tragbare Endgerät ab und sendet den abgeleiteten privaten kryptographischen Schlüssel als Teil eines resultierenden ersten asymmetrischen Schlüsselpaars an das erste mobile tragbare Endgerät.

Ausführungsformen können den Vorteil haben, dass zusätzlich zu dem privaten kryptographischen Schlüssel von der Banknote ein zugehöriger abgeleiteter öffentlicher kryptographischer Schlüssel bereitgestellt wird. Das erste mobile tragbare Endgerät erhält mithin beispielsweise ein abgeleitetes asymmetrisches Schlüsselpaar. Der abgeleitete öffentliche Schlüssel kann zum Erzeugen der Blockchain-Adresse des ersten mobilen tragbaren Endgeräts verwendet werden. Ein Ableiten einer Blockchain-Adresse umfasst beispielsweise ein Anwenden einer Hashfunktion auf den öffentlichen kryptographischen Schlüssel, welcher als Eingangswert dient.

Nach Ausführungsformen verwendet das erste mobile tragbare Endgerät den abgeleiteten privaten kryptographischen Schlüssel, um den zugehörigen öffentlichen kryptographischen Schlüssel zu berechnen. Ausführungsformen können den Vorteil haben, dass das erste mobile tragbare Endgerät die volle Verfügungshoheit über die Verwendung des abgeleiteten privaten kryptographischen Schlüssels besitzt. Der öffentliche kryptographische Schlüssel wird beispielsweise mittels elliptischer Kurven aus dem privaten kryptographischen Schlüssel erzeugt.

Nach Ausführungsformen berechnet die Banknote aus dem banknotenindividuellen kryptographischen Schlüssel einen Eingangswert für die Einwegfunktion zum Ableiten des privaten kryptographischen Schlüssels für das erste mobile tragbare Endgerät und sendet den resultierenden Eingangswert zum Ableiten des ersten privaten kryptographischen Schlüssels durch das erste mobile tragbare Endgerät in Antwort auf die Ableitungsanfrage an das erste mobile tragbare Endgerät.

Ausführungsformen können den Vorteil haben, dass das Ableiten des privaten kryptographischen Schlüssels durch das erste mobile tragbare Endgerät ermöglicht wird. Die Banknote stellt hierzu einen abgeleiteten Eingangswert bereit. Der kryptographische Schlüssel der Banknote bleibt somit sicher auf der Banknote verwahrt.

Nach Ausführungsformen umfasst das Verfahren ferner ein Ableiten des privaten kryptographischen Schlüssels für das erste mobile tragbare Endgerät durch das erste mobile tragbare Endgerät unter Verwendung der Einwegfunktion und des empfangenen Eingangswerts. Ausführungsformen können den Vorteil haben, dass das Ableiten des privaten kryptographischen Schlüssels durch das erste mobile tragbare Endgerät erfolgt.

Nach Ausführungsformen leitet das erste mobile tragbare Endgerät den privaten kryptographischen Schlüssel zusammen mit einem zugehörigen öffentlichen kryptographischen Schlüssel als asymmetrisches Schlüsselpaar für das erste mobile tragbare Endgerät ab. Ausführungsformen können den Vorteil haben, dass zusätzlich zu dem privaten kryptographischen Schlüssel von dem ersten mobilen tragbaren Endgerät ein zugehöriger abgeleiteter öffentlicher kryptographischer Schlüssel bereitgestellt wird. Das Computersystem verfügt mithin beispielsweise über ein abgeleitetes asymmetrisches Schlüsselpaar.

Nach Ausführungsformen handelt es sich bei dem banknotenindividuellen kryptographischen Schlüssel der zweiten Banknote um einen privaten kryptographischen Schlüssel eines asymmetrischen Schlüsselpaars der zweiten Banknote.

Nach Ausführungsformen umfasst die Nachricht die erste Seriennummer des ersten mobilen tragbaren Endgeräts in einem Header. Ausführungsformen können den Vorteil haben, dass die Seriennummer zum Adressieren der Nachricht leicht zugänglich ist, insbesondere falls beispielsweise der Rest der Nachricht, insbesondere die Transaktionsfreigabe verschlüsselt ist. Beispielsweise kann es sich bei der Transaktionsfreigabe um ein Kryptogramm, d.h. ein Verschlüsseltes Datenelement, oder eine signierte Payload handeln.

Nach Ausführungsformen handelt es sich bei der ersten Blockchain-Adresse um die erste Seriennummer der ersten Banknote. Ausführungsformen können den Vorteil haben, dass mit der Angabe der Blockchain-Adresse bereits die für das weiterleiten der Nachricht notwendige Information vorliegt.

Nach Ausführungsformen ist die erste Blockchain-Adresse aus der ersten Seriennummer des ersten mobilen tragbaren Endgeräts abgeleitet.

Nach Ausführungsformen wird ein öffentlicher kryptographischer Schlüssel des asymmetrischen Schlüsselpaars des ersten mobilen tragbaren Endgeräts der ersten Blockchain-Adresse durch eine die erste Blockchain-Adresse initialisierenden Transaktion an die erste Blockchain-Adresse zugeordnet, mit welcher der öffentliche kryptographische Schlüssel des asymmetrischen Schlüsselpaars des ersten mobilen tragbaren Endgeräts in die erste Blockchain eingetragen wird.

Ausführungsformen können den Vorteil haben, dass eine Blockchain-Adresse, welche als eine Konto- bzw. Account-ID in der Blockchain dient, um Zahler und Zahlungsempfänger einer Transaktion zu identifizieren, nicht dem öffentlichen kryptographischen Schlüssel des mobilen tragbaren Endgeräts entsprechen oder aus diesem abgeleitet sein muss. Beispielsweise können als Blockchain-Adressen auch die Seriennummern des mobilen tragbaren Endgeräts dienen. Mithin würden die in eine Blockchain der Mehrzahl von Blockchains eingetragenen Transaktionen beispielsweise jeweils Seriennummer als Ursprungs- bzw. Ausgangsadressen angeben, welche in dem Bereich von Seriennummern liegen, dem die entsprechende Blockchain zugeordnet ist.

Für eine kryptographische Bindung der Blockchain-Adresse bzw. Seriennummer eines mobilen tragbaren Endgeräts an das asymmetrischen Schlüsselpaar des entsprechenden mobilen tragbaren Endgeräts kann beispielsweise eine initialisierende Transaktion an die entsprechende Blockchain-Adresse verwendet werden, welche den öffentlichen kryptographischen Schlüssel des entsprechenden asymmetrischen Schlüsselpaars umfasst. Mit der Eintragung der initialisierenden Transaktion erfolgt eine Zuordnung der Blockchain-Adresse bzw. Seriennummer zu dem asymmetrischen Schlüsselpaar. Beispielsweise erfolgt die initialisierende Transaktion von einer Blockchain-Adresse bzw. Seriennummer, welche einer Zentralbank zugeordnet ist, die die entsprechende Blockchain verwaltet.

Nach Ausführungsformen handelt es sich bei der ersten Blockchain-Adresse um den öffentlichen kryptographischen Schlüssel des asymmetrischen Schlüsselpaars der ersten Banknote. Nach Ausführungsformen ist die erste Blockchain-Adresse aus dem öffentlichen kryptographischen Schlüssel des asymmetrischen Schlüsselpaars des ersten mobilen tragbaren Endgeräts abgeleitet.

Nach Ausführungsformen wird die erste Seriennummer der ersten Blockchain-Adresse durch eine initiale Transaktion an die erste Blockchain-Adresse zugeordnet, mit welcher die erste Seriennummer in die erste Blockchain eingetragen wird.

In diesem Fall besteht zwar eine kryptographische Bindung der Blockchain-Adresse an das asymmetrischen Schlüsselpaar der entsprechenden Banknote, aber nicht an die Seriennummer. Für eine zusätzliche kryptographische Bindung der Blockchain-Adresse an die Seriennummer, welche dem mobilen tragbaren Endgerät zugeordnet ist, kann beispielsweise eine initialisierende Transaktion an die entsprechende Blockchain-Adresse verwendet werden, welche die Seriennummer umfasst. Mit der Eintragung der initialisierenden Transaktion erfolgt eine Zuordnung der Blockchain-Adresse zu der Seriennummer. Beispielsweise erfolgt die initialisierende Transaktion von einer Blockchain-Adresse bzw. Seriennummer, welche einer Zentralbank zugeordnet ist, die die entsprechende Blockchain verwaltet.

Nach Ausführungsformen erfolgt das Weiterleiten der Nachricht an den ersten Blockchain-Server unter Verwendung einer Routingtabelle, welche für die Bereiche der Mehrzahl von Bereichen von Seriennummern jeweils ein oder mehrere zugeordnete Blockchain-Server identifiziert, welche die dem entsprechenden Bereich von Seriennummern zugeordnete Blockchain verwalten.

Ausführungsformen können den Vorteil haben, dass eine Routingtabelle bereitgestellt wird, welche die unterschiedlichen Bereiche in die der Raum von Seriennummern untereilt ist identifiziert. Beispielsweise können die entsprechenden Bereiche als Intervalle durch eine kleinste und größte von dem entsprechenden Bereich umfasste Seriennummer begrenzt werden. Beispielsweise kann für die Bereiche jeweils eine kleinste Seriennummer angegeben werden, wobei der jeweilige Bereich alle Seriennummern umfasst, welche größer oder gleich der entsprechenden kleinsten Seriennummer und zugleich kleiner als die kleinsten Seriennummer des nächstfolgenden Bereichs sind. Beispielsweise kann für die Bereiche jeweils eine größte Seriennummer angegeben werden, wobei der jeweilige Bereich alle Seriennummern umfasst, welche kleiner oder gleich der entsprechenden größten Seriennummer und zugleich größer als die größte Seriennummer des unmittelbar vorangehenden Bereichs sind. Beispielsweise können Bereiche jeweils durch den Anfang der Seriennummern angegeben werden. Alle Seriennummer, welche einen Anfang identisch zu einem in der Routingtabelle angegebenen Anfang aufweisen; gehören zu diesem Bereich.

Anhand der Routingtabelle kann somit bestimmt werden zu welchem Bereich von Seriennummern bzw. zu welcher Blockchain die Seriennummer einer Nachricht gehört. Ferner kann die Routingtabelle für jeden der Bereiche jeweils ein oder mehrere Blockchain-Server angeben, welche die für den entsprechenden Bereich zuständige Blockchain verwalten. Unter Verwendung der Routingtabelle kann somit derjenige Blockchain-Server bestimmt werden, an welchen die Nachricht zum Prüfen und Eintragen weiterzuleiten ist.

Nach Ausführungsformen identifiziert die Routingtabelle ferner jeweils eine Netzwerkadresse der Blockchain-Server. Ausführungsformen können den Vorteil haben, dass unter Verwendung der Routingtabelle die Nachricht im Zuge des Weiterleitens an den zuständigen Blockchain-Server adressiert werden kann.

Nach Ausführungsformen identifiziert die Routingtabelle für die Blockchain-Server jeweils eine Metrik. Diese Metrik definiert beispielsweise eine Weglänge bzw. Anzahl von Weiterleitungen bis zum Erreichen des jeweiligen Blockchain-Servers. Zusätzlich oder alternativ kann die Metrik auch andere Faktoren berücksichtigen, welche die Güte der Verbindung zu dem jeweiligen Blockchain-Server beeinflussen. Beispielsweise können dies eine zur Verfügung stehende Datenübertragungsrate oder eine Verbindungsqualität sein. Neben einem Hop Count oder alternativ dazu kann die Metrik beispielsweise auch eine Verzögerung, eine Last, eine maximale Paketgröße (Maximum Transmission Unit/MTU) und/oder eine Verlässlichkeit der jeweiligen Verbindung berücksichtigen.

Allgemein wir in diesem Kontext unter einer Metrik ein numerisches Maß für die Güte einer Verbindung bei Verwendung einer bestimmten Route verstanden. Das Maß kann beispielsweise durch Bewertung oder durch Messung bestimmt sein. Anhand dieses Wertes kann je nach Bemessungsgrundlage beispielsweise der kürzeste Weg mit den wenigsten Weiterleitungen, d.h. Hops, gewählt werden. Falls eine Mehrzahl von Blockchain-Servern dieselbe Blockchain verwalten, kann somit beispielsweise derjenige Blockchain-Server als Weiterleitungsziel ausgewählt werden, dessen Verbindung die höchste Güte aufweist. Beispielsweise handelt es sich dabei um den nächstgelegenen Blockchain-Server, d.h. den Blockchain-Server mit den wenigsten Weiterleitungen.

Nach Ausführungsformen identifiziert die Routingtabelle ferner für jeden der Blockchain-Server ein oder mehrere nächste Netzwerkadressen, an welche eine Nachricht zum Übertragen an den entsprechenden zuständigen Blockchain-Server weiterzuleiten ist. Ausführungsformen können den Vorteil haben, dass anhand der Routingtabelle eine nächste Netzwerkadresse zum Weiterleiten der Nachricht identifiziert werden kann. Nach Ausführungsformen identifiziert die Routingtabelle ferner für jede der nächsten Netzwerkadressen, d.h. für jede der möglichen Routen, jeweils eine Metrik angegeben.

Nach Ausführungsformen erfolgt das Empfangen und Weiterleiten der Nachricht durch ein Terminalcomputersystem oder einen Server. Ausführungsformen können den Vorteil haben, dass beispielsweise ein von dem Blockchain-System unabhängiges Computersystem die Nachricht empfängt und unter Verwendung der Routingtabelle bestimmt, an welchen der Blockchain-Server des Blockchain-Systems die Nachricht zur weiteren Bearbeitung weiterzuleiten ist. Ferner kann unter Verwendung der Routingtabelle beispielsweise eine Route bestimmt werden, auf welcher die Nachricht an den entsprechenden Blockchain-Server weiterzuleiten ist. Bei dem entsprechenden Computersystem kann es sich beispielsweise um ein Terminalcomputersystem handeln. Ein solches Terminalcomputersystem empfängt die Nachricht beispielsweise bei einem Zahlen mit dem mobilen tragbaren Endgerät vor Ort an einem Point-of-Sale. Nach Ausführungsformen erfolgt das Routing mit der Routingtabelle beispielsweise durch das Terminalcomputersystem. Unter Verwendung der Routingtabelle kann das Terminalcomputersystem beispielsweise bestimmen, wohin die Nachricht weiterzuleiten ist. Bei dem entsprechenden Computersystem kann es sich beispielsweise um einen Server handeln. Der entsprechende Server empfängt die Nachricht beispielsweise von einem Terminalcomputersystem. Das Terminalcomputersystem empfängt entsprechende Nachrichten von mobilen tragbaren Endgeräten beispielsweise jeweils im Zuge von Bezahlungen an einem Point-of-Sale vor Ort und leitet alle empfangenen Nachrichten ungeachtet deren Inhalts bzw. der von diesen umfassten Seriennummern an den Server weiter. Nach Ausführungsformen erfolgt das Routing mit der Routingtabelle beispielsweise durch den Server. Unter Verwendung der Routingtabelle kann der Server beispielsweise bestimmen, wohin die Nachricht weiterzuleiten ist. Der Server empfängt die Nachrichten, bestimmt einen zuständigen Blockchain-Server unter Berücksichtigung der darin angegebenen Seriennummern und leitet die Nachrichten jeweils an den bestimmten Blockchain-Server weiter.

Beispielsweise empfängt der Server die Nachricht von einem Nutzercomputersystem. Etwa bei einem Einkauf über das Internet, verwendet ein Nutzer ein mobiles tragbares Endgerät zum Erzeugen einer Transaktionsfreigabe zur Freigabe einer Transaktion. Die entsprechende Transaktion dient beispielsweise einer Bezahlung eines über das Internet in Anspruch genommen Dienstleistung, etwa eines Online-Einkaufs. Das Nutzercomputersystem empfängt eine Nachricht von dem mobilen tragbaren Endgerät mit der entsprechenden Transaktionsfreigabe leitet diese an den Server weiter. Bei dem Server handelt es sich beispielsweise um einen Dienstserver des in Anspruch genommenen Dienstes oder um einen Zahlungsdienstservers, eines mit der Abwicklung der Bezahlung beauftragten Zahlungsdienstleisters. Der Server empfängt die Nachrichten, bestimmt einen zuständigen Blockchain-Server unter Berücksichtigung der darin angegebenen Seriennummern und leitet die Nachrichten jeweils an den bestimmten Blockchain-Server weiter.

Nach Ausführungsformen erfolgt das Empfangen und Weiterleiten der Nachricht durch einen Blockchain-Server des Blockchain-Systems. Beispielsweise werden die Nachrichten zunächst an das Blockchain-System gesendet und erst dort von dem empfangenden Blockchain-Server basierend auf der jeweils umfasste Seriennummer an den zuständigen Blockchain-Server weitergeleitet. Beispielsweise leitet ein Terminalcomputersystem oder ein Server, welcher eine Nachricht mit einer Transaktionsfreigabe von einem mobilen tragbaren Endgerät empfängt, die entsprechende Nachricht ohne Rücksicht auf die Seriennummer stets an den- oder dieselben Blockchain-Server weiter. In diesem Fall erfolgt ein Routing beispielsweise erst durch den die Nachricht empfangenden Blockchain-Server des Blockchain-Systems.

Nach Ausführungsformen erfolgt das Routing mit der Routingtabelle beispielsweise durch den Blockchain-Server. Zunächst prüft der empfangende Blockchain-Server beispielsweise, ob die Seriennummer der Banknote, von welcher die Nachricht mit der Transaktionsfreigabe stammt, innerhalb des Bereichs von Seriennummern liegt, für welchen die Blockchain zuständig ist, die von dem empfangenden Blockchain-Server verwaltet wird. Falls dies der Fall ist erfolgt das Prüfen und Eintragen der von der Transaktionsfreigabe freigegebenen Transaktion in die entsprechende Blockchain durch empfangenden Blockchain-Server. Falls also der empfangende Blockchain-Server der zuständige Blockchain-Server ist, der die zuständige Blockchain verwaltet, erfolgt kein Weiterleiten durch den empfangenden Blockchain-Server. Vielmehr prüft der Blockchain-Server die Transaktionsfreigabe und trägt die von der Transaktionsfreigabe freigegebene Transaktion auf eine erfolgreiche Prüfung hin in die von ihm verwaltete Blockchain ein.

Falls die Seriennummer nicht innerhalb des Bereichs von Seriennummern liegt, für welchen die Blockchain zuständig ist, die von dem empfangenden Blockchain-Server verwaltet wird, bestimmt der empfangende Blockchain-Server unter Verwendung der Routingtabelle zu welchem Bereich von Seriennummern und mithin zu welcher Blockchain die von der Nachricht umfasste Seriennummer gehört. Ferner kann anhand der Routingtabelle bestimmt werden, an welchen Blockchain-Server die Nachricht zu senden ist und/oder über welche Route. Basierend auf diesen mittels der Routingtabelle bestimmten Informationen wird die Nachricht beispielsweise von dem empfangenden Blockchain-Server an den für sie zuständigen Blockchain-Server weitergeleitet.

Beispielsweise leitet ein Terminalcomputersystem die Transaktionsfreigabe an einen fest vorgegebenen Blockchain-Server weiter und erst der fest vorgegebene Blockchain-Server führt ein Routing aus, falls es sich nicht bei ihm selbst um den zuständigen Blockchain-Server handelt, welcher die zuständige Blockchain verwaltet. Beispielsweise handelt es sich bei dem fest vorgegebenen Blockchain-Server um einen Blockchain-Server, für welchen eine hohe oder eine höchste Wahrscheinlichkeit besteht, dass Banknoten, welche für Zahlungen über das entsprechende Terminalcomputersystem verwendet werden, Seriennummern umfassen, welche der von dem fest vorgegebenen Blockchain-Server verwalteten Blockchain zugeordnet sind. Höchste Wahrscheinlichkeit bedeutet, dass die Wahrscheinlichkeit für den entsprechenden Blockchain-Server von allen Blockchain-Servern des Blockchain-Systems am höchsten oder bei mehreren Blockchain-Servern mit derselben höchsten Wahrscheinlichkeit mit am höchsten ist. Beispielsweise handelt es sich bei dem festvorgegebenen Blockchain-Server somit mit hoher oder höchster Wahrscheinlichkeit um zuständigen Blockchain-Server.

Nach Ausführungsformen erfolgt das Empfangen und Weiterleiten der Nachricht durch einen Verteilungsserver des Blockchain-Systems. Beispielsweise umfasst das Blockchain-Systems eine Mehrzahl von Verteilungsserver, welche zum Empfangen und Weiterleiten von Nachrichten mit Transaktionsfreigaben konfiguriert sind. Beispielsweise empfangen die Verteilungsserver alle entsprechenden Nachrichten und bestimmen für diese basierend auf der von diesen umfassten Seriennummer den zuständigen Blockchain-Server. Nach Ausführungsformen erfolgt das Routing mit der Routingtabelle beispielsweise durch einen entsprechenden Verteilungsserver.

Nach Ausführungsformen ist der Blockchain-Server ferner dazu konfiguriert eine der Blockchains des Blockchain-Systems zu teilen, falls ein vordefiniertes Kriterium erfüllt wird. Das Teilen der Blockchain umfasst ein Aufteilen des Bereichs von Seriennummern, welcher der zu teilenden Blockchain zugeordnet ist, in zwei oder mehr Teilbereiche. Jedem der Teilbereiche wird im Zuge des Aufteilens eine eigenständige Blockchain zugeordnet.

Ausführungsformen können den Vorteil haben, dass die Anzahl der Blockchains im Bedarfsfall erhöht werden kann. Somit kann beispielsweise die Performance der Blockchains erhöht werden. Im Falle eines Teilens einer Blockchain sind die resultierenden Blockchains jeweils für einen Teilbereich von Seriennummern zuständig, welcher kleiner als der aufgeteilte Bereich von Seriennummern ist, d.h. weniger Seriennummern umfasst als dieser. Somit kann beispielsweise eine Last für eine Blockchain reduziert werden. Last ist beispielsweise definiert als Anzahl von einzutragenden Transaktionsfreigaben pro Zeit. Die Last kann ferner beispielsweise eine Anzahl an Abfragen, welche pro Zeit an die Blockchain gerichtet, berücksichtigen. Bei den Abfragen handelt es sich beispielsweise um Abfragen von Guthaben, welche Seriennummern des Bereiches zugeordnet sind, dem die entsprechende Blockchain zugeordnet ist. Wird die Anzahl der Seriennummern reduziert, für welche eine Blockchain zuständig ist, kann die Last reduziert und damit beispielsweise eine Eintragungsgeschwindigkeit beim Eintragen von Transaktionsfreigaben und/oder eine Antwortgeschwindigkeit bei der Beantwortung von Abfragen erhöht werden. Beispielsweise wird ein Hinweis an die Routingtabellen verteilt bezüglich der Teilung der Blockchain und des zugehörigen Bereichs der Seriennummern.

Beispielsweise kann jede Blockchain der Mehrzahl von Blockchains im Bedarfsfall geteilt werden. Beispielsweise wird der aufzuteilende Bereich von Seriennummern in zwei Teilbereiche und die zu teilende Blockchain in zwei Blockchains geteilt, welche jeweils einem der Teilbereiche zugeordnet werden. Beispielsweise wird der aufzuteilende Bereich von Seriennummern in mehr als zwei Teilbereiche und die zu teilende Blockchain in eine entsprechende Anzahl an Blockchains geteilt, welche jeweils einem der Teilbereiche zugeordnet werden. Bei den Bereichen von Seriennummern handelt es ich beispielsweise jeweils um einen zusammenhängenden Bereich von Seriennummern, d.h. der entsprechende Bereich umfasst alle Seriennummern von einer bereichsspezifischen kleinsten Seriennummer bis einschließlich einer bereichsspezifischen größten Seriennummer. Bei den Teilbereichen von Seriennummern handelt es ich beispielsweise jeweils um einen zusammenhängenden Teilbereich von Seriennummern, d.h. die entsprechenden Teilbereiche umfasst alle Seriennummern von einer teilbereichsspezifischen kleinsten Seriennummer bis einschließlich einer teilbereichsspezifischen größten Seriennummer.

Nach Ausführungsformen überwacht der Blockchain-Server eine Last der Blockchain. Bei dem vordefinierten Kriterium handelt es sich um ein Überschreiten eines vordefinierten Schwellenwerts der Last durch eine im Zuge der Überwachung erfasste aktuelle Last. Ausführungsformen können den Vorteil haben, dass im Zuge einer Überwachung der Last dynamisch entschieden werden kann, ob eine Teilung der Blockchain zur Reduktion der Last notwendig ist. Beispielsweise legt das vordefinierte Kriterium fest, dass eine Teilung erfolgt, falls der vordefinierte Schwellenwert durch die im Zuge der Überwachung erfasste aktuelle Last bereits einmalig überschritten wird oder falls der entsprechende Schwellenwert eine vordefinierte Zeit lang konstant überschritten wird. Beispielsweise sind zwei Schwellenwerte vordefiniert, wobei ein kleiner der beiden Schwellenwerte für eine Teilung eine vordefinierte Zeit lang konstant überschritten werden muss, werden bereits ein einmaliges Überschreiten des größeren Schwellenwert eine Teilung initiiert. Last ist beispielsweise definiert als Anzahl von einzutragenden Transaktionsfreigaben pro Zeit. Die Last kann ferner beispielsweise eine Anzahl an Abfragen, welche pro Zeit an die Blockchain gerichtet, berücksichtigen. Bei den Abfragen handelt es sich beispielsweise um Abfragen von Guthaben, welche Seriennummern des Bereiches zugeordnet sind, dem die entsprechende Blockchain zugeordnet ist.

Nach Ausführungsformen handelt es sich bei dem vordefinierten Kriterium um ein Überschreiten eines vordefinierten Schwellenwerts einer Summe von Guthaben, welche den Seriennummern des Bereichs von Seriennummern der entsprechenden Blockchain zugeordnet sind. Ausführungsformen können den Vorteil haben, dass für eine große Summe an Guthaben eine hohe Wahrscheinlichkeit besteht, dass in Zukunft zahlreiche Transaktionsfreigaben einzutragen sein werden und mithin eine große Last auftreten kann. Beispielsweise legt das vordefinierte Kriterium fest, dass eine Teilung erfolgt, falls der vordefinierte Schwellenwert durch die Summe der Guthaben bereits einmalig überschritten wird oder falls der entsprechende Schwellenwert eine vordefinierte Zeit lang konstant überschritten. Beispielsweise sind zwei Schwellenwerte vordefiniert, wobei ein kleiner der beiden Schwellenwerte für eine Teilung eine vordefinierte Zeit lang konstant überschritten werden muss, werden bereits ein einmaliges Überschreiten des größeren Schwellenwert eine Teilung initiiert.

Nach Ausführungsformen wird für jeden der Teilbereiche jeweils bestimmt, welcher Anteil der erfassten aktuellen Last auf den entsprechenden Teilbereich entfällt, und das Aufteilen in die Teilbereiche wird so angepasst, dass ein Unterschied zwischen den auf die Teilbereiche entfallenden Teilbereiche kleiner oder gleich einem vordefinierten ersten Maximalwert sind. Ausführungsformen können den Vorteil haben, dass eine möglichst gleichmäßige Lastverteilung zwischen den resultierenden Blockchains implementiert werden kann. Beispielsweise erfolgt die Aufteilung so, dass der Unterschied minimiert wird. Beispielsweise erfolgt die Aufteilung so, dass der Unterschied verschwindet, d.h. der erste Maximalwert ist Null.

Nach Ausführungsformen wird für jeden der Teilbereiche jeweils eine Summe der Guthaben bestimmt, welche den Seriennummern des entsprechenden Teilbereichs zugeordnet sind, und das Aufteilen in die Teilbereiche so angepasst wird, dass ein Unterschied zwischen den Summen der Guthaben der Teilbereiche kleiner oder gleich einem vordefinierten zweiten Maximalwert sind. Ausführungsformen können den Vorteil haben, dass eine möglichst gleichmäßige Guthabenverteilung zwischen den resultierenden Blockchains implementiert werden kann. Dies kann beispielsweise die Wahrscheinlichkeit einer möglichst gleichmäßige zukünftigen Lastverteilung zwischen den resultierenden Blockchains erhöhen. Beispielsweise erfolgt die Aufteilung so, dass der Unterschied minimiert wird. Beispielsweise erfolgt die Aufteilung so, dass der Unterschied verschwindet, d.h. der zweite Maximalwert ist Null.

Nach Ausführungsformen wird der aufzuteilende Bereich von Seriennummern so aufgeteilt, dass Größenunterschiede der Teilbereiche hinsichtlich der von den Teilbereichen jeweils umfasst Anzahl an Seriennummern kleiner oder gleich einem vordefinierten dritten Maximalwert sind. Ausführungsformen können den Vorteil haben, dass eine möglichst gleichmäßige Verteilung der Seriennummern zwischen den resultierenden Blockchains implementiert werden kann. Beispielsweise erfolgt die Aufteilung so, dass der Unterschied minimiert wird. Beispielsweise erfolgt die Aufteilung so, dass der Unterschied verschwindet, d.h. der dritte Maximalwert ist Null und jeder der Teilbereiche dieselbe Anzahl an Seriennummern umfasst.

Nach Ausführungsformen wird die zu teilende Blockchain einem ersten der Teilbereiche zugeordnet und zum Protokollieren von Zahlungen von Blockchain-Adressen von Seriennummern des ersten Teilbereichs weiterverwendet. Für jeden Weiteren der Teilbereiche wird jeweils eine eigenständige zusätzliche Blockchain erzeugt. Das Erzeugen der zusätzlichen Blockchains umfasst jeweils:
- Eintragen eines Teilungsvermerks für jede Blockchain-Adressen von Seriennummern des weiteren Teilbereichs in die zu teilenden Blockchain,
- Eintragen eines Genesisblocks für der jede Blockchain-Adressen von Seriennummern des weiteren Teilbereichs in die zusätzliche Blockchain, wobei die Genesisblöcke jeweils eine Angabe eines aktuellen Guthabens umfassen, welches der entsprechenden Seriennummer zum Zeitpunkt der Teilung in der zu teilenden Blockchain zugeordnet ist.

Ausführungsformen können den Vorteil haben, dass die zu teilende Blockchain weiterverwendet wird und die Anzahl der Seriennummern, für welche sie zuständig ist, reduziert wird. Nur für die weiteren Teilbereiche werden zusätzliche Blockchains erzeugt. Die Teilungsvermerke haben beispielsweise zur Folge, dass in der zu teilende Blockchain keine Zahlungen von den entsprechenden Blockchain-Adressen mehr protokolliert werden können. Beispielsweise sind die Teilungsvermerke und/oder die Genesisblöcke jeweils mit einem privaten kryptographischen Schlüssel einer die Blockchains verwaltenden Instanz, wie etwa einer Zentralbank signiert.

Nach Ausführungsformen wird die zu teilende Blockchain beendet und für jeden der Teilbereiche jeweils eine eigenständige zusätzliche Blockchain erzeugt. Das Erzeugen der zusätzlichen Blockchains umfasst jeweils:
- Eintragen eines Teilungsvermerks für jede Blockchain-Adressen von Seriennummern des weiteren Teilbereichs in die zu teilenden Blockchain,
- Eintragen eines Genesisblocks für der jede Blockchain-Adressen von Seriennummern des weiteren Teilbereichs in die zusätzliche Blockchain, wobei die Genesisblöcke jeweils eine Angabe eines aktuellen Guthabens umfassen, welches der entsprechenden Seriennummer zum Zeitpunkt der Teilung in der zu teilenden Blockchain zugeordnet ist.

Ausführungsformen können den Vorteil haben, dass die zu teilende Blockchain beendet wird und für jede der weiteren Teilbereiche jeweils eine zusätzliche Blockchain erzeugt wird. Die Teilungsvermerke haben beispielsweise zur Folge, dass in der zu teilende Blockchain keine Zahlungen von den entsprechenden Blockchain-Adressen mehr protokolliert werden können. Beispielsweise ist die zu teilende Blockchain beendet, wenn für alle von ihr umfassten Blockchain-Adressen jeweils ein Teilungsvermerk eingetragen ist. Beispielsweise sind die Teilungsvermerke und/oder die Genesisblöcke jeweils mit einem privaten kryptographischen Schlüssel einer die Blockchains verwaltenden Instanz, wie etwa einer Zentralbank signiert.

Nach Ausführungsformen ist der Blockchain-Server ferner dazu konfiguriert zwei oder mehr der Blockchains des Blockchain-Systems zu vereinen, falls ein vordefiniertes Kriterium erfüllt wird. Das vereinen der Blockchain umfasst ein Vereinen der Bereiche von Seriennummern, welcher den zu vereinenden Blockchains zugeordnet sind und aneinander angrenzen. Dem vereinigten Bereich wird eine gemeinsame Blockchain zugeordnet. Ausführungsformen können den Vorteil haben, dass die Anzahl der Blockchains im Bedarfsfall reduziert werden kann. Beispielsweise wird ein Hinweis an die Routingtabellen verteilt bezüglich der Vereinigung der Blockchains und der zugehörigen Bereiche der Seriennummern.

Nach Ausführungsformen überwacht der Blockchain-Server Lasten der Blockchains. Bei dem vordefinierten Kriterium handelt es sich um ein Unterschreiten eines vordefinierten Schwellenwerts durch eine im Zuge der Überwachung erfasste Summe der aktuellen Last. Beispielsweise umfasst das vordefinierte Kriterium ein Unterschreiten des vordefinierten Schwellenwerts durch die im Zuge der Überwachung erfasste Summe der aktuellen Last für einen vordefinierten Zeitraum.

Nach Ausführungsformen handelt es sich bei dem vordefinierten Kriterium um ein Unterschreiten eines vordefinierten Schwellenwerts durch eine Summe von Guthaben, welche den Seriennummern der Bereiche von Seriennummern der entsprechenden Blockchains zugeordnet sind. Beispielsweise umfasst das vordefinierte Kriterium ein Unterschreiten des vordefinierten Schwellenwerts durch die Summe von Guthaben für einen vordefinierten Zeitraum.

Nach Ausführungsformen umfasst das Verfahren ferner das Prüfen der Validität der Transaktionsfreigabe. Das Prüfen umfasst eine Validitätsprüfung einer Signatur der Transaktionsfreigabe. Hierbei wird geprüft, ob die Signatur tatsächlich mit dem der Blockchain-Adresse des mobilen tragbaren Endgeräts, beispielsweise der banknotenindividuellen Blockchain-Adresse einer Banknote, zugeordneten privaten kryptographischen Schlüssel als Signaturschlüssel signiert wurde. Mit anderen Worten wir geprüft, ob die Banknote, welche die Transaktionsfreigabe erteilt hat tatsächlich dazu berechtigt ist.

Nach Ausführungsformen umfasst das Prüfen der Validität der Transaktionsfreigabe ferner ein Prüfen, ob der banknotenindividuellen ersten Blockchain-Adresse ein zum Zahlen des zu zahlenden Betrags ausreichendes Guthaben zugeordnet ist. Somit kann sichergestellt werden, dass der tatsächlich ausreichend Geld zum Begleichen des zu bezahlenden Betrags zur Verfügung steht. Nach Ausführungsformen ist ein der banknotenindividuellen ersten Blockchain-Adresse zugeordnetes Guthaben zum Zahlen des zu zahlenden Betrags ausreichend, falls es größer oder gleich dem zu zahlenden Betrag ist. Nach Ausführungsformen ist ein der banknotenindividuellen ersten Blockchain-Adresse zugeordnetes Guthaben zum Zahlen des zu zahlenden Betrags ausreichend, falls es größer oder gleich einem Mindestbetrag plus dem zu zahlenden Betrag ist.

Nach Ausführungsformen umfasst das Verfahren auf ein erfolgreiches Prüfen der Validität der Transaktionsfreigabe hin ferner das Eintragen der von der Transaktionsfreigabe freigegebenen Transaktion in die bestimmte erste Blockchain.

Nach Ausführungsformen umfasst das Verfahren auf das Eintragen der freigegebenen Transaktion hin ferner ein Erstellen und Senden einer ersten Transaktionsbestätigung durch den ersten Blockchain-Server. Ausführungsformen können den Vorteil haben, dass die Transaktionseintragung bestätigt wird. Diese Bestätigung kann beispielsweise an ein Terminalcomputersystem erfolgen oder an einen Server, welche die Nachricht von dem mobilen tragbaren Endgerät empfangen bzw. die Erzeugung der entsprechenden Nachricht durch das mobile tragbare Endgerät initiiert haben. Das Terminalcomputersystem bzw. der Server können die Transaktionsbestätigung zudem an das mobile tragbare Endgerät selbst weiterleiten.

Nach Ausführungsformen bildet für banknotenindividuelle Blockchain-Adressen jeweils diejenige Bilanz von empfangenen und getätigten Zahlungen, welche in der Blockchain protokolliert ist, welcher die Seriennummer des entsprechenden mobilen tragbaren Endgeräts zugeordnet ist, die gültige Gesamtbilanz. Beispielsweise ergibt sich die gültige Gesamtbilanz für ein mobiles tragbares Endgerät aus denjenigen Transaktionen, welche in der Blockchain eingetragen sind, die für die Seriennummer des entsprechenden mobilen tragbaren Endgeräts zuständig ist. Beispielsweise werden in die hier betrachtete Blockchain alle Transaktionen mit der banknotenindividuellen Blockchain-Adresse des entsprechenden mobilen tragbaren Endgeräts als Ursprungsadresse eingetragen. Transaktionen mit banknotenindividuellen Blockchain-Adressen des entsprechenden mobilen tragbaren Endgeräts als Zieladresse werden beispielsweise jeweils in der Blockchain eingetragen, die für den Bereich von Seriennummern zuständig ist, in den die Seriennummer des mobilen tragbaren Endgeräts der Ausgangsadresse der entsprechenden Transaktion fällt. Fall es sich bei der entsprechenden Blockchain um eine andere Blockchain als die hier betrachtete Blockchain handelt, wird beispielsweise eine Kopie der entsprechenden Transaktion erstellt und zusätzlich in die hier betrachtete Blockchain eingetragen. Für ein zusätzliches Eintragen in die hier betrachtete Blockchain ist beispielsweise eine Eintragungsbestätigung über eine Eintragung in die andere Blockchain durch einen die andere Blockchain verwaltenden Blockchain-Server notwendig. Die entsprechenden Eintragungsbestätigung ist beispielswiese von dem entsprechenden Blockchain-Server signiert. Somit umfasst die hier betrachtete Blockchain zusätzlich alle Transaktionen mit der banknotenindividuellen Blockchain-Adresse des entsprechenden mobilen tragbaren Endgeräts als Zieladresse.

Nach Ausführungsformen handelt es sich bei der zweiten Blockchain-Adresse des Zahlungsempfängers um eine banknotenunabhängige Blockchain-Adresse, welche ausschließlich zum Empfangen von Zahlungen von banknotenindividuellen Blockchain-Adressen vorgesehen ist. Der zweiten Blockchain-Adresse des Zahlungsempfängers ist in jeder Blockchain der Mehrzahl von Blockchains, in welcher sie zum Empfangenen von ein oder mehreren Zahlungen verwendet wird, jeweils eine blockchainindividuelle Bilanz an empfangenen Zahlungen zugeordnet.

Ausführungsformen können den Vorteil haben, dass Blockchain-Adressen verwendet werden können, welche keinem mobilen tragbaren Endgerät zugeordnete sind und nicht zum banknotenbasierten Zahlungsverkehr als Ausgangsadresse verwendet werden. Beispielsweise werden diese Blockchain-Adressen ausschließlich als Zieleadressen verwendet. Beispielsweise können diese banknotenunabhängigen Blockchain-Adressen für Zahlungstransfers von dem Blockchain-System in andere Systeme, wie etwa das GIRO-SEPA-System, zugelassen sein. Zum Transferieren von Geld aus der Blockchain könnten diese banknotenunabhängigen Blockchain-Adressen beispielsweise nur zum Zahlungsempfangen vorgesehen sein, während es nicht möglich ist von diesen Zahlungen innerhalb des Blockchain-Systems zu senden. Beispielsweise könnte es sich hierbei um von der Zentralbank erstellte Blockchain-Adressen handeln, welche beispielsweise der Zentralbank oder auch anderen rechtlichen oder natürlichen Personen zugeordnet sind. Beispielsweise erstellt die Zentralbank die entsprechenden Blockchain-Adressen, vernichtet bzw. löscht aber die zugehörigen privaten kryptographischen Schlüssel, deren Signaturen für Transaktionen von den entsprechenden Blockchain-Adressen notwendig wären. Beispielsweise ist einer solchen Blockchain-Adressen ein Konto in einem anderen System zugeordnet. Wird Geld an die entsprechende Blockchain-Adresse transferiert, transferiert die Zentralbank beispielsweise einen identischen Betrag an das zugehörige Konto des andern Systems.

Nach Ausführungsformen handelt bildet die Summe aller blockchainindividuellen Bilanzen der banknotenunabhängigen zweiten Blockchain-Adresse die gültige Gesamtbilanz der entsprechenden Blockchain-Adresse. Soll bestimmt werden, wieviel Geld über das Blockchain-System an die entsprechende banknotenunabhängige zweite Blockchain-Adresse transferiert wurde, muss beispielsweise die Summe der Bilanzen aller Blockchains für die entsprechende Blockchain-Adresse gebildet werden. Beispielsweise ist der banknotenunabhängigen Blockchain-Adresse mangels Banknote keine Seriennummer zugeordnet, weshalb diese Blockchain-Adressen auch keiner bestimmten Blockchain zugeordnet.

Nach Ausführungsformen handelt es sich bei der zweiten Blockchain-Adresse des Zahlungsempfängers um eine zweite Blockchain-Adresse eines zweiten mobilen tragbaren Endgeräts des Zahlungsempfängers, insbesondere um eine banknotenindividuelle zweite Blockchain-Adresse einer zweiten Banknote. Die Nachricht umfasst eine zweite Seriennummer des zweiten mobilen tragbaren Endgeräts des Zahlungsempfängers. Beispielsweise handelt es sich bei allen Blockchain-Adressen ausschließlich um Blockchain-Adressen, insbesondere banknotenindividuelle Blockchain-Adresse, welche jeweils einem mobiles tragbaren Endgerät und damit einer Seriennummer zugeordnet sind. Aufgrund der Seriennummer sind die Blockchain-Adressen zudem jeweils einer bestimmten Blockchain zugeordnet, welche für Transaktionen mit der entsprechenden Blockchain-Adresse als Ausgangsadresse zuständig ist. Ausführungsformen können den Vorteil haben, dass jede Blockchain-Adresse über eine Seriennummer eines mobiles tragbaren Endgeräts, insbesondere einer Banknote, einer der Blockchains des Blockchain-Systems zugeordnete ist.

Nach Ausführungsformen umfasst die Nachricht die zweite Seriennummer des zweiten mobilen tragbaren Endgeräts in dem Header. Ausführungsformen können den Vorteil haben, dass bereits anhand des Headers ersichtlich ist, welche Blockchain für das mobile tragbare Endgerät der Zieladresse zuständig ist. Falls es sich dabei um eine andere Blockchain als die für das mobile tragbare Endgerät der Ausgangsadresse zuständige Blockchain handelt, kann beispielsweise beim Weiterleiten der Nachricht eine Kopie erstellt und vorab an einen Blockchain-Server gesendet werden, welcher die Blockchain verwaltet, die für das mobile tragbare Endgerät der Zieladresse zuständig ist. Somit kann diese vorab über die anstehende Transaktion benachrichtigt werden. Trifft zusätzlich eine Eintragungsbestätigung über eine Eintragung der angekündigten Transaktion in die für das mobile tragbare Endgerät der Ausgangsadresse zuständige Blockchain ein, wird eine Kopie der Transaktion zusätzlich in die für das mobile tragbare Endgerät der Zieladresse zuständige Blockchain eingetragen.

Nach Ausführungsformen umfasst das Verfahren ferner:
- auf ein Eintragen der von der Transaktionsfreigabe freigegebenen Transaktion in die erste Blockchain hin, Prüfen, ob die zweite Seriennummer von einem Bereich von Seriennummern umfasst ist, welcher einer anderen, zweiten Blockchain der Mehrzahl von Blockchains als der ersten Blockchain zugeordnet ist,
- falls die zweite Seriennummer einer anderen, zweiten Blockchain zugeordnet ist, Bestimmen der zweiten Blockchain, welcher die zweite Seriennummer zugeordnet ist,
- Erzeugen einer Eintragungsbestätigung der freigegebenen Transaktion in die erste Blockchain, welche die Transaktionsfreigabe umfasst,
- Senden der Eintragungsbestätigung an einen zweiten Blockchain-Server, welcher die zweite Blockchain verwaltet, zum zusätzlichen Eintragen der von der Transaktionsfreigabe freigegebenen Transaktion in die zweite Blockchain.

Ausführungsformen können den Vorteil haben, dass die Transaktion zusätzlich in die zweite Blockchain eingetragen wird, falls diese für die Seriennummer des mobilen tragbaren Endgeräts der Zieladresse zuständig ist. Somit kann jede der Blockchains jeweils eine vollständige Bilanz für Blockchain-Adressen derjenigen mobilen tragbaren Endgeräte bereitstellen, deren Seriennummern in den Bereich von Seriennummern fallen, für welche die entsprechende Blockchain zuständig ist.

Nach Ausführungsformen umfasst die Eintragungsbestätigung die zweite Seriennummer in einem Header. Ausführungsformen können den Vorteil haben, dass die zweite Seriennummer zum Bestimmen derjenigen Blockchain der Mehrzahl von Blockchains verwendet werden kann, welche dem Bereich von Seriennummern zugeordnet ist, der die zweite Seriennummer umfasst, und die mithin für die zweite Seriennummer zuständig ist. Die Eintragungsbestätigung dann einen zweiten Blockchain-Server, welcher die bestimmte zweite Blockchain verwaltet, weitergeleitet werden. Zum Weiterleiten bzw. Routen der Eintragungsbestätigung wird beispielsweise eine Routingtabelle verwendet.

Nach Ausführungsformen ist die Eintragungsbestätigung von dem ersten Blockchain-Server signiert. Ausführungsformen können den Vorteil haben, dass die Eintragungsbestätigung somit einen kryptographisch abgesicherten Nachweis über die Eintragung der Transaktion in die erste Blockchain bereitstellen kann.

Nach Ausführungsformen umfasst das Verfahren ferner ein Prüfen der Eintragungsbestätigung durch den zweiten Blockchain-Server. Der zweite Blockchain-Server trägt auf ein erfolgreiches Prüfen hin die von der Transaktionsfreigabe freigegebene Transaktion zusätzlich in die zweite Blockchain ein. Hierzu verfügt der zweite Blockchain-Server beispielsweise über einen Signaturprüfschlüssel, etwa einen öffentlichen kryptographischen Schlüssel eines asymmetrischen Schlüsselpaars des ersten Blockchain-Servers. Zum Erstellen der Signatur der Eintragungsbestätigung verwendet der erste Blockchain-Server beispielsweise einen öffentlichen kryptographischen Schlüssel des asymmetrischen Schlüsselpaars des ersten Blockchain-Servers als Signaturschlüssel.

Nach Ausführungsformen wird eine Kopie der Nachricht mit der Transaktionsfreigabe als Vorabinformation über die anstehende Eintragung einer Transaktion an den zweiten Blockchain-Server gesendet wird.

Nach Ausführungsformen umfasst das Verfahren ferner:
- auf ein erfolgloses Prüfen der Validität des Transaktionsfreigabe, Verweigern eines Eintragens von der Transaktionsfreigabe freigegebenen Transaktion in die erste Blockchain,
- auf ein Verweigern der Eintragung hin, Prüfen, ob die zweite Seriennummer von einem Bereich von Seriennummern umfasst ist, welcher einer anderen, zweiten Blockchain der Mehrzahl von Blockchains als der ersten Blockchain zugeordnet ist,
- falls die zweite Seriennummer einer anderen, zweiten Blockchain zugeordnet ist, Bestimmen der zweiten Blockchain, welcher die zweite Seriennummer zugeordnet ist,
- Erzeugen einer Eintragungsfehlermeldung, welche die Transaktionsfreigabe umfasst,
- Senden der Eintragungsfehlermeldung an einen zweiten Blockchain-Server, welcher die zweite Blockchain verwaltet, zum Verhindern eines Eintragens der von der Transaktionsfreigabe freigegebenen Transaktion in die zweite Blockchain.

Ausführungsformen können den Vorteil haben, dass bei einem Fehschlag der Eintragung der Transaktion in die erste Blockchain auch keine Transaktionseintragung in die zweite Blockchain erfolgt. Eine erfolgreiche Eintragung der Transaktion in die erste Blockchain ist mithin eine notwendige Voraussetzung für ein zusätzliches Eintragen der Transaktion in die zweite Blockchain. Nach Ausführungsformen umfasst das Verfahren auf ein Verweigern der Eintragung der freigegebenen Transaktion hin ferner ein Erstellen und Senden einer Transaktionsfehlermeldung durch zweiten Blockchain-Server.

Nach Ausführungsformen umfasst das Verfahren auf das Eintragen der freigegebenen Transaktion in die zweite Blockchain hin ferner ein Erstellen und Senden einer zweiten Transaktionsbestätigung durch den zweiten Blockchain-Server. Diese zweite Transaktionsbestätigung wird beispielsweise an einen Empfänger der Transaktion, etwa das zweite mobile tragbare Endgerät gesendet. Ausführungsformen können den Vorteil haben, dass die Transaktion zusätzlich auf eine Eintragung der Transaktion in die Blockchain, welche für die das mobile tragbare Endgerät der Zieladresse zuständig ist, bestätigt wird.

Ausführungsformen umfassen ferner ein Computersystem zum Ausführen einer Zahlung unter Verwendung eines mobilen tragbaren Endgeräts einer Mehrzahl von mobilen tragbaren Endgeräten und eines Blockchain-Systems. Das Blockchain-System umfasst eine Mehrzahl von Blockchains. Jeder der Blockchains sind jeweils ein oder mehrere Blockchain-Server zugeordnet, welche die entsprechende Blockchain verwalten. Jedem mobilen tragbaren Endgerät der Mehrzahl von mobilen tragbaren Endgeräten ist jeweils eine Seriennummer aus einem Raum von Seriennummern zugeordnet. Der Raum von Seriennummern ist unterteilt in eine Mehrzahl von Bereichen von Seriennummern. Jedem der Bereiche von Seriennummern ist jeweils eine der Blockchains des Blockchain-Systems zugeordnet, welche Zahlungen von banknotenindividuellen Blockchain-Adressen protokolliert, welche mobilen tragbaren Endgeräte mit Seriennummern aus dem entsprechenden Bereich von Seriennummern zugeordnet sind.

Das Computersystem umfasst einen Prozessor, einen Speicher mit Programminstruktionen und eine Kommunikationsschnittstelle umfasst. Der Prozessor dazu konfiguriert bei Ausführen der Programminstruktionen Folgendes auszuführen:
- Empfangen einer Nachricht des mobilen tragbaren Endgeräts mit einer Transaktionsfreigabe über die Kommunikationsschnittstelle, wobei die Transaktionsfreigabe unter Verwendung eines banknotenindividuellen privaten kryptographischen Schlüssels eines asymmetrischen Schlüsselpaars des mobilen tragbaren Endgeräts signiert ist, wobei das asymmetrische Schlüsselpaar einer banknotenindividuellen Blockchain-Adresse des mobilen tragbaren Endgeräts zugeordnet ist, wobei die Transaktionsfreigabe die Blockchain-Adresse der Banknote, eine Blockchain-Adresse des Zahlungsempfängers und einen zu zahlenden Betrag umfasst,
- Bestimmen unter Verwendung einer Seriennummer der Banknote, welche die Nachricht umfasst, einer Blockchain der Mehrzahl von Blockchains, welche demjenigen Bereich von Seriennummern zugeordnet ist, welcher die Seriennummer umfasst,
- Weiterleiten der Nachricht über die Kommunikationsschnittstelle an einen Blockchain-Server, welcher die bestimmte Blockchain verwaltet, zum Prüfen und Eintragen der von der Transaktionsfreigabe freigegebenen Transaktion in die bestimmte Blockchain.

Nach Ausführungsformen ist das Computersystem dazu konfiguriert jede der zuvor beschriebenen Ausführungsformen des Verfahrens zum Ausführen einer Zahlung auszuführen.

Nach Ausführungsformen handelt es sich bei dem Computersystem um ein Terminalcomputersystem oder einen Server. Nach Ausführungsformen handelt es sich bei dem Computersystem um einen Blockchain-Server des Blockchain-Systems. Nach Ausführungsformen handelt es sich bei dem Computersystem um einen Verteilungsserver des Blockchain-Systems.

Ausführungsformen umfassen ferner ein System, welches ein Computersystem nach einer der hierin beschriebenen Ausführungsformen und eine Banknote umfasst. Das mobile tragbare Endgerät umfasst ein Sicherheitselement mit einem Prozessor und einem Speicher mit Programminstruktionen. In einem geschützten Speicherbereich des Speichers ist der banknotenindividuelle private kryptographische Schlüssel des mobilen tragbaren Endgeräts gespeichert ist. Der Prozessor ist dazu konfiguriert, bei Ausführen der Programminstruktionen Folgendes auszuführen:
- Empfangen einer Zahlungsanfrage für eine Zahlung mit dem mobilen tragbaren Endgerät in Form der Transaktion des zu zahlenden Betrags von der Blockchain-Adresse des mobilen tragbaren Endgeräts an die Blockchain-Adresse des Zahlungsempfängers, wobei die Zahlungsanfrage den zu zahlenden Betrag und die Blockchain-Adresse des Zahlungsempfängers angibt,
- Signieren der Transaktionsfreigabe mit dem privaten kryptographischen Schlüssel der Banknote,
- Senden der Nachricht mit der signierten Transaktionsfreigabe.

Nach Ausführungsformen ist das System dazu konfiguriert jede der zuvor beschriebenen Ausführungsformen des Verfahrens zum Ausführen einer Zahlung auszuführen.

Nach Ausführungsformen umfasst das System ferner ein Blockchain-System. Das Blockchain-System umfasst eine Mehrzahl von Blockchains. Jeder der Blockchains sind jeweils ein oder mehrere Blockchain-Server zugeordnet, welche die entsprechende Blockchain verwalten. Ein Raum von Seriennummern von verwendeten mobilen tragbaren Endgeräten ist unterteilt in eine Mehrzahl von Bereichen von Seriennummern. Jedem der Bereiche von Seriennummern ist jeweils eine der Blockchains des Blockchain-Systems zugeordnet, welche Zahlungen von banknotenindividuellen Blockchain-Adressen protokolliert, welche mobilen tragbaren Endgeräten mit Seriennummern aus dem entsprechenden Bereich von Seriennummern zugeordnet sind.

Nach Ausführungsformen umfassen die Banknoten der Mehrzahl von Banknoten jeweils ein Sicherheitselement mit einem Prozessor und einem Speicher mit Programminstruktionen. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse in einer von einer die Banknote ausgebenden Zentralbank verwalteten Blockchain zugeordneten.

Der Prozessor ist dazu konfiguriert bei Ausführen der Programminstruktionen ein Zahlungsverfahren mit der Banknote auszuführen. Das Zahlungsverfahren umfasst:
- Empfangen einer Zahlungsanfrage für eine Zahlung mit der Banknote in Form einer Transaktion eines zu zahlenden Betrags von der Blockchain-Adresse der Banknote an eine Blockchain-Adresse eines Zahlungsempfängers, wobei die Zahlungsanfrage den zu zahlenden Betrag und die Blockchain-Adresse des Zahlungsempfängers angibt,
- Signieren einer Transaktionsfreigabe mit dem privaten kryptographischen Schlüssel der Banknote, wobei die Transaktionsfreigabe die Blockchain-Adresse der Banknote, die Blockchain-Adresse des Zahlungsempfängers und den zu zahlenden Betrag umfasst,
- Senden einer Nachricht mit der signierten Transaktionsfreigabe, wobei die Nachricht die Seriennummer der Banknote umfasst.

Nach Ausführungsformen wird mit der signierten Transaktionsfreigabe zusammen ferner ein weiterer transaktionsindividueller Wert gesendet. Beispielsweise ist der weitere transaktionsindividuelle Wert von der Signatur der Transaktionsfreigabe mitumfasst und/oder an die signierte Transaktionsfreigabe angehängt. Bei dem weiteren transaktionsindividuellen Wert handelt es sich beispielsweise um einen Zeitstempel und/oder eine Zufallszahl.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass die Banknote nicht nur als Bargeldzahlungsmittel im üblichen Sinne verwendet werden verwendet kann, sondern zusätzlich auch eine bargeldlose Zahlung mit der Banknote ausgeführt werden kann. Bei einer Verwendung als Bargeldzahlungsmittel im üblichen Sinne wird die Banknote im Zuge des Zahlungsabwicklung von dem Zahlungspflichtigen an den Zahlungsempfänger übergeben oder der Zahlungsempfänger übergibt die entsprechende Banknote als Wechselgeld im Zuge der Zahlungsabwicklung dem Zahlungspflichtigen. Mit der Übergabe der Banknote geht das Eigentum an der Banknote von dem Übergeber an den Empfänger über. Mit dem Eigentum an der Banknote geht auch das Eigentum an dem aktuellen Nominalwert der Banknote, d.h. dem der Blockchain-Adresse der Banknote zugeordneten Nominalwert, an den Empfänger über.

Bei einer Verwendung für eine bargeldlose Zahlung, d.h. ohne Übergabe der Banknote bzw. Übergang des Eigentums an der Banknote, erfolgt die Zahlung durch ein Bereitstellen einer signierten Transaktionsfreigabe, d.h. eine Transaktionsautorisierung, durch die Banknote. Diese signierte Transaktionsfreigabe der Banknote autorisiert eine Transaktion, bei welcher der zu zahlende Betrag von Blockchain-Adresse der Banknote an die Blockchain-Adresse des Zahlungsempfängers transferiert wird.

Beispielsweise definiert sich die im Umlauf befindliche und sowohl bargeldbasiert als auch bargeldlos transferierbare Geldmenge durch die Geldmenge bzw. der Summe der Nominalwerte, welche Blockchain-Adressen von Banknoten in den von der Zentralbank verwalteten Blockchains zugeordnet sind. Beispielsweise bleibt die im Umlauf befindliche Geldmenge gleich, falls die im Umlauf befindlichen Banknoten beibehalten werden. Das bedeutet beispielsweise, dass im Umlauf befindlichen Banknoten gleichbleiben können, sich aber in Folge von Transaktionen die den individuellen Banknoten zugeordneten Nominalwerte ändern können. Beispielsweise wäre es auch möglich die den Banknoten zugeordnete Geldmenge ohne die im Umlauf befindlichen Banknoten zu ändern, falls die Zentralbank Zahlungstransfers von den Blockchains des Blockchain-Systems in andere Systeme, wie etwa das GIRO SEPA System, zulassen würde. Zum Transferieren von Geld aus dem Blockchain-System könnten beispielsweise spezielle Blockchain-Adressen vorgesehen sein, an welche Zahlungen nur gesendet werden können und von denen es nicht möglich ist Zahlungen zu senden. Beispielsweise könnte es sich hierbei um von der Zentralbank erstellte Blockchain-Adressen handeln, welche beispielsweise der Zentralbank zugeordnet sind. Die entsprechende Blockchain-Adresse könnte auch anderen rechtlichen oder natürlichen Personen zugeordnet sein. Beispielsweise erstellt die Zentralbank die entsprechenden Blockchain-Adressen, vernichtet bzw. löscht aber die zugehörigen privaten kryptographischen Schlüssel, deren Signaturen für Transaktionen von den entsprechenden Blockchain-Adressen notwendig wären. Beispielsweise ist einer solchen Blockchain-Adressen ein Konto in einem anderen System zugeordnet. Wird Geld an die entsprechende Blockchain-Adresse transferiert, transferiert die Zentralbank beispielsweise einen identischen Betrag an das zugehörige Konto des andern Systems.

Geld kann dem Blockchain-System beispielsweise durch ein Initialisieren von zusätzlichen Banknoten bzw. den zusätzlichen Banknoten zugeordneten Blockchain-Adressen durch die Zentralbank zugeführt werden. Ferner könnte die Zentralbank beispielsweise über ein oder mehrere ihr zugeordnete Blockchain-Adressen, welche keinen Beschränkungen hinsichtlich der transferierbaren Menge an Geld unterworfen sind, zum Senden von Zahlungen an andere Blockchain-Adressen verfügen. Beispielsweise sendet die Zentralbank Geld an eine Blockchain-Adresse, falls anderen System ein identischer Betrag an ein dafür vorgesehenes Konto der Zentralbank, etwa mit der entsprechenden Blockchain-Adresse, als Verwendungszweck gesendet wurde.

Da weder die Banknote noch deren Blockchain-Adresse einer rechtlichen oder natürlichen Peron zugeordnet sind, ermöglich die Banknote beispielsweise sowohl bargeldbasierte als auch bargeldlose anonyme Zahlungen, wie sie aktuell nur mit Bargeld möglich sind. Um Missbrauch vorzubeugen könnten beispielsweise zusätzlich Beschränkungen in den Blockchains bzw. dem zugrundeliegenden Blockchain-System implementiert werden, welche transferierbare Geldmengen limitieren und/oder ab bestimmten Geldbeträgen zusätzliche Prüfmechanismen vorsehen. Entsprechende Prüfmechanismen könnten beispielsweise eine Bestätigung der Transaktion durch die Zentralbank auf Basis einer Prüfung zusätzlicher als notwendig festgelegter Angaben zu der entsprechenden Transaktion erfordern.

Die Banknote und damit deren Nominalwert gemäß der für sie zuständigen Blockchain kann beispielsweise durch händische physische Übergabe weitergegeben werden, d.h. eine digitale Währung kann übergeben werden. Dafür ist beispielsweise kein Konto im klassischen Sinne, d.h. ein einer rechtlichen oder natürlichen Person zugeordnetes Konto, notwendig. Es kann beispielsweise Material und Aufwand gespart werden durch Reduzieren der rein analogen Währung. Insbesondere kann der Aufwand beim physischen Transfer und Transport von Banknoten reduziert werden. Eine solche Banknote kann beispielsweise aufgewertet und zur direkten Kontaktloszahlung genutzt werden, ohne oder nur mit beschränkter Kontrolle oder Nachverfolgen, da eine individuelle Banknote wie im Falle klassischen Bargelds jederzeit weitergeben werden kann.

Beispielsweise ist der aktuelle Nominalwert der Banknote zusätzlich in dem Speicher des Sicherheitselements hinterlegt. Ausschlaggeben für den tatsächlichen Nominalwert der Banknote ist deren Nominalwert gemäß Blockchain. Beispielsweise kann der in der Banknote hinterlegte Nominalwert zu einer offline Bestimmung des aktuellen Nominalwerts verwendet werden. Beispielsweise wird der in der Banknote hinterlegte Nominalwert aktualisiert, wenn zum Abschluss einer Transaktion eine von der Zentralbank signierte Transaktionsbestätigung und/oder Eintragungsbestätigung an die Banknote weitergeleitet wird. Beispielsweise verfügt das Sicherheitselement über einen Signaturprüfschlüssel zum Prüfen digitaler Signaturen der Zentralbank.

Die Banknote kann beispielsweise papier- und/oder kunststoffbasiert sein. Beispielsweise umfasst die Banknote ein oder mehrere Materialschichten. Als Materialien für die Materialschichten können beispielsweise Papier, Kunststoffe und/oder Metallfolien Verwendung finden. Ein Materialschicht kann auch Kombinationen mehreren dieser Materialen umfassen. Beispielsweise sind die Materialschichten zusammenlaminiert. Die Materialschichten können insbesondere elektronische Komponenten, etwa ein Sicherheitselement mit Prozessor und Speicher, eine Antenne, ein Display, eine Eingabevorrichtung und/oder Sensoren, umfassen oder in Kombination miteinander bilden. Die Banknote ist beispielsweise flexibel.

Die Banknote umfasst beispielsweise eine Mehrzahl von Sicherheitsmerkmale, welche es ermöglichen die Authentizität und Validität der Banknoten zu prüfen. Die Mehrzahl von Sicherheitsmerkmalen kann beispielsweise ein oder mehrere Level 1, Level 2 und/oder Level 3 Sicherheitsmerkmale umfassen. Level 1 Sicherheitsmerkmale sind Sicherheitsmerkmale, welche vom Menschen direkt erkannt und ohne weitere Hilfsmittel überprüft werden können. Level 2 Sicherheitsmerkmale sind maschinenlesbare Sicherheitsmerkmale, welche beispielsweise für kommerzielle Anforderungen zur Echtheitsprüfung von Banknoten verwendet werden. Level 3 Sicherheitsmerkmale sind Sicherheitsmerkmale, welche nur der ausgebenden Zentralbank bekannt. Zentralbanken verwenden solche geheim gehaltenen maschinenlesbaren Sicherheitsmerkmale, um die Integrität des Bargeldkreislaufs sicherzustellen und zu garantieren, nur echte Banknoten wieder in den Umlauf zu geben. Ferner verwenden Zentralbanken solche Level 3 Sicherheitsmerkmale, um echte Banknoten gegebenenfalls aus dem Umlauf zu nehmen und kontrolliert zu vernichten, falls die Umlauffähigkeit der entsprechenden Banknoten, beispielsweise aufgrund von Verschmutzung und/oder Verschleiß, nicht mehr ausreicht.

Die Sicherheitsmerkmale können beispielsweise taktile, akustische oder sichtbare Merkmale umfassen. Beispielsweise werden zur Herstellung der Banknote Materialien, wie etwa Sicherheitspapieren, mit einem charakteristischen haptischen Eindruck und/oder einem charakteristischen Klang beim Reiben und/oder Knüllen verwendet. Beispielsweise werden haptisch erfassbare Prägungen in die Banknote eingebracht. Beispielsweise werden visuell erfassbare Sicherheitsmerkmale, wie etwa Wasserzeichen, Durchsichtfenster, Durchsichtsregister, Passerdruckelemente, Folienelemente, Guillochen, Irisdruckelemente, Anti-Kopier-Raster, Melierfasern, Mikro-Perforationen, Mikroschriften, optisch variable Druckfarben, Perlglanzstreifen, Sicherheitsfaden und/oder Sonderfarben verwendet. Beispielsweise werden Sicherheitselemente wie etwa Metamerie-Farbkombinationen, Fluoreszierende Farben, diffraktive optische Elemente und/oder Scrambled-Indicia-Mikrodruckmuster verwendet.

Beispielsweise werden maschinenlesbare Sicherheitselemente verwendet, wie etwa Infraroteigenschaften der Druckfarbe, phosphoreszierende Farben, magnetische Elemente, Elemente mit charakteristischer elektrischer Leitfähigkeit und/oder Kopierschutzelemente, wie etwa ein digitales Wasserzeichen und/oder standardisierte Muster, beispielsweise eine EURion-Konstellation oder Omron-Ringe.

Beispielsweise umfasst die Banknote ein oder mehrere Sicherheitsmerkmale, welche nur der ausgebenden Zentralbank bekannt und/oder von dieser prüfbar sind, d.h. Level 3 Sicherheitsmerkmale, wie etwa das M-Feature der EZB.

Sicherheitsmerkmale, insbesondere Level 1 und Level 2 Sicherheitsmerkmale, können den Vorteil haben, dass sie es den Beteiligten ermöglichen eine Banknote ohne viel Aufwand auf ihre Echtheit, d.h. Authentizität und Validität, hin zu prüfen. Dies ermöglicht eine Verwendung der Banknote für Barzahlungen, welche eine Übergabe der Banknote von einem Zahlungspflichtigen an einen Zahlungsempfänger umfassen.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Einträge praktisch ausgeschlossen ist, da hierfür die Hashwerte aller nachfolgenden Blöcke in kurzer Zeit ebenfalls neu berechnet werden müssten.

Eine Blockchain kann beispielsweise auch in Form einer Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für weitere Teilnehmer, welche der ausgewählten Gruppe hinzugefügt werden sollen, ein öffentlicher Schlüssel in der Blockchain in einem Initialisierungseintrag hinterlegt werden. Anhand dieser öffentlichen Schlüssel kann geprüft werden, ob Signaturen von Blöcken und damit die entsprechenden Blöcke selbst gültig sind. Öffentliche Schlüssel ursprünglicher Teilnehmer der ausgewählten Gruppe können beispielsweise in einem Genesisblock der Blockchain hinterlegt sein.

Bei der vorliegenden von einer der Zentralbank verwalteten Blockchain handelt es sich beispielsweise um eine öffentliche Blockchain, welche auf Blockchain-Servern der Zentralbank verwaltet wird. Beispielsweise erfolgt ein Eintragen neuer Blöcke ausschließlich durch diese von der Zentralbank verwalteten Blockchain-Server. In diesem Fall können beispielsweise rechenintensiven Prozess bei Hinzufügen zusätzlicher Blöcke entfallen. Beispielsweise ist für ein hinzufügen zusätzlicher Blöcke lediglich eine Signatur mit einem der Zentralbank zugeordneten Signaturschlüssel notwendig.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer bzw. Blockchain-Server eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtigt, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%, 90%, 95% oder 100%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Unter einer "Kommunikationsschnittstelle" wird hier beispielsweise eine Schnittstelle verstanden, über die Daten empfangen und gesendet werden können, wobei die Kommunikationsschnittstelle kontaktbehaftet oder kontaktlos konfiguriert sein kann.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Eine kontaktlose Kommunikation mit der Banknote ist beispielsweise mittels Near Field Communication (NFC) möglich. Hierbei handelt es sich um eine auf der RFID-Technologie basierende Kommunikation zum kontaktlosen Austausch von Daten per elektromagnetischer Induktion mittels loser gekoppelter Spulen über kurze Strecken, von beispielsweise wenigen Zentimetern. NFC kann beispielsweise gemäß einer der Normen ISO 14443, 18092, 21481, ECMA 340, 352, 356, 362 bzw. ETSI TS 102 190 implementiert sein.

Die Kommunikationsschnittstelle der Banknote umfasst beispielsweise eine Antenne zur kontaktlosen Kommunikation. Die Antenne umfasst beispielsweise eine Induktionsspule. Die Induktionsspule kann ferner konfiguriert sein zur externen Energieversorgung der Banknote, beispielsweise mittels Energy Harvesting. Beispielsweise ist die Induktionsspule dazu konfiguriert, dass ein Terminal Energie in die Banknote einkoppelt.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitselements möglich ist. Beispielsweise ist auf den geschützten Speicherbereich kein externer Zugriff möglich, d.h. Daten können hierher weder von außen eingebracht werden, noch nach außen ausgegeben werden. Beispielsweise können Daten über den Prozessor nach außen aus den geschützten Speicherbereich ausgelesen werden. Beispielsweise können Daten über den Prozessor von außen in den geschützten Speicherbereich eingebracht werden. Nach Ausführungsformen ist der Zugriff von dem bzw. über den mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Eine solche Prüfung kann beispielsweise auf einer elektronischen Signatur mit einem Signaturschlüssel beruhen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln und digitale mit dem privaten Schlüssel erstellte Signaturen zu prüfen. Ein privater Schlüssel ermöglicht es seinem Inhaber, mit dem öffentlichen Schlüssel verschlüsselte Daten zu entschlüsseln oder digitale Signaturen zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten ein weiterer Datenwert, welcher als "Signatur" bezeichnet wird, berechnet wird. Bei einer Signatur kann es sich zum Beispiel um eine mit einem privaten kryptographischen Schlüssel verschlüsselten Hashwert der Ausgangsdaten handeln.

Unter einem Sicherheitselement wird hier beispielsweise eine elektronische Komponente verstanden, welche einen Prozessor und einen Speicher umfasst, und auf welche nur bestimmte vordefinierte Zugriffe ermöglicht werden. Beispielsweise können nur bestimmte Datenwerte, welche etwa in bestimmten Bereichen des Speichers abgelegt sind ausgelesen werden. Beispielsweise können in einem geschützten Speicherbereich abgelegt Datenwerte nicht ausgelesen werden. Beispielsweise ist zum Schreiben eines Datenwerts in den Speicher des Sicherheitselements eine digitale Signatur notwendig, deren Prüfschlüssel in dem Sicherheitselement hinterlegt ist. Beispielsweise besitzt nur der Prozessor Schreibrechte zum Schreiben von Daten in einen geschützten Speicherbereich.

Das Sicherheitselement stellt ferner beispielsweise kryptographische Kernroutinen in Form von kryptographischen Programminstruktionen mit kryptographischen Algorithmen für Signaturerstellung und/oder -prüfung, Schlüsselgenerierung, und/oder Zufallszahlengenerierung bereit und kann ferner als sicherer Speicher für kryptographische Schlüssel dienen.

Beispielsweise sind zumindest Teile des Sicherheitselements signiert. Vor einer Nutzung des Sicherheitselements wird geprüft, ob die Signatur bzw. die Signaturen, valide sind. Wenn eine der Signaturen nicht valide ist, wird die Nutzung des Sicherheitselements beispielsweise gesperrt.

Beispielsweise weist das Sicherheitselement physikalisch beschränkten Zugriffsmöglichkeiten. Zudem kann das Sicherheitselement I zusätzliche Maßnahmen gegen Missbrauch aufweisen, insbesondere gegen unberechtigte Zugriffe auf Daten im Speicher des Sicherheitselement. Beispielsweise umfasst ein Sicherheitselement Sensoren zur Überwachung des Zustands des Sicherheitselements sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Spannungssensor und/oder einen Lichtsensor. Taktfrequenzsensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitselement nichtflüchtige Speicher mit einem geschützten Speicherbereich umfassen.

Beispielsweise umfassen die Mittel zum Schutz des Sicherheitselements gegen unbefugte Manipulationen mechanische Mittel, die z.B. das Öffnen des Sicherheitselements oder seiner Teile verhindern sollen, oder die bei dem Versuch eines Eingriffs in das Sicherheitselement dieses unbrauchbar machen, beispielsweise indem ein Datenverlust eintritt. Beispielsweise können hierzu zumindest Teile des Sicherheitselements in ein Material eingeschlossen, eingegossen und/oder einlaminiert sein, dessen versuchte Entfernung zu einer unvermeidlichen Zerstörung der entsprechenden Teile des Sicherheitselements führt.

Bei den visuellen Angaben handelt es sich beispielsweise um Informationen, welche in einer optisch lesbaren Form in die Banknote eingebracht sind. Beispielsweise sind diese Informationen auf die Banknote und/oder eine Materialschicht der Banknote aufgedruckt, eingeprägt, eingraviert, aus dieser ausgestanzt, ausgeschnitten oder auf eine sonstige optisch erfassbare Weise eingebracht. Diese visuellen Merkmale sind beispielsweise mit einem optischen Sensor, wie etwa einer Kamera, erfassbar.

Beispielsweise kann bei einer Zahlungsabwicklung zunächst der aktuelle Nominalwert der Banknote geprüft werden. Dabei wird beispielsweise eine Blockchain-Abfrage nach dem aktuellen Nominalwert der Blockchain-Adresse der Banknote verwendet. Als Antwort auf die Anfrage wird ein g der Blockchain-Adresse der Banknote empfangen. Zum Erstellen der Abfrage kann beispielsweise die Seriennummer der Banknote elektronisch erfasst werden, d.h. aus dem Speicher der Banknote ausgelesen, und/oder eine visuelle Angabe der Seriennummer mit einem optischen Sensor erfasst werden. Beispielsweise kann auch beides erfolgen, d.h. ein Auslesen aus dem Speicher und ein Scannen der visuellen Angabe, mit einem anschließenden Abgleich des Ergebnisses aus beiden Erfassungsverfahren. Stimmt die ausgelesene Seriennummer mit der eingescannten Seriennummer überein, wird diese akzeptiert ansonsten nicht. Dies kann einen Schutz gegen Manipulationen der Banknote bieten. Insbesondere könnte somit verhindert werden, dass bei einer gefälschten Banknote mit einer visuellen Angabe einer Seriennummer, deren Blockchain-Adresse ein hoher aktueller Nominalwert zugeordnet ist, ein Sicherheitselement einer anderen Banknote mit einer andern Seriennummer eingebracht wird, deren Blockchain-Adresse ein viel niedriger aktueller Nominalwert zugeordnet ist. Bei einer Bargeldzahlung mit einer solchen manipulierten Banknote bestünde sonst die Gefahr, dass der Zahlungsempfänger bei Empfang der Banknote von einem aktuellen Nominalwert der Bank ausgeht, welcher wesentlich höher ist als der tatsächliche Nominalwert der Banknote. Die Seriennummer der Banknote ist der Blockchain-Adresse der Banknote beispielsweise in einem Initialisierungseintrag der Blockchain-Adresse in der Blockchain zugeordnet, welche für den Bereich von Seriennummern zuständig ist, in den die entsprechende Seriennummer fällt.

Anstelle der Seriennummer kann auch ein anderer Identifikator der Blockchain-Adresse der Banknote in der zuvor beschrieben Weise erfasst und verwendet werden. Bei dem entsprechenden Identifikator kann es sich beispielsweise um den öffentlichen kryptographischen Schlüssel der Banknote handeln, aus welchem die Blockchain-Adresse beispielsweise unter Verwendung einer Hashfunktion abgeleitet werden kann. Bei dem entsprechenden Identifikator kann es sich beispielsweise um die entsprechende Blockchain-Adresse selbst handeln.

Der tatsächliche Nominalwert einer Banknote wird beispielsweise alleine von dem Nominalwert der Blockchain-Adresse bestimmt, welche der Banknote zugeordnet ist. Um über den der entsprechenden Blockchain-Adresse zugeordneten Nominalwert verfügen zu können, ist der Besitz einer echten Banknote mit einem der entsprechenden Blockchain-Adresse zugeordneten privaten kryptographischen Schlüssel notwendig.

Bei einem Zahlungsverfahren mit der Banknote können vor einem Senden einer Zahlungsanfrage auch ein oder mehrere Sicherheitsmerkmale der Banknote geprüft werden, um sicherzustellen, dass es sich bei der Banknote um eine echte, d.h. eine authentische und valide Banknote handelt.

Beispielsweise kann auf Basis des ermittelten aktuelle Nominalwerts entschieden werden, ob eine Bargeldzahlung oder eine bargeldlose Zahlung mit der Banknote erfolgen soll. Ist der aktuelle Nominalwert identisch mit dem zu zahlenden Betrag, erfolgt beispielsweise eine Bargeldzahlung, bei welcher die Banknote an den Zahlungsempfänger übergeben wird und das Eigentum an dieser an den Zahlungsempfänger übergeht. Ist der aktuelle Nominalwert größer als der zu zahlenden Betrag, erfolgt beispielsweise eine Bargeldlosezahlung. Bei der Bargeldlosezahlung wird beispielsweise eine entsprechende Zahlungsanfrage an die Banknote gesendet für eine Zahlung in Form einer Transaktion eines zu zahlenden Betrags von der Blockchain-Adresse der Banknote an eine Blockchain-Adresse eines Zahlungsempfängers. Die Banknote kann diese Transaktion mit einer signierten Transaktionsfreigabe autorisieren.

Ist der aktuelle Nominalwert größer als der zu zahlenden Betrag, wäre es ebenso möglich, dass eine Bargeldzahlung erfolgt und der überzählige Betrag als Wechselgeld, beispielsweise in Form von Bargeld, etwa Banknoten mit passendem Nominalwert, von dem Zahlungsempfänger zurückgezahlt wird.

Beispielsweise kann der aktuelle Nominalwert jeden positiven Wert einschließlich Null annehmen. Beispielsweise kann der aktuelle Nominalwert jeden Wert zwischen Null und einem vorgegebene Maximalnominalwert annehmen. Beispielsweise kann der aktuelle Nominalwert jeden Wert größer oder gleich einem vorgegebene Mindestnominalwert annehmen. Beispielsweise kann der aktuelle Nominalwert jeden Wert von einschließlich einem vorgegebene Mindestnominalwert bis einschließlich einem vorgegebene Maximalnominalwert annehmen.

Beispielsweise kann der Nominalwert der Banknote einen garantierten Mindestnominalwert und einen variablen Zusatznominalwertanteil umfassen. Der Mindestnominalwert kann beispielsweise nur in Form einer Bargeldzahlung mit Übergabe der Banknote gezahlt werden, während der variable Zusatznominalwertanteil im Zuge einer bargeldbasierten oder bargeldlosen Zahlungsabwicklung verwendet werden kann. Mit anderen Worten könnten mit der Banknote nur bargeldlose Zahlungen erfolgen, bei welchen der verbleidende Nominalwert der Banknote größer oder gleich dem Mindestnominalwert ist. Soll mit der Banknote ein Betrag gezahlt werden, welcher in einem verbleidenden Nominalwert resultieren würde, der kleiner dem Mindestnominalwert wäre, wird eine bargeldlose Zahlung über das Blockchain-System, d.h. die zuständige Blockchain, beispielsweise blockiert. Es muss mithin beispielsweise eine bargeldbasierte Zahlung erfolgen, bei welcher die Banknote übergeben wird. Ist der aktuelle Nominalwert der Banknote größer als der zu zahlende Betrag, so kann der Differenzbetrag beispielsweise in Form von Wechselgeld durch den Zahlungsempfänger rückerstattet werden.

Beispielsweise ist der initiale Nominalwert für die Banknote bzw. deren Blockchain-Adresse in der für die Seriennummer der entsprechenden Banknote zuständigen Blockchain eingetragen. Beispielsweise sind die visuelle Gestaltung, die eingebrachten Sicherheitsmerkmale und/oder das Format der Banknote abhängig von deren initialem Nominalwert. Somit unterscheiden sich Banknoten mit unterschiedlichem initialem Nominalwert beispielsweise hinsichtlich ihrer visuellen Gestaltung, der eingebrachten Sicherheitsmerkmale und/oder des Formats voneinander. Banknoten mit identischem initialem Nominalwert weisen beispielsweise abgesehen von ein oder mehreren banknotenindividuellen Angaben, wie etwa Seriennummer, Angaben zum Ausstellungjahr etc., eine identische visuelle Gestaltung, identische Sicherheitsmerkmale und/oder Formate auf.

Beispielsweise umfasst die Banknote eine visuelle Angabe des Mindestnominalwerts. Beispielsweise ist der Mindestnominalwert für die Banknote bzw. deren Blockchain-Adresse in der für die Seriennummer der entsprechenden Banknote zuständigen Blockchain eingetragen. Beispielsweise sind die visuelle Gestaltung, die eingebrachten Sicherheitsmerkmale und/oder das Format der Banknote abhängig von deren Mindestnominalwert. Somit unterscheiden sich Banknoten mit unterschiedlichen Mindestnominalwerten beispielsweise hinsichtlich ihrer visuellen Gestaltung, der eingebrachten Sicherheitsmerkmale und/oder des Formats voneinander. Banknoten mit identischen Mindestnominalwerten weisen beispielsweise abgesehen von ein oder mehreren banknotenindividuellen Angaben, wie etwa Seriennummer, Angaben zum Ausstellungjahr etc., eine identische visuelle Gestaltung, identische Sicherheitsmerkmale und/oder Formate auf.

Beispielsweise handelt es sich bei dem der Banknote zugeordneten initialen Nominalwert, welchen die Banknote als visuelle Angabe umfasst, um den gesamten Nominalwert, welcher der Banknote im Zuge ihrer Initialisierung in der zuständigen Blockchain zugeordnet wird. Beispielsweise handelt es sich bei dem gesamten der Banknote initial zugeordneten Nominalwert um den garantierten Mindestnominalwert und einen initialen Zusatznominalwertanteil. Der Zusatznominalwertanteil ist beispielsweise variable in Abhängigkeit von den Transaktionen, welche unter Verwendung der Blockchain-Adresse der Banknote ausgeführt werden. Beispielsweise handelt es sich bei dem visuell angegebenen initialen Nominalwert um einen Anteil des gesamten Nominalwerts, welcher der Banknote im Zuge ihrer Initialisierung in der zuständigen Blockchain zugeordnet wird. Beispielsweise handelt es sich bei dem entsprechenden Anteil um den Mindestnominalwert, wobei der tatsächliche gesamte Nominalwert initial größer sein kann, d.h. einen initialen Zusatznominalwertanteil umfassen kann. Beispielsweise ist der gesamte Nominalwert, welcher der Banknote im Zuge ihrer Initialisierung in der zuständigen Blockchain zugeordnet wird, ein Mindestnominalwert der Banknote, welcher beispielsweise visuell auf der Banknote angegeben ist. In diesem Fall handelt es sich bei der visuellen Angabe des initialen Nominalwerts beispielsweise zugleich um eine visuelle Angabe des Mindestnominalwerts der Banknote. Beispielsweise unterscheidet sich der Mindestnominalwert von dem initialen Nominalwert. In diesem Fall umfasst die Banknote beispielsweise eine visuelle Angabe des Mindestnominalwerts zusätzlich zu der visuellen Angabe des initialen Nominalwerts.

Ein Hinzufügen eines variablen Zusatznominalwertanteils oder eine Erhöhung eines bestehenden variablen Zusatznominalwertanteils erfolgt beispielsweise durch eine Transaktion eines entsprechenden Betrags an die Blockchain-Adresse der Banknote. Die Transaktion kann von einer anderen Blockchain-Adresse, etwa einer Blockchain-Adresse einer anderen Banknote oder der Zentralbank, stammen. Beispielsweise ist variable Zusatznominalwertanteil unbegrenzt erhöhbar. Beispielsweise ist der variable Zusatznominalwertanteil in Abhängigkeit von dem Mindestnominalwert und/oder dem initialen Nominalwert erhöhbar. Beispielsweise ist ein maximal zulässiger variabler Zusatznominalwertanteil in der zuständigen Blockchain für die Blockchain-Adresse der entsprechenden Banknote eingetragen. Beispielsweise beträgt der maximal zulässiger variabler Zusatznominalwertanteil der Banknote 100%, 200%, 300%, 400%, 500%, 600%, 700%, 800%, 900% oder 1000% des Mindestnominalwert der Banknote. Beispielsweise wird bei einer Transaktion an eine Blockchain-Adresse einer Banknote als Voraussetzung zum Ausführen der Transaktion geprüft, ob durch die Transaktion der maximal zulässige variable Zusatznominalwertanteil überschritten wird. Falls der maximal zulässige variable Zusatznominalwertanteil nicht überschritten wird, wird die Transaktion ausgeführt, d.h. in die zuständige Blockchain eingetragen. Falls der maximal zulässige variable Zusatznominalwertanteil überschritten wird, wird die Transaktion nicht ausgeführt, d.h. nicht in die zuständige Blockchain eingetragen.

Nach Ausführungsformen umfasst die Banknote die visuelle Angabe der Seriennummer mehrfach über die Banknote verteilt. Ausführungsformen können den Vorteil haben, dass selbst bei einer teilweisen Beschädigung der Banknote, die Seriennummer erfasst werden kann. Beispielsweise sind Angaben der Seriennummer in Kombination mit und/oder als Bestandteil von mehreren Sicherheitsmerkmalen der Banknote in diese eingebracht. Dies könnte den Vorteil haben, dass solange genügend Sicherheitsmerkmale zur Bestätigung der Authentizität und Validität der Banknote vorliegen, die Seriennummer der Banknote erfasst werden kann.

Nach Ausführungsformen umfasst die Banknote die visuelle Angabe des initialen Nominalwerts und/oder des Mindestnominalwerts ebenfalls mehrfach über die Banknote verteilt. Beispielsweise sind Angaben des initialen Nominalwerts und/oder des Mindestnominalwerts in Kombination mit und/oder als Bestandteil von mehreren Sicherheitsmerkmalen der Banknote in diese eingebracht. Beispielsweise sind ein oder mehrere der Sicherheitsmerkmale der Banknote von dem initialen Nominalwert und/oder dem Mindestnominalwert der Banknote abhängig.

Nach Ausführungsformen ist die Mehrzahl von Angaben der Seriennummer derart über die Banknote verteilt, dass sichergestellt werden kann, dass die Seriennummer der Banknote ermittelt werden kann, solange mehr als 50% der Banknote vorliegen. Ausführungsformen können den Vorteil haben, dass bei einem Verlust eines Teils der Banknote sichergestellt werden kann, dass solange mehr als 50% der Banknote vorliegen, was beispielsweise Voraussetzung für ein Ersetzen der Banknote ist, die vorliegenden mehr als 50% die Seriennummer der Banknote umfassen. Somit kann selbst bei einem teilweisen Verlust der Banknote sichergestellt, dass solange der verbliebene Teil bzw. die verbliebenen Teile der Banknote valide sind, die Seriennummer erfasst und der aktuelle Nominalwert der Banknote gemäß der Blockchain-Adresse der Banknote bestimmt werden kann.

Nach Ausführungsformen ist in dem Speicher ferner ein banknotenindividueller öffentlicher kryptographischer Schlüssel des asymmetrischen Schlüsselpaars der Banknote gespeichert, aus welchem die Blockchain-Adresse der Banknote ableitbar ist. Nach Ausführungsformen ist in dem Speicher ferner die Blockchain-Adresse der Banknote gespeichert.

Nach Ausführungsformen umfasst die Banknote ferner eine visuelle Angabe des banknotenindividuellen öffentlichen kryptographischen Schlüssels. Nach Ausführungsformen umfasst die Banknote ferner eine visuelle Angabe der Blockchain-Adresse der Banknote.

Nach Ausführungsformen umfasst die Banknote eine Mehrzahl von Sicherheitsmerkmalen. Ausführungsformen können den Vorteil haben, dass es unter Verwendung der Sicherheitsmerkmale, bei welchen es sich beispielsweise um Level 1, Level 2 und/oder Level 3 Sicherheitsmerkmale handelt, ermöglicht werden kann die Authentizität und Validität der Banknote zu prüfen. Nach Ausführungsformen umfassen ein oder mehrere Sicherheitsmerkmale der Mehrzahl von Sicherheitsmerkmalen eine Angabe der Seriennummer, des banknotenindividuellen öffentlichen kryptographischen Schlüssels und/oder der Blockchain-Adresse der Banknote. Ausführungsformen können den Vorteil haben, dass bei einem Erfassen der entsprechenden ein oder mehreren Sicherheitsmerkmale jeweils die Seriennummer, der banknotenindividuelle öffentliche kryptographische Schlüssel und/oder die Blockchain-Adresse der Banknote miterfasst werden kann. Als Bestandteil der entsprechenden Sicherheitsmerkmale kann anhand der Sicherheitsmerkmale nicht nur die Authentizität und Validität der Banknote an sich, sondern auch die Authentizität und Validität der Seriennummer des banknotenindividuellen öffentlichen kryptographischen Schlüssels und/oder der Blockchain-Adresse der Banknote geprüft werden. Somit kann beispielsweise eine durch die entsprechenden Sicherheitsmerkmale gesicherte Verbindung bzw. Zuordnung der physischen Banknote und der Blockchain-Adresse der Banknote bereitgestellt werden, welche beispielsweise unter Verwendung der Seriennummer des banknotenindividuellen öffentlichen kryptographischen Schlüssels und/oder der Blockchain-Adresse der Banknote identifizierbar ist. Nach Ausführungsformen handelt es sich bei den ein oder mehreren Sicherheitsmerkmalen, welche eine Angabe der Seriennummer des banknotenindividuellen öffentlichen kryptographischen Schlüssels und/oder der Blockchain-Adresse der Banknote umfassen, beispielsweise um Level 1, Level 2 und/oder Level 3 Sicherheitsmerkmale.

Nach Ausführungsformen umfasst die Banknote die visuelle Angabe des öffentlichen kryptographischen Schlüssels und/oder der Blockchain-Adresse mehrfach über die Banknote verteilt. Ausführungsformen können den Vorteil haben, dass selbst bei einer teilweisen Beschädigung der Banknote, der öffentliche kryptographische Schlüssel und/oder die Blockchain-Adresse erfasst werden kann. Beispielsweise sind Angaben des öffentlichen kryptographischen Schlüssels und/oder der Blockchain-Adresse in Kombination mit und/oder als Bestandteil von mehreren Sicherheitsmerkmalen der Banknote in diese eingebracht. Dies könnte den Vorteil haben, dass solange genügend Sicherheitsmerkmale zur Bestätigung der Authentizität und Validität der Banknote vorliegen, die der öffentliche kryptographische Schlüssel und/oder die Blockchain-Adresse der Banknote erfasst werden kann.

Nach Ausführungsformen ist die Mehrzahl von Angaben des öffentlichen kryptographischen Schlüssels und/oder der Blockchain-Adresse derart über die Banknote verteilt, dass sichergestellt werden kann, dass der öffentliche kryptographische Schlüssel und/oder die Blockchain-Adresse der Banknote ermittelt werden kann, solange mehr als 50% der Banknote vorliegen. Ausführungsformen können den Vorteil haben, dass bei einem Verlust eines Teils der Banknote sichergestellt werden kann, dass solange mehr als 50% der Banknote vorliegen, was beispielsweise Voraussetzung für ein Ersetzen der Banknote ist, die vorliegenden mehr als 50% den öffentlichen kryptographischen Schlüssel und/oder die Blockchain-Adresse der Banknote umfassen. Somit kann selbst bei einem teilweisen Verlust der Banknote sichergestellt, dass solange der verbliebene Teil bzw. die verbliebenen Teile der Banknote valide sind, der öffentliche kryptographische Schlüssel und/oder die Blockchain-Adresse erfasst und der aktuelle Nominalwert der Banknote gemäß der Blockchain-Adresse der Banknote bestimmt werden kann.

Nach Ausführungsformen erzeugt die Banknote die Transaktionsfreigabe unter Verwendung der Angaben der Zahlungsanfrage. Ausführungsformen können den Vorteil haben, dass die Banknote die entsprechenden Angaben direkt aus der Zahlungsanfrage übernehmen kann. Nach Ausführungsformen umfasst die Zahlungsanfrage die vollständigen Transaktionsangaben, welche die Banknote als Transaktionsfreigabe signiert. Die vollständigen Transaktionsangaben umfassen neben dem zu zahlenden Betrag und der Blockchain-Adresse des Zahlungsempfängers beispielsweise die Blockchain-Adresse der Banknote.

Nach Ausführungsformen wird von der Banknote zum Ableiten der Blockchain-Adresse der Banknote für die Zahlungsanfrage der öffentliche kryptographische Schlüssel der Banknote bereitgestellt. Nach Ausführungsformen wird der öffentliche kryptographische Schlüssel der Banknote als visuelle Angabe zum Ablesen, insbesondere Maschinenlesen, bereitgestellt. Beispielsweise umfasst die visuelle Angabe eine alphanumerische Zeichenfolge, einen Bar-Code, oder einen QR-Code des öffentlichen kryptographischen Schlüssels. Nach Ausführungsformen wird der öffentliche kryptographische Schlüssel von der Banknote zum Erstellend er zahlungsanfrage gesendet. Das Senden erfolgt beispielsweise in Antwort auf eine Anfrage nach dem öffentlichen kryptographischen Schlüssel. Ausführungsformen können den Vorteil haben, dass die aus dem öffentlichen kryptographischen Schlüssel ableitbare Blockchain-Adresse der Banknote zum Erstellen der Zahlungsanfrage bereitgestellt werden kann, ohne dass dafür eine weitere Instanz als die Banknote notwendig ist.

Nach Ausführungsformen wird von der Banknote die Blockchain-Adresse der Banknote für die Zahlungsanfrage bereitgestellt. Nach Ausführungsformen wird die Blockchain-Adresse der Banknote als visuelle Angabe zum Ablesen, insbesondere Maschinenlesen, bereitgestellt. Beispielsweise umfasst die visuelle Angabe eine alphanumerische Zeichenfolge, einen Bar-Code, oder einen QR-Code der Blockchain-Adresse der Banknote. Nach Ausführungsformen wird die Blockchain-Adresse der Banknote von der Banknote zum Erstellend er zahlungsanfrage gesendet. Das Senden erfolgt beispielsweise in Antwort auf eine Anfrage nach der Blockchain-Adresse der Banknote. Ausführungsformen können den Vorteil haben, dass die Blockchain-Adresse der Banknote zum Erstellen der Zahlungsanfrage bereitgestellt werden kann, ohne dass dafür eine weitere Instanz als die Banknote notwendig ist.

Nach Ausführungsformen umfasst die Banknote eine Kommunikationsschnittstelle zur Kommunikation mit einem Terminal. Die Banknote empfängt die Zahlungsanfrage von dem Terminal über die Kommunikationsschnittstelle und/oder sendet die signierte Transaktionsfreigabe über die Kommunikationsschnittstelle an das Terminal. Bei dem Terminal kann es sich beispielsweise um ein Terminal eines Verkäufers an einem Verkaufsort (engl.: "Point of Sale"/PoS), d.h. an dem Ort, an dem ein Verkauf vollzogen wird, handeln. Bei dem Terminal kann es sich ferner um ein Terminal handeln, welches an ein Nutzercomputersystem angeschlossen ist, über welches eine Zahlung mit der Banknote abgewickelt werden soll. Beispielsweise handelt es sich hierbei um eine Zahlungsabwicklung über ein Netzwerk, etwa das Internet, gegenüber einem Dienstanbieter, sei es ein Verkäufer oder ein Zahlungsdienstanbieter. Ebenso könnte das Terminal in Form eines mobilen tragbaren Kommunikationsgeräts, etwa einem Smartphone, eines Nutzers bereitgestellt werden. Der Nutzer könnte das mobile tragbare Kommunikationsgerät beispielsweise für eine Zahlungsabwicklung über ein Netzwerk, etwa das Internet, gegenüber einem Dienstanbieter nutzen, sei es ein Verkäufer oder ein Zahlungsdienstanbieter.

Nach Ausführungsformen umfasst die Banknote eine Nutzerschnittstelle zur Kommunikation mit einem Nutzer der Banknote, wobei die Banknote die Zahlungsanfrage von einem Nutzer über eine Eingabevorrichtung der Nutzerschnittstelle empfängt und/oder die signierte Transaktionsfreigabe an die Nutzerschnittstelle zum Ausgeben über eine Anzeigevorrichtung der Nutzerschnittstelle sendet. Ausführungsformen können den Vorteil haben, dass die für den Nutzer sichtbar ist und/oder gesteuert wird, welche Daten in die Banknote eingegeben werden und welche Daten die Banknote ausgibt.

Die Eingabevorrichtung kann beispielsweise ein Touch-Pad umfassen. Die Anzeigevorrichtung kann beispielsweise ein Display umfassen. Die Eingabevorrichtung kann beispielsweise mit der Anzeigevorrichtung kombiniert sein, etwa in Form eines Touch-Displays. Der Nutzer gibt die Daten der Zahlungsanfrage beispielsweise unter Verwendung der Eingabevorrichtung in Banknote ein.

Beispielsweise wird dem Nutzer die Zahlungsanfrage und/oder die Transaktionsfreigabe auf der Anzeigevorrichtung der Banknote angezeigt. Eine Bestätigung der angezeigten Zahlungsanfrage und/oder Transaktionsfreigabe durch den Nutzer unter Verwendung der Eingabevorrichtung der Banknote ist beispielsweise Voraussetzung für ein Erzeugen und/oder Signieren der Transaktionsfreigabe.

Beispielsweise wird die signierte Transaktionsfreigabe an die Anzeigevorrichtung der Banknote zum Anzeigen gesendet, etwa als alphanumerischer Zeichenfolg, Bar-Code, oder QR-Code. Die auf der Anzeigevorrichtung angezeigte signierte Transaktionsfreigabe kann beispielsweise unter Verwendung eines optischen Sensors, etwa eines Sensors eines Terminals, gescannt bzw. eingelesen werden.

Nach Ausführungsformen ist in dem Speicher des Sicherheitselements ferner ein aktueller Nominalwert der Banknote gespeichert. Ausführungsformen können den Vorteil haben, dass der aktuelle Nominalwert aus der Banknote ausgelesen werden kann. Beispielsweise legt den tatsächlich verbindlichen Nominalwert der Banknote aber die für die Seriennummer der entsprechenden Banknote zuständige Blockchain mit dem unter der Blockchain-Adresse der Banknote gespeicherten aktuellen Nominalwert fest, d.h. dem sich aus der Bilanz der in der zuständigen Blockchain gespeicherten Transaktionen unter Beteiligung der Blockchain-Adresse der Banknote ergebenden aktuellen Nominalwert.

Beispielsweise ist der aktuelle Nominalwert in dem geschützten Speicherbereich des Speichers des Sicherheitselements gespeichert. Beispielsweise ist der aktuelle Nominalwert nicht in dem geschützten Speicherbereich des Speichers des Sicherheitselements gespeichert. Beispielsweise ist der in dem Speicher des Sicherheitselements gespeicherte aktueller Nominalwert der Banknote von außen auslesbar. Beispielsweise ist der in dem Speicher des Sicherheitselements gespeicherte aktueller Nominalwert der Banknote nicht von außen auslesbar. Beispielsweise dient der in dem Speicher des Sicherheitselements gespeicherte aktueller Nominalwert der Banknote alleine einer internen Prüfung, etwa, ob ein zu zahlender Betrag kleiner gleich dem aktuellen Nominalwert der Banknote ist.

Nach Ausführungsformen ist ferner die Seriennummer der Banknote in dem Speicher des Sicherheitselements gespeichert.

Nach Ausführungsformen ist initial als aktueller Nominalwert der initiale Nominalwert der Banknote in dem Speicher des Sicherheitselements gespeichert. Ausführungsformen können den Vorteil haben, dass ausgehend von diesem initialen Nominalwert bei jeder erfolgreich abgewickelten Zahlung der gespeicherte Nominalwert angepasst wird und somit banknotenseitig der aktuelle Nominalwert nachverfolgt werden kann.

Nach Ausführungsformen ist der Prozessor ferner dazu konfiguriert bei Ausführen der Programminstruktionen den zu zahlenden Betrag mit dem gespeicherten aktuellen Nominalwert der Banknote abzugleichen und die signierte Transaktionsfreigabe zur Autorisierung der Transaktion nur unter der Voraussetzung zu erstellen, dass der gespeicherte aktuelle Nominalwert größer oder gleich dem zu zahlenden Betrag ist. Ausführungsformen können den Vorteil haben, dass sichergestellt werden kann, dass der aktuelle Nominalwert für die auszuführende Zahlung ausreichend ist.

Nach Ausführungsformen ist der Prozessor ferner dazu konfiguriert bei Ausführen der Programminstruktionen ein Aktualisierungsverfahren zum Aktualisieren des gespeicherten aktuellen Nominalwerts der Banknote auszuführen. Das Aktualisierungsverfahren umfasst:
- Empfangen einer Aktualisierungsanfrage zum Aktualisieren des in dem Speicher des Sicherheitselements gespeicherten aktuellen Nominalwerts der Banknote, wobei die Aktualisierungsanfrage einen aktualisierten Nominalwert der Banknote zusammen mit einer kryptographisch gesicherten Bestätigung der ausgebenden Zentralbank für den aktualisierten Nominalwert umfasst,
- Prüfen der kryptographisch gesicherten Bestätigung unter Verwendung eines in dem Speicher des Sicherheitselements gespeicherten kryptographischen Prüfschlüssels,
- im Falle einer erfolgreichen Prüfung, Ersetzten des in dem Speicher des Sicherheitselements gespeicherten aktuellen Nominalwerts der Banknote mit dem empfangenen aktualisierten Nominalwert.

Ausführungsformen können den Vorteil haben, dass sichergestellt werden kann, dass der gespeicherte Nominalwert aktualisiert ist. Nach Ausführungsformen handelt es sich bei dem kryptographischen Prüfschlüssel um einen zusätzlichen zu dem asymmetrischen Schlüsselpaar der Banknote in dem Speicher des Sicherheitselements gespeicherten kryptographischen Prüfschlüssel, beispielsweise einen öffentlichen kryptographischen Schlüssel eines der Zentralbank zugeordneten asymmetrischen Schlüsselpaars. Der Signaturprüfschlüssel wird beispielsweise im Zuge der Herstellung der Banknote in dem Sicherheitselement hinterlegt.

Nach Ausführungsformen wird die Aktualisierungsanfrage in Antwort auf das Senden der signierten Transaktionsfreigabe empfangen. Beispielsweise handelt es sich bei der Bestätigung der Zentralbank für den aktualisierten Nominalwert um eine Transaktionsbestätigung der Zentralbank, insbesondere um eine Bestätigung einer Eintragung der Transaktion in die Blockchain. Beispielsweise handelt es sich bei dem aktualisierten Nominalwert um den bisherigen Nominalwert der Banknote abzüglich des gezahlten Betrags.

Nach Ausführungsformen wird die Aktualisierungsanfrage in Antwort auf eine Transaktion eines zusätzlichen Betrags auf die Blockchain-Adresse der Banknote. Beispielsweise handelt es sich bei dem aktualisierten Nominalwert um den bisherigen Nominalwert der Banknote zuzüglich des zusätzlichen Betrags. Ausführungsformen können den Vorteil haben, dass auch Änderungen des Nominalwerts im Zuge einer Transaktion eines zusätzlichen Betrags auf die Blockchain-Adresse der Banknote berücksichtigt werden.

Nach Ausführungsformen umfasst das Verfahren ferner ein Ausstellverfahren zum Ausstellen einer Banknote. Das Ausstellverfahren umfasst:
- Herstellen der Banknote, wobei die Banknote ferner ein Sicherheitselement mit einem Prozessor und einem Speicher mit Programminstruktionen umfasst,
- Erzeugen eines banknotenindividuellen asymmetrischen Schlüsselpaars mit einem privaten und einem öffentlichen kryptographischen Schlüssel durch die Banknote,
- Speichern des erzeugten banknotenindividuellen asymmetrischen Schlüsselpaars in dem Speicher durch die Banknote, wobei der private kryptographische Schlüssel in einem geschützten Speicherbereich des Speichers gespeichert wird,
- Ausgeben des erzeugten öffentlichen kryptographischen Schlüssels durch die Banknote zum Initialisieren einer aus dem öffentlichen kryptographischen Schlüssel abgeleiteten banknotenindividuellen Blockchain-Adresse durch eine die Banknote ausgebenden Zentralbank in einer Blockchain, wobei der Blockchain-Adresse der Banknote im Zuge der Initialisierung der initiale Nominalwert zugeordnet wird.

Nach Ausführungsformen umfasst die hergestellte Banknote beispielsweise eine visuelle Angabe einer die Banknote eindeutig identifizierenden Seriennummer. Nach Ausführungsformen umfasst die hergestellte Banknote beispielsweise eine visuelle Angabe eines der Banknote zugeordneten initialen Nominalwerts.

Ausführungsformen können den Vorteil haben, dass die Banknote bzw. der Banknotenkörper hergestellt bzw. gedruckt wird. Zusätzlich zu visuellen Angaben und Sicherheitselementen, wie sie etwa auch bekannte Banknoten aufweisen, umfasst die Banknote beispielsweise zusätzlich ein Sicherheitselement mit einem Prozessor und einem Speicher mit Programminstruktionen. Diese Programminstruktionen umfassen beispielsweise kryptographische Programminstruktionen zum Erzeugen eines banknotenindividuellen asymmetrischen Schlüsselpaars mit einem privaten und einem öffentlichen kryptographischen Schlüssel durch die Banknote. Damit die Banknote Gültigkeit erhält, muss diese beispielsweise in die für die Seriennummer der entsprechenden Banknote zuständigen Blockchain eingetragen werden. Hierzu wird aus dem öffentlichen kryptographischen Schlüssel eine banknotenindividuelle Blockchain-Adresse abgeleitet. Diese Ableitung kann durch die Banknote selbst und/oder durch ein externes Computersystem, beispielsweise ein Computersystem der Zentralbank erfolgen, welche die Blockchain verwaltet. Im Zuge einer Initialisierung der Blockchain-Adresse der Banknote durch die ausgebende Zentralbank wird beispielsweise ein der Banknote bzw. der Seriennummer der Banknote zugeordneter initialer Nominalwert in die zuständige Blockchain eingetragen. Diese Eintragung kann beispielsweise in Form einer Transaktion mit dem entsprechenden Betrag und gegebenenfalls weiteren Informationen von einer Blockchain-Adresse der Zentralbank an die Blockchain-Adresse der Banknote erfolgen. Die weiteren Informationen umfassen beispielsweise die Seriennummer der Banknote, einen Mindestnominalwert der Banknote und/oder einen Zusatznominalwertanteil der Banknote. Alternativ könnte die Zuordnung des initialen Nominalwerts zu der Blockchain-Adresse auch durch einen Eintrag der Zentralbank, z.B. einen von der Zentralbank signierten Eintrag, erfolgen, welche die Blockchain-Adresse, den initialen Nominalwert und/oder weiteren Informationen bezüglich der durch die Eintragung initialisierten Banknote umfasst. Die weiteren Informationen umfassen beispielsweise die Seriennummer der Banknote, einen Mindestnominalwert der Banknote und/oder einen Zusatznominalwertanteil der Banknote.

Nach Ausführungsformen ist das Ausstellverfahren dazu konfiguriert jede der zuvor beschriebenen Ausführungsformen der Banknote auszustellen bzw. herzustellen. Nach Ausführungsformen handelt es sich bei der unter Verwendung des Ausstellverfahrens ausgestellten Banknote um eine Banknote nach einer der zuvor beschriebenen Ausführungsformen.

Nach Ausführungsformen umfasst das Verfahren ferner ein Senden einer Herstellungsbestätigung zu Bestätigung der Herstellung der Banknote an die ausgebende Zentralbank. Die Herstellungsbestätigung umfasst die Seriennummer und den öffentlichen kryptographischen Schlüssel der hergestellten Banknote zum Initialisieren einer aus dem öffentlichen kryptographischen Schlüssel abgeleiteten banknotenindividuellen Blockchain-Adresse durch die ausgebende Zentralbank in der Blockchain. Nach Ausführungsformen umfasst die Herstellungsbestätigung ferner eine Angabe eines initialen Nominalwerts und/oder einer Mindestnominalwert der Banknote.

Ausführungsformen können den Vorteil haben, dass der Zentralbank durch die Herstellungsbestätigung alle zur Initialisierung der Banknote in der für die entsprechende Banknote bzw. die Seriennummer der entsprechenden Banknote zuständigen Blockchain notwendigen Informationen zur Verfügung gestellt werden. Alternativ oder zusätzlich werden der Zentralbank durch die Herstellungsbestätigung die Banknote charakterisierende Informationen bestätigt. Beispielsweise gibt die Zentralbank einem Hersteller der Banknote in einem Auftrag vor, welche Seriennummern zur Herstellung von Banknoten mit welchen initialen Nominalwerten und/oder Mindestnominalwerten verwendet werden sollen. Die Herstellungsbestätigung bestätigt gegenüber der Zentralbank welche Banknoten mit welchen Seriennummern und welchen initialen Nominalwerts und/oder einer Mindestnominalwert tatsächlich hergestellt wurden.

Nach Ausführungsformen umfasst das Initialisieren ein Registrieren der Blockchain-Adresse der Banknote durch einen Initialisierungs- bzw. Registrierungseintrag der ausgebenden Zentralbank in der Blockchain. Nach Ausführungsformen umfasst der Registrierungseintrag die Blockchain-Adresse der Banknote und den der Banknote zugeordneten initialen Nominalwert. Nach Ausführungsformen ist der Registrierungseintrag unter Verwendung eines privaten kryptographischen Schlüssels der ausgebenden Zentralbank signiert. Nach Ausführungsformen weist der Registrierungseintrag die Form einer Transaktion des initialen Nominalwerts von der ausgebenden Zentralbank, beispielsweise von einem der Zentralbank zugeordneten Blockchain-Adresse, an die Blockchain-Adresse der Banknote auf. Nach Ausführungsformen umfasst der Registrierungseintrag die Seriennummer der Banknote. Nach Ausführungsformen wird eine Zuordnung der Seriennummer der Banknote zu der Blockchain-Adresse der Banknote und/oder des öffentlichen Schlüssels der Banknote in einem zusätzlichen Register der ausgebenden Zentralbank gespeichert, wobei die Seriennummer als Datenbankzugriffsschlüssel zum Auslesen der Blockchain-Adresse und/oder des öffentlichen Schlüssels der Banknote dient.

Nach Ausführungsformen wird die Banknote auf einen Empfang einer Bestellung von einer die Banknote ausgebenden Zentralbank hin hergestellt. Nach Ausführungsformen wird eine Angabe des vordefinierten Bereichs von Seriennummern empfangen. Nach Ausführungsform wird eine Angabe des für die Banknote vorgesehenen initialen Nominalwerts und/oder Mindestnominalwerts empfangen.

Nach Ausführungsformen umfasst das Verfahren ferner ein Verwenden einer Banknote. Die Banknote umfasst ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse einer von einer die Banknote ausgebenden Zentralbank verwalteten Blockchain des Blockchain-Systems zugeordnet ist.

Der Prozessor ist dazu konfiguriert bei Ausführen der Programminstruktionen ein Zahlungsverfahren mit der Banknote auszuführen. Das Zahlungsverfahren umfasst:
- Empfangen einer Zahlungsanfrage für eine Zahlung mit der Banknote in Form einer Transaktion eines zu zahlenden Betrags von der Blockchain-Adresse der Banknote an eine Blockchain-Adresse eines Zahlungsempfängers, wobei die Zahlungsanfrage den zu zahlenden Betrag und die Blockchain-Adresse des Zahlungsempfängers angibt,
- Signieren einer Transaktionsfreigabe mit dem privaten kryptographischen Schlüssel der Banknote, wobei die Transaktionsfreigabe die Blockchain-Adresse der Banknote, die Blockchain-Adresse des Zahlungsempfängers und den zu zahlenden Betrag umfasst,
- Senden der signierten Transaktionsfreigabe.

Nach Ausführungsformen wird mit der signierten Transaktionsfreigabe zusammen ferner ein weiterer transaktionsindividueller Wert gesendet. Beispielsweise ist der weitere transaktionsindividuelle Wert von der Signatur der Transaktionsfreigabe mitumfasst und/oder an die signierte Transaktionsfreigabe angehängt. Bei dem weiteren transaktionsindividuellen Wert handelt es sich beispielsweise um einen Zeitstempel und/oder eine Zufallszahl.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass die Banknote, wie bereits zuvor beschrieben, nicht zur für eine Bargeldzahlung, sondern zudem für eine bargeldlose Zahlung verwendet werden kann.

Nach Ausführungsformen handelt es sich bei der zum Zahlen verwendeten Banknote um eine Banknote nach einer der zuvor beschriebenen Ausführungsformen.

Nach Ausführungsformen ist in dem Speicher ferner ein banknotenindividueller öffentlicher kryptographischer Schlüssel des asymmetrischen Schlüsselpaars der Banknote gespeichert, aus welchem die Blockchain-Adresse der Banknote ableitbar ist. Nach Ausführungsformen ist in dem Speicher ferner die Blockchain-Adresse der Banknote gespeichert. Ausführungsformen können den Vorteil haben, dass die Banknote über die Blockchain-Adresse verfügt und/oder diese ableiten kann.

Nach Ausführungsformen umfasst die Banknote ferner eine visuelle Angabe des banknotenindividuellen öffentlichen kryptographischen Schlüssels. Nach Ausführungsformen umfasst die Banknote ferner eine visuelle Angabe der Blockchain-Adresse der Banknote. Falls die Banknote eine visuelle Angabe des banknotenindividuellen öffentlichen kryptographischen Schlüssels und/oder der Blockchain-Adresse der Banknote umfasst, erfolgt das erzeugen des banknotenindividuellen asymmetrischen Schlüsselpaars beispielsweise während des Herstellens der Banknote, sodass der banknotenindividuellen öffentliche kryptographische Schlüssel und/oder die Blockchain-Adresse der Banknote im Zuge der Herstellung beispielsweise auf die Banknote gedruckt oder anderweitig in die Banknote eingebracht werden können. Alternativ oder zusätzlich kann die Banknote eine Anzeigevorrichtung umfassen, auf welcher der in dem Speicher des Sicherheitselements gespeicherte banknotenindividuelle öffentliche kryptographische Schlüsse und/oder die Blockchain-Adresse der Banknote als visuelle Angabe angezeigt werden kann.

Nach Ausführungsformen erzeugt die Banknote die Transaktionsfreigabe unter Verwendung der Angaben der Zahlungsanfrage. Nach Ausführungsformen umfasst die Zahlungsanfrage die vollständigen Transaktionsangaben, welche die Banknote als Transaktionsfreigabe signiert.

Nach Ausführungsformen wird von der Banknote zum Ableiten der Blockchain-Adresse der Banknote für die Zahlungsanfrage der öffentliche kryptographische Schlüssel der Banknote bereitgestellt. Nach Ausführungsformen wird der öffentliche kryptographische Schlüssel der Banknote als visuelle Angabe zum Ablesen bereitgestellt. Nach Ausführungsformen wird der öffentliche kryptographische Schlüssel von der Banknote gesendet.

Nach Ausführungsformen wird von der Banknote die Blockchain-Adresse der Banknote für die Zahlungsanfrage bereitgestellt. Nach Ausführungsformen wird die Blockchain-Adresse der Banknote als visuelle Angabe zum Ablesen bereitgestellt. Nach Ausführungsformen wird die Blockchain-Adresse der Banknote von der Banknote gesendet.

Nach Ausführungsformen umfasst die Banknote eine Kommunikationsschnittstelle zur Kommunikation mit einem Terminal. Die Banknote empfängt die Zahlungsanfrage von dem Terminal über die Kommunikationsschnittstelle und/oder sendet die signierte Transaktionsfreigabe über die Kommunikationsschnittstelle an das Terminal.

Nach Ausführungsformen umfasst die Banknote eine Nutzerschnittstelle zur Kommunikation mit einem Nutzer der Banknote, wobei die Banknote die Zahlungsanfrage von einem Nutzer über eine Eingabevorrichtung der Nutzerschnittstelle empfängt und/oder die sig-nierte Transaktionsfreigabe an die Nutzerschnittstelle zum Ausgeben über eine Anzeigevorrichtung der Nutzerschnittstelle sendet.

Nach Ausführungsformen umfasst das Verfahren ferner eine Zahlungsabwicklung unter Verwenden eines Terminals. Die Zahlung erfolgt mit einer Banknote, welche eine Kommunikationsschnittstelle zur Kommunikation mit dem Terminal und ein Sicherheitselement mit einem Prozessor und einem Speicher umfasst. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse einer von einer die Banknote ausgebenden Zentralbank verwalteten Blockchain des Blockchain-Systems zugeordnet. Das Terminal umfasst einen Prozessor, einen Speicher und eine Kommunikationsschnittstelle zu Kommunikation mit der Banknote.

Das Verfahren umfasst zur Abwicklung eines Zahlungstransfers durch das Terminal:
- Senden einer Zahlungsanfrage an die Banknote in Form einer Transaktion eines zu zahlenden Betrags von der Blockchain-Adresse der Banknote an eine Blockchain-Adresse eines Zahlungsempfängers, wobei die Zahlungsanfrage den zu zahlenden Betrag und die Blockchain-Adresse des Zahlungsempfängers angibt,
- Empfangen einer mit dem privaten kryptographischen Schlüssel der Banknote signierten Transaktionsfreigabe, wobei die Transaktionsfreigabe die Blockchain-Adresse der Banknote, die Blockchain-Adresse des Zahlungsempfängers und den zu zahlenden Betrag umfasst,
- Weiterleiten der signierten Transaktionsfreigabe der Banknote an einen Blockchain-Server der Blockchain, welche dem Bereich von Seriennummern zugeordnet ist, in den die Seriennummer der entsprechenden Banknote fällt, zum Prüfen und Eintragen der Transaktion in die Blockchain,
- auf eine erfolgreiche Prüfung der signierten Transaktionsfreigabe hin, Empfangen einer ersten Transaktionsbestätigung.

Nach Ausführungsformen wird mit der signierten Transaktionsfreigabe zusammen ferner ein weiterer transaktionsindividueller Wert empfangen. Beispielsweise ist der weitere transaktionsindividuelle Wert von der Signatur der Transaktionsfreigabe mitumfasst und/oder an die signierte Transaktionsfreigabe angehängt. Bei dem weiteren transaktionsindividuellen Wert handelt es sich beispielsweise um einen Zeitstempel und/oder eine Zufallszahl.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass eine bargeldlose Zahlungsabwicklung über ein Terminal ermöglicht wird. Nach Ausführungsformen handelt es sich bei der zur Zahlungsabwicklung verwendeten Banknote um eine Banknote nach einer der zuvor beschriebenen Ausführungsformen.

Ausführungsformen können den Vorteil haben, dass die Zentralbank, neben ihrer Rolle als die Banknote ausgebende Institution, zusätzlich gegenüber der Banknote und/oder dem Terminal bzw. einem das verwenden Zahlungsempfänger Dienstleitungen im Bereich des Zahlungsverkehrs bzw. der Zahlungsabwicklung bereitstellt und mithin als eine klassische Bank bzw. eine Geschäftsbank auftritt.

Unter einer Zentralbank wird hier eine nationale oder supranationale Institution verstanden, welche über das Monopolrecht verfügt, Münzen und Banknoten als gesetzliche Zahlungsmittel auszugeben. Ferner kann eine Zentralbank geld- und währungspolitische Aufgaben wahrnehmen. Beispielsweise hält eine Zentralbank die Währungsreserve eines Währungsraumes, beispielsweise reguliert sie die Geldmenge, beispielsweise beeinflusst sie die Geldschöpfung durch Kreditvergabe der Geschäftsbanken und/oder refinanziert diese Geschäftsbanken und den Staat. Beispielsweise emittiert die Zentralbank die Banknoten und bringen diese in Umlauf.

Bei dem Terminal kann es sich beispielsweise um ein Terminal eines Verkäufers an einem Verkaufsort (engl.: "Point of Sale"/PoS), d.h. an dem Ort, an dem ein Verkauf vollzogen wird, handeln. Bei dem Terminal kann es sich ferner um ein Terminal handeln, welches an ein Nutzercomputersystem angeschlossen ist, über welches eine Zahlung mit der Banknote abgewickelt werden soll. Beispielsweise handelt es sich hierbei um eine Zahlungsabwicklung über ein Netzwerk, etwa das Internet, gegenüber einem Dienstanbieter, sei es ein Verkäufer oder ein Zahlungsdienstanbieter. Ebenso könnte das Terminal in Form eines mobilen tragbaren Kommunikationsgeräts, etwa einem Smartphone, eines Nutzers bereitgestellt werden. Der Nutzer könnte das mobile tragbare Kommunikationsgerät beispielsweise für eine Zahlungsabwicklung über ein Netzwerk, etwa das Internet, gegenüber einem Dienstanbieter nutzen, sei es ein Verkäufer oder ein Zahlungsdienstanbieter.

Nach Ausführungsformen umfasst die Prüfung der signierten Transaktionsfreigabe ein Prüfen der Signatur der Transaktionsfreigabe sowie ein Prüfen, ob ein der Blockchain-Adresse der Banknote zugeordneter aktueller Nominalwert der Banknote größer oder gleich dem zu zahlenden Betrag ist. Ausführungsformen können den Vorteil haben, dass eine effektive Prüfung erfolgen kann. Beispielsweise kann die Transaktion bereits vor einer Eintragung der Transaktion in die für die Seriennummer der die Transaktion freigebenden Banknote zuständige Blockchain bestätigt werden. Dies kann beispielsweise der Fall sein, falls sichergestellt wird, dass keine weiteren vorangingen Transaktionen von der Blockchain-Adresse der Banknote in einer Warteschleife zum Eintragen in die zuständige Blockchain stehen und/oder die Bestätigung erfolgt unter dem Vorbehalt, dass weitere voranginge Transaktionen von der Blockchain-Adresse der Banknote möglicher Weise in einer Warteschleife zum Eintragen in die zuständige Blockchain stehen.

Nach Ausführungsformen handelt es sich bei der ersten Transaktionsbestätigung um eine vorläufige Transaktionsbestätigung, bei welcher die Prüfung des aktuellen Nominalwerts der Banknote unter Verwendung eines Registers erfolgt, welches in regelmäßigen Intervallen geupdated wird und welches für die Blockchain-Adressen einer dem Register zugeordneten Blockchain der Mehrzahl von Blockchains jeweils einen aktuellen Nominalwert umfasst, welcher sich aus den Bilanzen der in der entsprechenden Blockchain gespeicherten Transaktionen unter Verwendung der entsprechenden Blockchain-Adressen ergibt. Die erste Transaktionsbestätigung wird als hinreichende Transaktionsbestätigung akzeptiert, falls der zu zahlende Betrag einen Schwellenwert nicht überschreitet. Wie die entsprechende Blockchain ist beispielsweise auch das zugehörige Register demselben Bereich von Seriennummern zugeordnet. Mithin umfasst das Blockchain-System beispielsweise eine Mehrzahl von entsprechenden Registern. Nach Ausführungsformen umfasst das Blockchain-System ein Register für jede der Blockchains der Mehrzahl von Blockchains und damit für jeden der Bereiche von Seriennummern in welche der Raum von Seriennummern unterteilt ist.

Ausführungsformen können den Vorteil haben, dass eine schnelle Überprüfung des aktuellen Nominalwerts der Banknote erfolgen kann, ohne dass dafür erst einmal die vollständige Bilanz der in der zugehörigen Blockchain gespeicherten Transaktionen unter Verwendung der entsprechenden Blockchain-Adressen berechnet werden muss.

Beispielsweise kann auf Basis des ermittelten aktuelle Nominalwerts auch entschieden werden, ob eine Bargeldzahlung oder eine bargeldlose Zahlung mit der Banknote erfolgen soll. Ist der aktuelle Nominalwert identisch mit dem zu zahlenden Betrag, erfolgt beispielsweise eine Bargeldzahlung, bei welcher die Banknote an den Zahlungsempfänger übergeben wird und das Eigentum an dieser an den Zahlungsempfänger übergeht. Ist der aktuelle Nominalwert größer als der zu zahlenden Betrag, erfolgt beispielsweise eine Bargeldlosezahlung, bei welcher eine entsprechende Zahlungsanfrage für eine Zahlung in Form einer Transaktion eines zu zahlenden Betrags von der Blockchain-Adresse der Banknote an eine Blockchain-Adresse eines Zahlungsempfängers an die Banknote gesendet wird. Die Banknote kann diese Transaktion mit einer signierten Transaktionsfreigabe autorisieren.

Ist der aktuelle Nominalwert größer als der zu zahlenden Betrag, wäre es ebenso möglich, dass eine Bargeldzahlung erfolgt und der überzählige Betrag als Wechselgeld, beispielsweise in Form von Bargeld, von dem Zahlungsempfänger zurückgezahlt wird.

Beispielsweise kann der Nominalwert der Banknote auch einen garantierten Mindestnominalwert und einen variablen Zusatznominalwertanteil umfassen. Der Mindestnominalwert kann beispielsweise nur in Form einer Bargeldzahlung mit Übergabe der Banknote gezahlt werden, während der variable Zusatznominalwertanteil im Zuge einer bargeldbasierten oder bargeldlosen Zahlungsabwicklung verwendet werden kann. Mit anderen Worten könnten mit der Banknote nur bargeldlose Zahlungen erfolgen, bei welchen der verbleidende Nominalwert der Banknote größer oder gleich dem Mindestnominalwert ist. Soll mit der Banknote ein Betrag gezahlt werden, welcher in einem verbleidenden Nominalwert resultieren würde, der kleiner dem Mindestnominalwert wäre, wird eine bargeldlose Zahlung über die zuständige Blockchain beispielsweise blockiert. Es muss mithin beispielsweise eine bargeldbasierte Zahlung erfolgen, bei welcher die Banknote übergeben wird. Ist der aktuelle Nominalwert der Banknote größer als der zu zahlende Betrag, so kann der Differenzbetrag beispielsweise in Form von Wechselgeld durch den Zahlungsempfänger rückerstattet werden.

Beispielsweise umfasst des zur vorläufigen Transaktionsbestätigung verwendete Register ferner eine Angabe des Mindestnominalwerts der Banknote mit der entsprechenden Blockchain-Adresse.

Nach Ausführungsformen wird die erste Transaktionsbestätigung nicht als hinreichend akzeptiert, falls der zu zahlende Betrag den Schwellenwert überschreitet. Es wird eine zweite Transaktionsbestätigung empfangen, die eine Eintragung der Transaktion in die zuständige Blockchain betätigt, welche als hinreichend akzeptiert wird. Ausführungsformen können den Vorteil haben, dass sicher davon ausgegangen werden kann, dass die Transaktion erfolgreich war, wenn Transaktion tatsächlich in die zuständige Blockchain eingetragen wurde.

Nach Ausführungsformen wird ferner der öffentliche kryptographische Schlüssel empfangen. Beispielsweise wird der öffentliche kryptographische Schlüssel vor dem Senden der Zahlungsanfrage empfangen. Beispielsweise wird der öffentliche kryptographische Schlüssel als von der Banknote bereitgestellte visuelle Angabe eingescannt bzw. eingelesen. Beispielsweise wird der öffentliche kryptographische Schlüssel von der Banknote in Antwort auf eine an die Banknote gesendete Anfrage empfangen. Ausführungsformen können den Vorteil haben, dass der öffentliche kryptographische Schlüssel von dem Terminal zum Ableiten der Blockchain-Adresse der Banknote verwendet werden kann. Die abgeleitete Blockchain-Adresse der Banknote oder der öffentliche kryptographische Schlüssel können als Bestandteil der Zahlungsanfrage an die Banknote gesendet werden. Beispielsweise kann die Zahlungsanfrage die vollständigen Transaktionsangaben umfassen, welche zum Erzeugen der signierten Transaktionsbestätigung von der Banknote nur noch signiert erden müssen.

Nach Ausführungsformen umfasst das Empfangen des öffentlichen kryptographischen Schlüssels ein Lesen der visuellen Angabe des öffentlichen kryptographischen Schlüssels unter Verwendung eines Sensors des Terminals. Beispielsweise umfasst die visuelle Angabe eine alphanumerische Zeichenfolge, einen Bar-Code, oder einen QR-Code des öffentlichen kryptographischen Schlüssels. Nach Ausführungsformen umfasst das Empfangen des öffentlichen kryptographischen Schlüssels ein Empfangen des unter Verwendung der Kommunikationsschnittstelle der Banknote gesendeten öffentlichen kryptographischen Schlüssels unter Verwendung der Kommunikationsschnittstelle des Terminals.

Nach Ausführungsformen umfasst das Zahlungsabwicklungsverfahren ferner ein Ableiten der Blockchain-Adresse der Banknote aus dem öffentlichen kryptographischen Schlüssel der Banknote. Die Zahlungsanfrage umfasst beispielsweise die vollständigen Transaktionsangaben mit der aus dem öffentlichen kryptographischen Schlüssel der Banknote abgeleiteten Blockchain-Adresse, welche die Banknote als Transaktionsfreigabe signiert.

Nach Ausführungsformen umfasst die Banknote eine Mehrzahl von Sicherheitsmerkmalen. Beispielsweise umfasst das Verfahren als Voraussetzung für das Senden der Zahlungsanfrage ein erfolgreiches Erfassen und Validieren von ein oder mehreren vordefinierenden Sicherheitsmerkmalen der Mehrmals von Sicherheitsmerkmalen der Banknote. Beispielsweise umfasst das Verfahren als Voraussetzung für das Weiterleiten der signierten Transaktionsfreigabe der Banknote das erfolgreiche Erfassen und Validieren von ein oder mehreren vordefinierenden Sicherheitsmerkmalen der Mehrmals von Sicherheitsmerkmalen der Banknote. Ausführungsformen können den Vorteil haben, dass anhand der Sicherheitsmerkmale die Authentizität und Validität der Banknote geprüft werden kann.

Nach Ausführungsformen umfasst das Verfahren als Voraussetzung für das Senden der Zahlungsanfrage:
- Erfassen eines Identifikators, welcher die Blockchain-Adresse der Banknote eindeutig identifiziert, wobei es sich bei dem erfassten Identifikator um eine der folgenden Angaben handelt: die Seriennummer der Banknote, den öffentlichen kryptographischen Schlüssel der Banknote, die Blockchain-Adresse der Banknote,
- Senden einer Blockchain-Abfrage nach dem aktuellen Nominalwert der Blockchain-Adresse der Banknote,
- Empfangen des aktuellen Nominalwerts der Blockchain-Adresse der Banknote,
- Prüfen, ob der empfangene aktuelle Nominalwert größer gleich dem zu zahlenden Betrag ist, wobei das Senden der Zahlungsanfrage an die Banknote auf eine erfolgreiche Prüfung hin erfolgt.

Ausführungsformen können den Vorteil haben, dass sichergestellt werden kann, dass der der Banknote zugeordnete aktuelle Nominalwert größer gleich dem zu zahlenden Betrag ist. Mit anderen Worten kann sichergestellt werden, dass die Banknote tatsächlich über einen ausreichenden Wert zum Zahlen des zu zahlenden Betrags verfügt.

Nach Ausführungsformen umfasst das Erfassen des Identifikators ein Lesen einer von der Banknote umfassten visuellen Angabe des Identifikators unter Verwendung eines Sensors des Terminals. Bei dem Sensor handelt es sich beispielsweise um einen optischen Sensor. Nach Ausführungsformen umfasst das Erfassen des Identifikators ein Empfangen des unter Verwendung der Kommunikationsschnittstelle der Banknote gesendeten Identifikators unter Verwendung der Kommunikationsschnittstelle des Terminals. Beispielsweise ist der Identifikator in dem Speicher des Sicherheitselements gespeichert.

Nach Ausführungsformen handelt es sich bei dem empfangenen aktuellen Nominalwert der Banknote um einen aus dem Register ausgelesenen Nominalwert der Blockchain-Adresse der Banknote. Das Register wird in regelmäßigen Intervallen geupdated und umfasst für die Blockchain-Adressen der zugehörigen Blockchain jeweils einen aktuellen Nominalwert, welcher sich aus den Bilanzen der in der zugehörigen Blockchain gespeicherten Transaktionen unter Verwendung der entsprechenden Blockchain-Adressen ergibt. Nach Ausführungsformen handelt es sich bei dem empfangenen aktuellen Nominalwert der Banknote um einen aus der Blockchain, welche für die Seriennummer der entsprechenden Banknote zuständig ist, ausgelesenen Nominalwert der Blockchain-Adresse der Banknote. Der ausgelesene aktuellen Nominalwert der Banknote ergibt sich dabei beispielsweise aus der Bilanz der in der entsprechenden Blockchain gespeicherten Transaktionen unter Beteiligung der Blockchain-Adresse der Banknote.

Ausführungsformen können den Vorteil haben, dass in effizienter Weise ein aktueller Nominalwert ermittelt werden kann. Beispielsweise muss dafür nicht erst einmal die vollständigen Bilanzen der in der zugehörigen Blockchain gespeicherten Transaktionen unter Verwendung der entsprechenden Blockchain-Adressen berechnet werden.

Nach Ausführungsformen wird eine Mehrzahl von Banknoten empfangen. Die Identifikatoren der Blockchain-Adressen der Banknoten werden erfasst, beispielsweise Seriennummern, öffentlichen kryptographischen Schlüssel und/oder die Blockchain-Adressen selbst, und für jede der Banknoten wird jeweils ein aktueller Nominalwert unter Verwendung einer Blockchain-Abfrage für die Banknoten gemäß den zugeordneten Blockchain-Adressen ermittelt. Aus der Mehrzahl von empfangenen Banknoten wird ein Satz von Banknoten ausgewählt und einbehalten, deren aufsummierte aktuelle Nominalwerte einen Betrag ergeben, der kleiner als ein zu zahlender Betrag ist. Ein verbleibender Differenzbetrag zwischen dem zu zahlenden Betrag und dem aufsummierten Betrag des Satzes von ausgewählten Banknoten ist kleiner als ein aktueller Nominalwert einer weiteren Banknote der Mehrzahl von Banknoten, welche nicht von dem Satz von ausgewählten Banknoten umfasst ist. Die Zahlungsanfrage wird zur Zahlung des Differenzbetrags an die weitere Banknote gesendet.

Ausführungsformen können den Vorteil haben, dass eine Kombination aus bargeldbasierter und bargeldloser Zahlung ermöglicht werden könnte. Für den einbehaltenen Satz von Banknoten ergibt sich keine Notwendigkeit von Transaktionsfreigaben und/oder Eintragungen entsprechenden Transaktionen in die Blockchain. Die Zahlung mit diesen Banknoten erfolgt vielmehr durch Übergabe der Banknoten, wie bei Bargeldzahlungen üblich. Falls der zu zahlende Betrag nicht aufgeht, d.h. die Summe der Nominalwerte der Banknoten des einbehaltenen Satzes von Banknoten kleiner als der zu zahlender Betrag ist und keine weitere Banknote vorliegt, deren Nominalwert dem Differenzbetrag entspricht, erfolgt die Zahlung des Differenzbetrags bargeldlos unter Verwendung einer weiteren Banknote, deren Nominalwert größer als der entsprechende Differenzwert ist. Alternativ kann die Zahlung des Differenzbetrags auch durch einbehalten der weiteren Banknote erfolgen und der überzählig bezahlte Betrag rückerstattet werden. Beispielsweise durch eine Transaktion von einer Blockchain-Adresse des Zahlungsempfängers an eine Blockchain-Adresse einer nicht einbehaltenen Banknote, welche im Eigentum des Zahlungspflichtigen verbleibt. Nach Ausführungsformen werden alle nicht einbehaltenen Banknoten zurückgegebenen.

Nach Ausführungsformen umfassen die Banknoten der Mehrzahl von Banknoten jeweils eine Mehrzahl von Sicherheitsmerkmalen. Das Verfahren umfasst beispielsweise für jede der Banknoten jeweils eine Gültigkeitsprüfung. Die Gültigkeitsprüfung der Banknoten umfasst beispielsweise jeweils ein erfolgreiches Erfassen und Validieren von ein oder mehreren vordefinierenden Sicherheitsmerkmalen der Mehrmals von Sicherheitsmerkmalen der entsprechenden Banknote. Ausführungsformen können den Vorteil haben, dass die Authentizität und Validität aller Banknoten sichergestellt werden kann, insbesondere der einbehaltenen Banknoten.

Nach Ausführungsformen umfasst das Verfahren ferner ein Ermitteln eines aktuellen Nominalwerts einer Banknote unter Verwenden eines Terminals. Die Banknote umfasst eine Kommunikationsschnittstelle zur Kommunikation mit dem Terminal und ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse der Banknote zugeordnet. Das Terminal umfasst einen Prozessor, einen Speicher und eine Kommunikationsschnittstelle zu Kommunikation mit der Banknote.

Das Ermitteln des aktuellen Nominalwerts durch das Terminal umfasst:
- Erfassen eines Identifikators, welcher die Blockchain-Adresse der Banknote eindeutig identifiziert, wobei es sich bei dem erfassten Identifikator um eine der folgenden Angaben handelt: die Seriennummer der Banknote, den öffentlichen kryptographischen Schlüssel der Banknote, die Blockchain-Adresse der Banknote,
- Senden einer Nachricht mit einer Blockchain-Abfrage nach dem aktuellen Nominalwert der Blockchain-Adresse der Banknote, wobei die Nachricht die Seriennummer der Banknote umfasst,
- Empfangen des aktuellen Nominalwerts der Blockchain-Adresse der Banknote.

Beispielsweise wird ferner unter Verwendung der Seriennummer der Banknote eine Blockchain der Mehrzahl von Blockchains bestimmt, welche demjenigen Bereich von Seriennummern zugeordnet ist, der die entsprechende Seriennummer umfasst. Beispielsweise wird die Nachricht mit der Blockchain-Abfrage an einen Blockchain-Server, welcher die bestimmte Blockchain verwaltet gesendet.

Beispielsweise umfasst das Verfahren ferner:
- Empfangen der Nachricht der Nachricht mit der Blockchain-Abfrage,
- Bestimmen unter Verwendung der Seriennummer der Banknote, welche die Nachricht umfasst, einer Blockchain der Mehrzahl von Blockchains, welche demjenigen Bereich von Seriennummern zugeordnet ist, welcher die entsprechende Seriennummer umfasst,
- Weiterleiten der Nachricht an einen Blockchain-Server, welcher die bestimmte Blockchain verwaltet, zum Bestimmen des aktuellen Nominalwerts der Blockchain-Adresse der Banknote.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass das Terminal anhand des Identifikators, etwa der Seriennummer, dem öffentlichen kryptographischen Schlüssel oder der Blockchain-Adresse selbst, den aktuellen Nominalwert der Banknote ermitteln kann. Hierzu umfasst die Banknote beispielsweise visuelle Angaben des entsprechenden Identifikators und/oder liest diesen aus dem Sicherheitselement aus. Eine Verwendung der Seriennummer kann den Vorteil haben, dass die Seriennummer unabhängig von einer Erzeugung des öffentlichen kryptographischen Schlüssels der Banknote und damit der Blockchain-Adresse der Banknote vorliegen kann. Somit kann die Seriennummer auf die Banknote aufgedruckt und/oder anderweitig in die Banknote eingebracht werden, bevor das asymmetrische kryptographische Schlüsselpaar der Banknote erzeugt wird. Dies ermöglicht es erst die Herstellung der Banknote abzuschließen und anschließend das asymmetrische kryptographische Schlüsselpaar der Banknote erzeugt. Andernfalls, wird beispielsweise vor oder zu Beginn der Herstellung der Banknote das asymmetrische kryptographische Schlüsselpaar der Banknote erzeugt von dem Sicherheitselement erzeugt und der öffentliche kryptographische Schlüssel und/oder die daraus abgeleitete Blockchain-Adresse zur Verwendung für die Herstellung der Banknote bereitgestellt. Beispielsweise wird der öffentliche kryptographische Schlüssel vor oder zu Beginn der Herstellung der Banknote von dem Sicherheitselement ausgegeben. Der ausgegebene öffentliche kryptographische Schlüssel wird beispielsweise der Seriennummer der herzustellenden Banknote zugeordnet, womit das Sicherheitsmodell der Seriennummer der herzustellenden Banknote zugeordnet wird.

Nach Ausführungsformen umfasst das Erfassen des Identifikators ein Lesen einer visuellen Angabe des Identifikators unter Verwendung eines Sensors des Terminals. Nach Ausführungsformen umfasst das Erfassen des Identifikators ein Empfangen des unter Verwendung der Kommunikationsschnittstelle der Banknote gesendeten Identifikators unter Verwendung der Kommunikationsschnittstelle des Terminals.

Beispielsweise erfolgt das Ermitteln des aktuellen Nominalwerts im Zuge eines bargeldbasierten Zahlungsvorgangs mit Übergabe der entsprechenden Banknote, um den tatsächlichen Wert und damit den tatsächlich bargeldbasiert übergebenen Geldbetrag zu bestimmen.

Nach Ausführungsformen handelt es sich bei dem empfangenen aktuellen Nominalwert der Banknote um einen aus dem Register, welches dem Bereich von Seriennummern mit der Seriennummer der Banknote zugeordnet ist, ausgelesenen Nominalwert der Blockchain-Adresse der Banknote. Das Register wird in regelmäßigen Intervallen geupdated und umfasst für die Blockchain-Adressen der zugehörigen Blockchain jeweils einen aktuellen Nominalwert umfasst, welcher sich aus den Bilanzen der in der zugehörigen Blockchain gespeicherten Transaktionen unter Verwendung der entsprechenden Blockchain-Adressen ergibt. Nach Ausführungsformen handelt es sich bei dem empfangenen aktuellen Nominalwert der Banknote um einen aus der Blockchain, welche dem Bereich von Seriennummern mit der Seriennummer der Banknote zugeordnet ist, ausgelesenen Nominalwert der Blockchain-Adresse der Banknote. Der ausgelesene aktuellen Nominalwert der Banknote ergibt sich dabei beispielsweise aus der Bilanz der in der entsprechenden Blockchain gespeicherten Transaktionen unter Beteiligung der Blockchain-Adresse der Banknote.

Nach Ausführungsformen handelt es sich bei der Banknote, deren aktueller Nominalwert ermittelt wird, um eine Banknote nach einer der zuvor beschriebenen Ausführungsformen.

Nach Ausführungsformen umfasst das Verfahren ferner ein Ersetzen einer Banknote. Die Banknote umfasst eine visuelle Angabe einer die Banknote eindeutig identifizierenden Seriennummer und eines der Banknote zugeordneten initialen Nominalwerts. Die Banknote umfasst die visuelle Angabe der Seriennummer mehrfach über die Banknote verteilt. Die Banknote umfasst eine Mehrzahl von über die Banknote verteilt angeordneten Sicherheitsmerkmalen: Die Banknote umfasst ein Sicherheitselement mit einem Prozessor und einem Speicher mit Programminstruktionen. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse der Banknote zugeordnet. Ferner weist die Banknote eine Beschädigung auf.

Das Ersetzen der Banknote durch die die beschädigte Banknote ausgebende Zentralbank umfasst:
- Prüfen eines Beschädigungsgrads der Banknote,
- falls der Beschädigungsgrads der Banknote einen vordefinierten zulässigen maximalen Beschädigungsgrad nicht überschreitet, Erfassen eines Identifikators, welcher die Blockchain-Adresse der beschädigten Banknote eindeutig identifiziert, wobei es sich bei dem erfassten Identifikator um eine der folgenden Angaben handelt: die Seriennummer der beschädigten Banknote, den öffentlichen kryptographischen Schlüssel der beschädigten Banknote, die Blockchain-Adresse der beschädigten Banknote,
- Initialisieren einer Sperrung der Blockchain-Adresse der Banknote unter Verwendung des erfassten Identifikators,
- Senden einer Nachricht mit einer Blockchain-Abfrage nach dem aktuellen Nominalwert der Blockchain-Adresse der beschädigten Banknote, wobei die Nachricht die Seriennummer der Banknote umfasst,
- Empfangen des aktuellen Nominalwerts der Blockchain-Adresse der beschädigten Banknote,
- Auszahlen des aktuellen Nominalwerts der beschädigten Banknote.

Beispielsweise wird ferner unter Verwendung der Seriennummer der Banknote eine Blockchain der Mehrzahl von Blockchains bestimmt, welche demjenigen Bereich von Seriennummern zugeordnet ist, der die entsprechende Seriennummer umfasst. Beispielsweise wird die Nachricht mit der Blockchain-Abfrage an einen Blockchain-Server, welcher die bestimmte Blockchain verwaltet gesendet.

Beispielsweise umfasst das Verfahren ferner:
- Empfangen der Nachricht der Nachricht mit der Blockchain-Abfrage,
- Bestimmen unter Verwendung der Seriennummer der Banknote, welche die Nachricht umfasst, einer Blockchain der Mehrzahl von Blockchains, welche demjenigen Bereich von Seriennummern zugeordnet ist, welcher die entsprechende Seriennummer umfasst,
- Weiterleiten der Nachricht an einen Blockchain-Server, welcher die bestimmte Blockchain verwaltet, zum Bestimmen des aktuellen Nominalwerts der Blockchain-Adresse der Banknote.

Ausführungsformen können den Vorteil haben, dass im Falle einer Beschädigung der tatsächliche Nominalwert der Banknote ersetzt werden kann. Dieser tatsächliche Nominalwert kann deutlich von dem initialen Nominalwert der Banknote und/oder einem Mindestnominalwert der Banknote abweichen. Nach Ausführungsformen ist dafür, dass der Beschädigungsgrads der Banknote einen vordefinierten zulässigen maximalen Beschädigungsgrad nicht überschreitet, erforderlich, dass mehr als 50% der Banknote vorliegen und/oder die Banknote ein oder mehrere für ein Ersetzen notwendige valide Sicherheitsmerkmale umfasst.

Nach Ausführungsformen handelt es sich bei der ersetzten Banknote um eine Banknote nach einer der zuvor beschriebenen Ausführungsformen. Nach Ausführungsformen wird die beschädigte Banknote einbehalten.

Nach Ausführungsformen umfasst das Auszahlen des aktuellen Nominalwerts der beschädigten Banknote ein Bereitstellen ein oder mehrerer Banknoten als Ersatz, deren aktuelle Nominalwerte in der Summe dem aktuellen Nominalwert der beschädigten Banknote entsprechen. Nach Ausführungsformen handelt es sich bei den ein oder mehreren Banknoten als Ersatz um Banknoten nach einer der zuvor beschriebenen Ausführungsformen. Nach Ausführungsformen umfasst das Auszahlen des aktuellen Nominalwerts der beschädigten Banknote ein Eintragen einer Transaktion eines Betrags in Höhe des aktuellen Nominalwerts von einer Blockchain-Adresse der die beschädigte Banknote ausgebenden Zentralbank an eine von einem Besitzer der beschädigten Banknote angegebenen Blockchain-Adresse. Beispielsweise ist die angegebene Blockchain-Adresse einer anderen Banknote des Besitzers, d.h. Eigentümers, der beschädigten Banknoten, dem Besitzer der beschädigten Banknote persönlich oder einer anderen von dem Besitzer der beschädigten Banknoten gewählten Institution zugeordnet.

Nach Ausführungsformen umfasst die Beschädigung eine Beschädigung des Sicherheitselements, sodass das Sicherheitselement keine signierten Transaktionsfreigaben mehr bereitstellen kann. Beispielsweise ist der Prozessor, der Speicher und/oder eine Kommunikationsschnittstelle des Sicherheitselements beschädigt. Beispielsweise fehlt das Sicherheitselement.

Nach Ausführungsformen ist die Mehrzahl von Angaben des Identifikators derart über die Banknote verteilt, dass sichergestellt werden kann, dass der Identifikator und damit die Blockchain-Adresse der Banknote ermittelt werden kann, solange mehr als 50% der Banknote vorliegen. Nach Ausführungsformen ist die Mehrzahl von Sicherheitselementen derart über die Banknote verteilt, dass sichergestellt werden kann, dass für ein Ersetzen notwendige valide Sicherheitsmerkmale vorliegen, solange mehr als 50% der Banknote unbeschädigt vorliegen.

Nach Ausführungsformen umfasst das Ersetzen der Banknote durch die die beschädigte Banknote ausgebende Zentralbank ferner einen Sperreintrag in die Blockchain, welche dem Bereich von Seriennummern mit der Seriennummer der zu ersetzenden Banknote zugeordnet ist, durch die die Blockchain verwaltende und die Banknote ausgebende Zentralbank. Beispielsweise wird ein entsprechender Speereintrag in alle Blockchains der Mehrzahl von Blockchains eingetragen. Durch den Sperreintrag wird die entsprechende Blockchain-Adresse gesperrt. Der Sperreintrag zeigt beispielsweise an, dass die Blockchain-Adresse der Banknote ungültig ist. Im Falle eines Sperreintrag für die Blockchain-Adresse der Banknote durch die Zentralbank kann beispielweise sichergestellt werden, dass kein Geld von der ungültigen Blockchain-Adresse auf eine andere Blockchain-Adresse transferiert werden kann, d.h. dass keine Zahlungen gesendet werden können, und/oder dass kein Geld von einer anderen Blockchain-Adresse an die ungültige Blockchain-Adresse transferiert werden kann, d.h. dass keine Zahlungen empfangen werden können.

Ausführungsformen könnten den Vorteil haben, dass bei einem Ersetzen der Banknote nicht der Prozessor und/oder das Sicherheitselement der beschädigten Banknote zurückgehalten und mit diesem nach dem Auszahlen des (letzten) aktuellen Nominalwerts der beschädigten Banknote weiterhin Zahlungen getätigt, d.h. signierte Transaktionsbestätigungen ausgegeben werden können. Ferner kann beispielsweise verhindert werden, dass versehentlich Zahlungen an die Blockchain-Adresse der beschädigten Bankknote erfolgen, nachdem der (letzte) aktuellen Nominalwert bereits ausgezahlt und die beschädigte Banknote einbehalten wurde. In diesem Fall gebe es beispielsweise keine Möglichkeit mehr an das versehentlich transferierte Geld zu gelangen.

Beispielsweise wird bei einer Transaktion von einer Blockchain-Adresse einer Banknote als Voraussetzung zum Ausführen der Transaktion geprüft, ob die entsprechende Blockchain-Adresse gesperrt ist. Falls die Blockchain-Adresse nicht gesperrt ist, wird die Transaktion ausgeführt, d.h. in die für die Seriennummer der zahlenden Banknote zuständige Blockchain eingetragen. Falls die Blockchain-Adresse gesperrt ist, wird die Transaktion nicht ausgeführt, d.h. nicht in die entsprechende Blockchain eingetragen.

Beispielsweise wird bei einer Transaktion an eine Blockchain-Adresse einer Banknote als Voraussetzung zum Ausführen der Transaktion geprüft, ob die entsprechende Blockchain-Adresse gesperrt ist. Falls die Blockchain-Adresse nicht gesperrt ist, wird die Transaktion ausgeführt, d.h. in die für die Seriennummer der zahlenden Banknote zuständige Blockchain eingetragen. Falls die Blockchain-Adresse gesperrt ist, wird die Transaktion nicht ausgeführt, d.h. nicht in die entsprechende Blockchain eingetragen. Dasselbe gilt beispielsweise für einen zusätzlichen Eintrag der Transaktion in die für die Seriennummer der empfangenden Banknote zuständige Blockchain.

Im Weiteren werden Ausführungsformen der Erfindung mit Bezugnahme auf die Zeichnungen näher erläutert. Es zeigen:
- Figuren 1: schematische Blockdiagramme von exemplarischen Banknoten,
- Figur 2: ein schematisches Blockdiagramm eines exemplarischen Systems mit einer exemplarischen Banknote,
- Figur 3: ein schematisches Flussdiagramm eines exemplarischen Verfahrens zum Ausstellen von Banknoten,
- Figur 4: ein schematisches Flussdiagramm eines exemplarischen Verfahrens zur Zahlungsabwicklung mit einem Terminal,
- Figur 5: ein schematisches Flussdiagramm eines exemplarischen Verfahrens zum Ermitteln eines aktuellen Nominalwerts,
- Figur 6: ein schematisches Flussdiagramm eines exemplarischen Verfahrens zur Zahlungsabwicklung mit einem mobilen tragbaren Kommunikationsgerät,
- Figur 7: ein schematisches Flussdiagramm eines exemplarischen Verfahrens zum Ersetzen einer Banknote,
- Figur 8: ein schematisches Flussdiagramm eines exemplarischen Verfahrens zum Verwenden einer Banknote,
- Figur 9: ein schematisches Flussdiagramm eines exemplarischen Verfahrens zum Ausstellen einer Banknote,
- Figur 10: ein schematisches Flussdiagramm eines exemplarischen Verfahrens zur Zahlungsabwicklung mit einem Terminal,
- Figur 11: ein schematisches Flussdiagramm eines exemplarischen Verfahrens zur Zahlungsabwicklung mit einer Mehrzahl von Banknoten,
- Figur 12: ein schematisches Flussdiagramm eines exemplarischen Verfahrens zum Ermitteln eines aktuellen Nominalwerts,
- Figur 13: ein schematisches Flussdiagramm eines exemplarischen Verfahrens zum Ersetzen einer Banknote und
- Figur 14: ein schematisches Flussdiagramm eines exemplarischen Verfahrens zum Weiterleiten einer Transaktionsfreigabe,
- Figur 15: ein schematisches Flussdiagramm eines exemplarischen Verfahrens zum Aufteilen der Blockchain,
- Figur 16: ein schematisches Flussdiagramm eines exemplarischen Verfahrens zum Ableiten eines privaten kryptographischen Schlüssels,
- Figur 17: ein schematisches Flussdiagramm eines exemplarischen Verfahrens zum Ableiten eines privaten kryptographischen Schlüssels,
- Figur 18: ein schematisches Flussdiagramm eines exemplarischen Verfahrens zum Ableiten eines privaten kryptographischen Schlüssels,
- Figur 19: ein schematisches Flussdiagramm eines exemplarischen Verfahrens zum Ableiten eines privaten kryptographischen Schlüssels.

Elemente der nachfolgenden Ausführungsformen, die einander entsprechen, werden mit denselben Bezugszeichen gekennzeichnet.

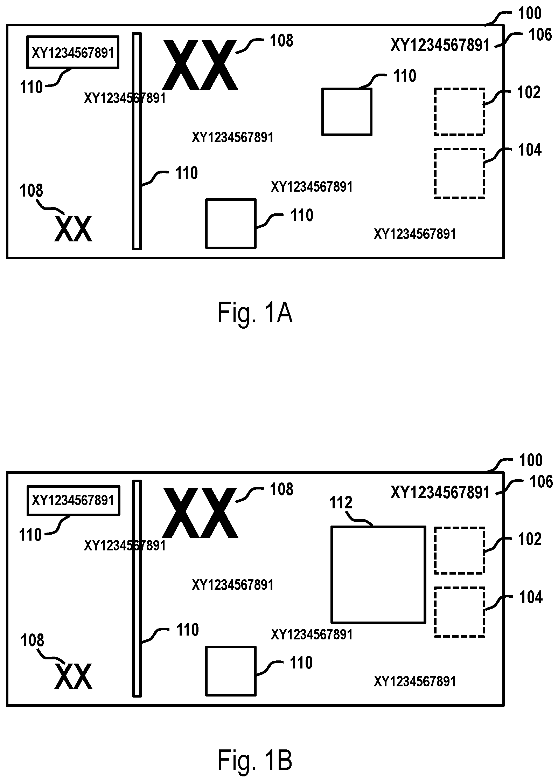

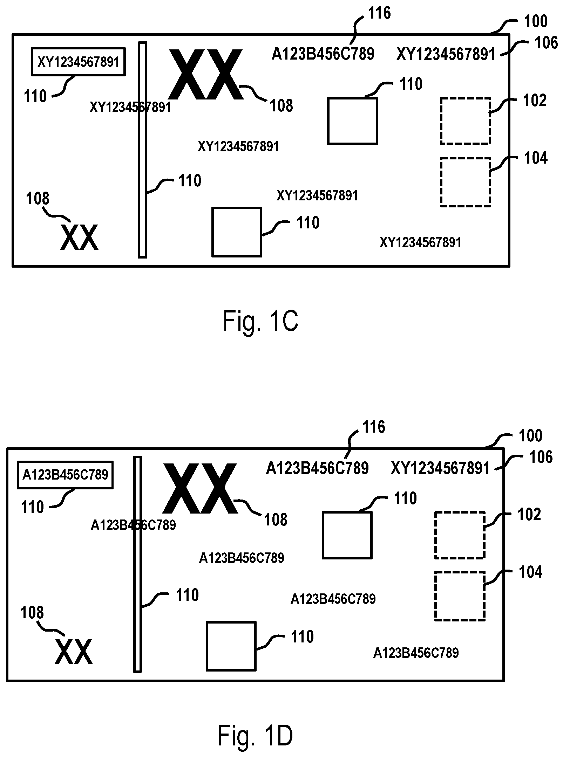

Figuren 1, d.h. Figuren 1A bis 1D, zeigen exemplarische mobile tragbare Endgeräte in Form von Banknoten 100. Die in Figur 1A gezeigte Banknote 100 umfasst eine Mehrzahl von Sicherheitsmerkmalen 110, welche die Authentizität und Validität der Banknote 100 belegen. Die Sicherheitsmerkmale 110 sind über die Banknote 100 verteilt angeordnet. Beispielsweise sind die Sicherheitsmerkmale 110 so über die Banknote 100 verteilt angeordnet, dass solange mehr als 50% der Banknote in unbeschädigtem Zustand vorliegen, die Authentizität und Validität der Banknote 100 nachgewiesen werden kann. Die Banknote 100 umfasst ferner eine visuelle Angabe der Seriennummer 106 der Banknote 100, welche beispielsweise auf die Banknote 100 aufgedruckt ist. Beispielsweise umfasst die Banknote 100 eine Mehrzahl von visuellen Angaben der Seriennummer 106, welche über die Banknote 100 verteilt angeordnet sind, etwa in Mikroschrift. Beispielsweise ist die Seriennummer 106 so über die Banknote 100 verteilt angeordnet, dass solange mehr als 50% der Banknote in unbeschädigtem Zustand vorliegen, die Seriennummer 106 der Banknote 100 bestimmt werden kann. Die Seriennummer 106 der Banknote 100 ist beispielsweise einem öffentlichen kryptographischen Schlüssel, aus welchem die Blockchain-Adresse der Banknote 100 ableitbar ist, und/oder einer Blockchain-Adresse der Banknote 100 zugeordnet. So kann unter Verwendung der Seriennummer 106 der Banknote 100 beispielsweise öffentlichen kryptographischen Schlüssel, aus welchem die Blockchain-Adresse der Banknote 100 ableitbar ist, und/oder einer Blockchain-Adresse der Banknote 100 bestimmt werden.

Ferner umfasst die Banknote ein oder mehrere visuelle Angaben eines initialen Nominalwerts 108 der Banknote 100. Bei dem initialen Nominalwerts 108 handelt es sich beispielsweise um einen Mindestnominalwert der Banknote 100. Beispielsweise umfasst die Banknote 100 ein oder mehrere visuelle Angaben eines von dem initialen Nominalwert 108 verschiedenen Mindestnominalwerts zusätzlich zu der Angabe des initialen Nominalwerts 108. Beispielsweise umfasst die Banknote 100 die ein oder mehreren visuellen Angaben des Mindestnominalwerts anstelle von visuellen Angaben eines von dem Mindestnominalwert verschiedenen initialen Nominalwert 108. Zusätzlich umfasst die Banknote ein Sicherheitselement 102 mit einem Prozessor und einem Speicher. In einem geschützten Speicherbereich des Speichers ist ein privater kryptographischer Schlüssel zum Signieren von Transaktionsfreigaben, d.h. zum Freigeben bzw. Autorisieren von Transaktion von einer der Banknote 100 zugeordneten Blockchain-Adresse gespeichert. Ferner umfasst die Banknote 100 eine Kommunikationsschnittstelle 104 zum Kommunizieren mit einem Terminal, insbesondere zu einem kontaktlosen Kommunizieren. Über die Kommunikationsschnittstelle 104 empfängt die Banknote 100 beispielsweise Zahlungsanfragen und sendet beispielsweise signierte Transaktionsfreigaben.

Figur 1B zeigt eine exemplarische Banknote 100, welche der exemplarischen Banknote 100 aus Figur 1A entspricht. Zusätzlich umfasst die Banknote 100 in Figur 1B eine Nutzerschnittstelle 112. Die Nutzerschnittstelle 112 umfasst beispielsweise eine Eingabe- und/oder eine Ausgabevorrichtung der Banknote 100. Beispielsweise umfasst die Nutzerschnittstelle 112 ein Touchpad zur Eingabe von Daten, etwa Transaktionsdaten, in die Banknote 100 und/oder ein Display zur Anzeige von Daten, etwa Transaktionsdaten, welche die Banknote 100 verarbeiten soll oder verarbeitet hat. Beispielsweise umfasst die Nutzerschnittstelle 112 ein Touch-Display, mit welchem sowohl Daten von dem Nutzer eingegeben werden können, als auch dem Nutzer Daten angezeigt werden können.

Figur 1C zeigt eine exemplarische Banknote 100, welche der exemplarischen Banknote 100 aus Figur 1A entspricht. Zusätzlich umfasst die Banknote 100 in Figur 1C zusätzlich zu der visuellen Angabe der Seriennummer 106 eine visuelle Angabe, welche die Blockchain-Adresse der Banknote 100 identifiziert. Bei der zusätzlichen Angabe handelt es sich beispielsweise um einen öffentlichen kryptographischen Schlüssel 116, aus welchem die Blockchain-Adresse der Banknote 100 ableitbar ist, und/oder um die Blockchain-Adresse der Banknote 100. Figur 1D zeigt eine exemplarische Banknote 100, welche der exemplarischen Banknote 100 aus Figur 1C entspricht. Im Fall der Banknote in Figur 1D umfasst die Banknote 100 eine Mehrzahl von zusätzlichen visuellen Angaben, welche eine Blockchain-Adresse der Banknote 100 identifizieren, wie etwa den öffentlichen kryptographischen Schlüssel 116. Diese zusätzlichen visuellen Angaben sind beispielsweise über die Banknote 100 verteilt angeordnet, etwa in Mikroschrift. Beispielsweise sind die zusätzlichen visuellen Angaben so über die Banknote 100 verteilt angeordnet, dass solange mehr als 50% der Banknote in unbeschädigtem Zustand vorliegen, die Blockchain-Adresse der Banknote 100 identifiziert werden kann.

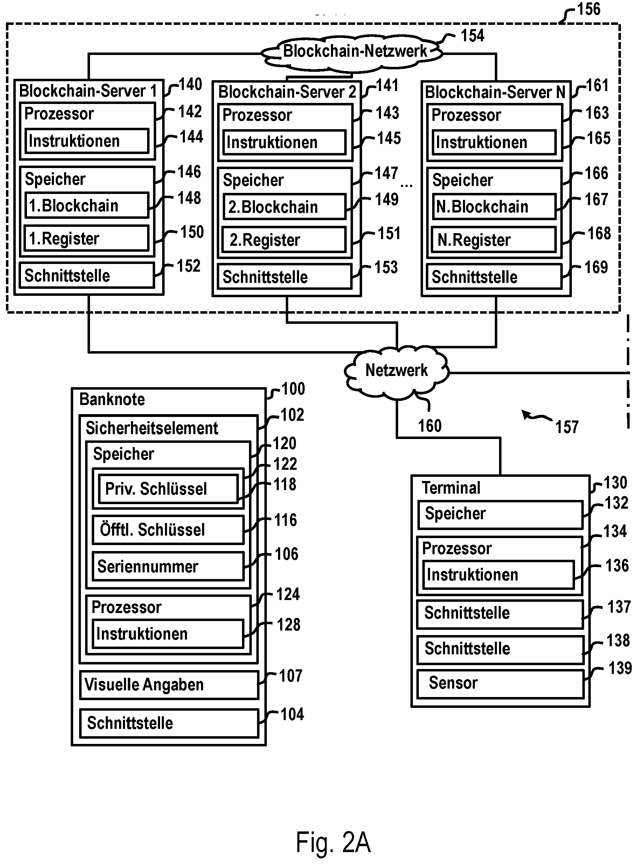

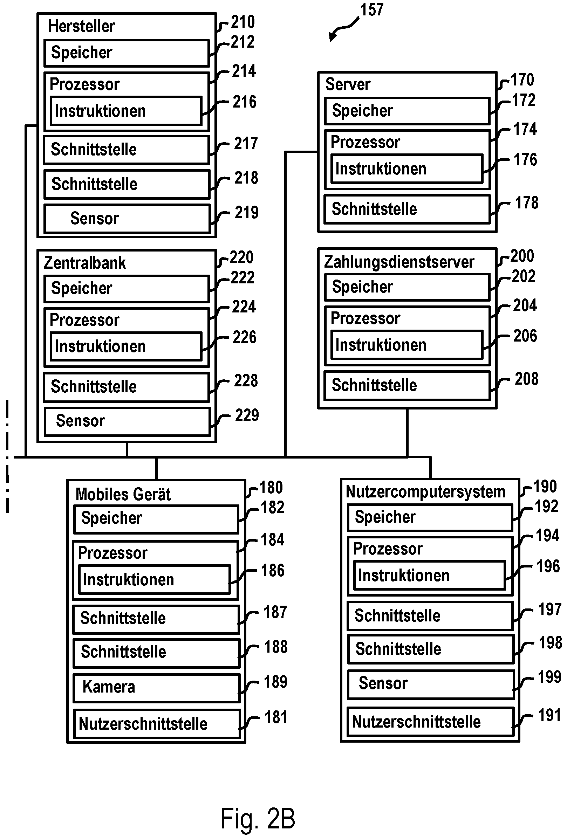

Figur 2 zeigt ein exemplarisches System 157 mit einem exemplarischen mobilen tragbaren Endgerät in Form einer Banknote 100. Die Banknote 100 umfasst ein Sicherheitselement 102 mit einem Prozessor 124 und einem Speicher 120. Der Prozessor 124 für Programminstruktionen 128 aus. Diese Programminstruktionen 128 umfassen beispielsweise kryptographische Programminstruktionen zum Erzeugen eines asymmetrischen Schlüsselpaars 116, 118 der Banknote 100 und zum Signieren von Transaktionsfreigaben mit einem privaten kryptographischen Schlüssel 118 des asymmetrischen Schlüsselpaars. Ferner können die kryptographischen Programminstruktionen beispielsweise dazu konfiguriert sein, aus dem öffentlichen kryptographischen Schlüssel 116 eine Blockchain-Adresse der Banknote 110 abzuleiten. In dem Speicher 120 ist der öffentliche kryptographische Schlüssel 116 des asymmetrischen Schlüsselpaars gespeichert. Ferner ist in dem Speicher 120 beispielsweise die Seriennummer der106 der Banknote 100 gespeichert. In einem geschützten Speicherbereich 122 des Speichers 120 ist der privaten kryptographischen Schlüssel 118 des asymmetrischen Schlüsselpaars gespeichert. Ferner umfasst die Banknote 100 beispielsweise eine Kommunikationsschnittstelle 104 zur Kommunikation mit externen Geräten, wie etwa einer einem Terminal 130. Die Kommunikationsschnittstelle 104 ist beispielsweise für eine kontaktlose Kommunikation konfiguriert. Zusätzlich umfasst die Banknote 100 visuelle Angaben 107, etwa der Seriennummer 106 und/oder des öffentlichen kryptographischen Schlüssels 116. Ferner kann die Banknote 100 beispielsweise ferner eine Nutzerschnittstelle mit einer Eingabe- und/oder Ausgabevorrichtung zum Eingeben und/oder Anzeigen von Daten umfassen, wie etwa Transaktionsdaten.

Die Banknote 100 kommuniziert unter Verwendung der Kommunikationsschnittstelle 104 beispielsweise mit einem Terminal 130. Das Terminal 130 ist beispielsweise ein Zahlungsterminal eines PoS. Das Terminal 130 umfasst einen Prozessor 134 zum Ausführen von Programminstruktionen 136 und einen Speicher 132. Ferner umfasst das Terminal 130 eine Kommunikationsschnittstelle 137 zur Kommunikation mit der Banknote 100. Zusätzlich umfasst das Terminal 130 eine Kommunikationsschnittstelle 139 zur Kommunikation über ein Netzwerk 160, wie etwa das Internet. Das Terminal 130 ist beispielsweise zu einer Zahlungsabwicklung mit der Banknote 100 konfiguriert. Hierzu sendet das Terminal 130 beispielsweise eine Zahlungsanfrage an die Banknote 100 und empfängt eine Nachricht mit einer signierten Transaktionsfreigabe von der Banknote 100, welche das Terminal 130 über das Netzwerk 160 an einen für die Seriennummer 106 der entsprechenden Banknote 100 zuständigen Blockchain-Server 140, 141 161 des Blockchain-Systems 156 zur Eintragung der durch die signierte Transaktionsfreigabe autorisierten Transaktion in eine von dem entsprechen Blockchain-Server 140, 141 161 verwaltete Blockchain 148, 149, 167 weiterleitet. Zum Bestimmen der zuständigen Blockchain 148, 149, 167 und damit des zuständigen Blockchain-Servers 140, 141 161 wird die von der Nachricht umfasste Seriennummer 106 der Banknote 100 verwendet. Die Blockchain-Server 140, 141 161 gehören beispielsweise zu einem Blockchain-Netzwerk 154 des Blockchain-Systems 156. Ferner kann das Terminal beispielsweise Sensor 139 umfassen. Der Sensor 139 ist beispielsweise dazu konfiguriert visuelle Angabe 107 der Banknote 100 zu erfassen, wie etwa die Seriennummer 106 und/oder den öffentlichen kryptographischen Schlüssel 116. Ferner kann der Sensor 139 beispielsweise zum Erfassen von Sicherheitsmerkmalen der Banknote 100 konfiguriert sein, um deren Authentizität und Validität zu prüfen. In dem Speicher 132 ist beispielsweise eine Blockchain-Adresse gespeichert, welche das Terminal 130 als Empfängeradresse zum Empfangen von Zahlungen verwendet.

Das Terminal 130 kommuniziert beispielsweise über einen Remoteserver 170 mit den Blockchain-Servern 140, 141. Der Server 170 umfasst beispielsweise einen Speicher 172, einen Prozessor 174 zum Ausführen von Programminstruktionen 176 und eine Kommunikationsschnittstelle 178 zur Kommunikation über das Netzwerk 160. Beispielsweise stellt der Server 170 dem Terminal 130 die als Empfängeradresse zu verwendende Blockchain-Adresse zur Verfügung. Beispielsweise leitet der Server 170 über das Terminal 130 empfangene signierte Transaktionsfreigaben an die Blockchain-Servern 140, 141 weiter. Beispielsweise leitet der Server 170 von den Blockchain-Servern 140, 141 empfangene Transaktionsbestätigungen und/oder Eintragungsbestätigungen an das Terminal 130 weiter.

Das System 157 umfasst ferner ein Blockchain-System 156. Das Blockchain-System 156 umfasst eine Mehrzahl von Blockchains 148, 149, 167. Jeder der Blockchains 148, 149, 167 sind jeweils ein oder mehrere Blockchain-Server 140, 141, 161 zugeordnet, welche die entsprechende Blockchain 148, 149, 167 verwalten. Jeder Banknote 100 einer Mehrzahl von ausgegebenen Banknoten ist jeweils eine Seriennummer 106 aus einem Raum von Seriennummern zugeordnet. Der Raum von Seriennummern ist unterteilt in eine Mehrzahl von Bereichen von Seriennummern. Jedem der Bereiche von Seriennummern ist jeweils eine der Blockchains 148, 149, 167des Blockchain-Systems 156 zugeordnet, welche Zahlungen von banknotenindividuellen Blockchain-Adressen protokolliert, welche Banknoten mit Seriennummern aus dem entsprechenden Bereich von Seriennummern zugeordnet sind.

Die Blockchain-Server 140, 141, 161 sind beispielsweise Teil eines Blockchain-Netzwerks 154 bzw. bilden Blockchain-Knoten eines Blockchain-Netzwerks 154. Die Blockchain-Server 140, 141, 161 und/oder das Blockchain-Netzwerks 154 werden beispielsweise von einer die Banknote ausgebenden Zentralbank verwaltet. Handelt es sich bei der Zentralbank um eine Zentralbank, welcher mehrere Länder angehören, umfasst das Blockchain-Netzwerks 154 beispielsweise ein oder mehrere Blockchain-Server 140, 141, 161 pro Land. Beispielsweise sind die Blockchain-Server 140, 141 und/oder das Blockchain-Netzwerks 154 von einem Blockchain-System 156 umfasst, welches beispielsweise von einer zuständigen Zentralbank verwaltet wird. Der Blockchain-Server 140 umfasst beispielsweise einen Speicher, einen Prozessor 142 zum Ausführen von Programminstruktionen 144 und eine Kommunikationsschnittstelle 152 zur Kommunikation über das Netzwerk 160. In dem Speicher 146 ist beispielsweise eine Kopie der Blockchain 148 und/oder ein Register 150 gespeichert, welches der entsprechende Blockchain-Server 140 verwaltet. Bei dem Register 150 handelt es sich beispielsweise um ein in regelmäßigen Intervallen geupdatetes Register, welches für die Blockchain-Adressen der zugehörigen Blockchain 148 jeweils einen aktuellen Nominalwert umfasst. Die aktuellen Nominalwerte werden aus den Bilanzen der in der Blockchain 148 gespeicherten Transaktionen für die entsprechenden Blockchain-Adressen berechnet. Das Register 150 stellt beispielsweise eine "Fast Blockchain" bereit, in welcher die vorberechneten Bilanzergebnisse für die Blockchain-Adressen als aktuelle Nominalwerte der entsprechenden Blockchain-Adressen bereitgestellt werden. Eine Verwendung eines solchen Registers 150 kann den Vorteil haben, dass aktuelle Nominalwerte schneller bestimmt werden können, da diese bereits vorliegen und nicht erst berechnet werden müssen. Das Register 150 kann beispielsweise von einer virtuellen Maschine (VM) des Blockchain-Servers 140 verwaltet werden.

Der Blockchain-Server 140 kann dazu konfiguriert sein, auf Anfrage der Zentralbank Banknoten bzw. Blockchain-Adressen von Banknoten mit Seriennummern, welche in den der Blockchain 148 zugeordneten Bereich von Seriennummern fallen, in der Blockchain 148 zu registrieren und/oder zu sperren. Der Blockchain-Server 140 kann dazu konfiguriert, auf Anfrage Auskunft über aktuelle Nominalwerte von Banknoten gemäß den in der Blockchain 148 gespeicherten Transaktionen unter Verwendung der Blockchain-Adressen der entsprechenden Banknoten zu erteilen. Beispielsweise verwendet der Blockchain-Server 140 zum Erteilen entsprechender Auskünfte das zugehörige Register 150. Das Blockchain-System 156 umfasst für die weiteren Blockchains 149, 167 jeweils ein oder mehrere weitere Blockchain-Server 141, 161, welche die weiteren Blockchains 149, 167 verwalten. Die Blockchain-Server 141, 161 umfassen beispielsweise jeweils einen Speicher 147, 166, einen Prozessor 143, 163 zum Ausführen von Programminstruktionen 145 und eine Kommunikationsschnittstelle 153, 169 zur Kommunikation über das Netzwerk 160. In den Speichern 147, 166 ist beispielsweise jeweils eine Kopie der von den entsprechenden Blockchain-Servern 141, 161 jeweils verwalteten Blockchain 149, 167 gespeichert. Ferner ist in den Speichern 147, 166 beispielsweise jeweils eine Kopie eines zu der entsprechenden von dem jeweiligen Blockchain-Server 141, 161 verwalteten Blockchain 149, 167 gehörendes Register 151, 168 gespeichert. Die Blockchain-Server 141, 161 sind beispielsweise dazu konfiguriert, auf Anfrage der Zentralbank Banknoten bzw. Blockchain-Adressen von Banknoten mit Seriennummern, welche in den der jeweiligen Blockchain 149, 167 zugeordneten Bereich von Seriennummern fallen, in der entsprechenden Blockchain 149, 167 zu registrieren und/oder zu sperren.

Anstelle des Terminals 130 kann zur Zahlungsabwicklung auch ein mobiles tragbares Kommunikationsgerät 180 oder ein Nutzercomputersystem 190, etwa zur Zahlungsabwicklung über das Internet, verwendet werden. Dabei kann das mobile Kommunikationsgerät 180 oder der Nutzercomputersystem 190 beispielsweise als lokaler PoS dienen. Beispielsweise erfolgt die Zahlungsabwicklung unter Verwendung des Remoteserver 170. Beispielsweise erfolgt die Zahlungsabwicklung unter Verwendung eines Servers 200 eines Zahlungsdienstanbieters bzw. eines Finanzdienstleisters.

Das mobile Kommunikationsgerät 180, etwa ein Smartphone, umfasst beispielsweise einen Speicher 182 und einen Prozessor 184 zum Ausführen von Programinstruktionen 186. Ferner umfasst das mobile Kommunikationsgerät 180 beispielsweise eine Kommunikationsschnittstelle 187 zur Kommunikation mit der Banknote 100 sowie eine Kommunikationsschnittstelle 188 zur Kommunikation über das Netzwerk 160. Beispielsweise umfasst das mobile Kommunikationsgerät 180 eine Kamera zum Erfassen von visuellen Angaben 107 der Banknote 100, wie etwa der Seriennummer 106 oder den öffentlichen kryptographischen Schlüssel 116 der Banknote 100. Das mobile Kommunikationsgerät 180 ist beispielsweise dazu konfiguriert eine Zahlungsanfrage, etwa von dem Server 170 oder dem Zahlungsdienstserver 200, an die Banknote 100 und eine von der Banknote 100 signierte Transaktionsfreigabe an den Server 170 oder den Zahlungsdienstserver 200 weiterzuleiten. Beispielsweise ist das mobile Kommunikationsgerät 180 ferner dazu konfiguriert, etwa unter Verwendung der Kamera 189, die Blockchain-Adresse der Banknote 100 zu ermitteln und die Zahlungsanfrage an die Banknote 100 um die Blockchain-Adresse als Ausgangsadresse der Zahlung zu ergänzen. Ferner kann das mobile Kommunikationsgerät 180 dazu konfiguriert sein, direkt oder unter Vermittlung eines Servers wie dem Server 170 oder dem Zahlungsdienstserver 200 den aktuellen Nominalwert der Banknote 100 gemäß der für die Seriennummer 106 der entsprechenden Banknote 100 zuständigen Blockchain 148 zu ermitteln und einem Nutzer unter Verwendung einer Nutzerschnittstelle 181 anzuzeigen. Die Nutzerschnittstelle 181 umfasst beispielsweise eine Eingabe- und eine Ausgabevorrichtung zur Kommunikation des Nutzers mit dem mobilen Kommunikationsgerät 180. Die Eingabevorrichtung umfasst beispielsweise eine Tastatur. Die Ausgabevorrichtung umfasst beispielsweise ein Display. Beispielsweise sind Eingabe- und Ausgabevorrichtung in Form eines Touch-Displays miteinander kombiniert.

Das Nutzercomputersystem 190 umfasst beispielsweise einen Speicher 192 und einen Prozessor 194 zum Ausführen von Programinstruktionen 196. Ferner umfasst das Nutzercomputersystem 190 beispielsweise eine Kommunikationsschnittstelle 197 zur Kommunikation mit der Banknote 100 sowie eine Kommunikationsschnittstelle 198 zur Kommunikation über das Netzwerk 160. Beispielsweise umfasst das Nutzercomputersystem 190 einen Sensor, wie etwa eine Kamera, zum Erfassen von visuellen Angaben 107 der Banknote 100, wie etwa der Seriennummer 106 oder den öffentlichen kryptographischen Schlüssel 116 der Banknote 100. Das Nutzercomputersystem 190 ist beispielsweise dazu konfiguriert eine Zahlungsanfrage, etwa von dem Server 170 oder dem Zahlungsdienstserver 200, an die Banknote 100 und eine von der Banknote signierte Transaktionsfreigabe an den Server 170 oder den Zahlungsdienstserver 200 weiterzuleiten. Beispielsweise ist das Nutzercomputersystem 190 ferner dazu konfiguriert, etwa unter Verwendung des Sensors 199, die Blockchain-Adresse der Banknote 100 zu ermitteln und die Zahlungsanfrage an die Banknote 100 um die Blockchain-Adresse als Ausgangsadresse der Zahlung zu ergänzen. Ferner kann das Nutzercomputersystem 190 dazu konfiguriert sein, direkt oder unter Vermittlung eines Servers wie dem Server 170 oder dem Zahlungsdienstserver 200 den aktuellen Nominalwert der Banknote 100 gemäß der für die Seriennummer 106 der entsprechenden Banknote 100 zuständigen Blockchain 148 zu ermitteln und einem Nutzer unter Verwendung einer Nutzerschnittstelle 191 anzuzeigen. Die Nutzerschnittstelle 191 umfasst beispielsweise eine Eingabe- und eine Ausgabevorrichtung zur Kommunikation des Nutzers mit dem mobilen Kommunikationsgerät 190. Die Eingabevorrichtung umfasst beispielsweise eine Tastatur und/oder Maus. Die Ausgabevorrichtung umfasst beispielsweise ein Display. Beispielsweise sind Eingabe- und Ausgabevorrichtung in Form eines Touch-Displays miteinander kombiniert.

Der Server 200 des Zahlungsdienstanbieters ist beispielsweise dazu konfiguriert eine Zahlungsabwicklung unter Verwendung der Banknote 100 und einem lokalen Gerät zur Kommunikation mit der Banknote 100, wie etwa dem mobilen Kommunikationsgerät 180 oder dem Nutzercomputersystem 190, zu ermöglichen. Der Zahlungsdienstserver 200 umfasst beispielsweise einen Speicher 202, einen Prozessor 204 zum Ausführen von Programminstruktionen 206 und eine Kommunikationsschnittstelle 208 zur Kommunikation über das Netzwerk 160. Beispielsweise stellt der Zahlungsdienstserver 200 dem lokalen Gerät Transaktionsdaten einer auszuführenden Transaktion, wie etwa eine als Empfängeradresse zu verwendende Blockchain-Adresse und/oder Angaben zu dem zu zahlenden Betrag zur Verfügung. Beispielsweise leitet der Zahlungsdienstserver 200 über das lokale Gerät empfangene signierte Transaktionsfreigaben an die Blockchain-Servern 140, 141 weiter. Beispielsweise leitet der Zahlungsdienstserver 200 von den Blockchain-Servern 140, 141 empfangene Transaktionsbestätigungen und/oder Eintragungsbestätigungen an das lokale Gerät weiter.

Das System 157 umfasst beispielsweise ein Herstellercomputersystem 210, welches im Zuge der Herstellung der Banknote 100 zum Einsatz kommt. Das Herstellercomputersystem 210 umfasst beispielsweise einen Speicher 212 und einen Prozessor 214 zum Ausführen von Programminstruktionen 216. Ferner umfasst das Herstellercomputersystem 210 beispielsweise eine Kommunikationsschnittstelle 221 zur Kommunikation mit der Banknote 100. Beispielsweise liest das Herstellercomputersystem 210 unter Verwendung der Kommunikationsschnittstelle 217 den öffentlichen kryptographischen Schlüssel 116 der Banknote 100 aus. Beispielsweise sendet das Herstellercomputersystem 210 unter Verwendung der Kommunikationsschnittstelle 217 Daten zur Speicherung an die Banknote 100, wie etwa die Seriennummer 106 der Banknote 100. Ferner umfasst das Herstellercomputersystem 210 beispielsweise einen Sensor 219 zum Prüfen der Banknote 100. Unter Verwendung des Sensor 219 wird beispielsweise eine Qualitätskontrolle der Banknote 100 durchgeführt. Besteht die Banknote 100 die Qualitätskontrolle wird beispielsweise eine Herstellungsbestätigung von dem Herstellercomputersystem 210 unter Verwendung einer Kommunikationsschnittstelle 218 zur Kommunikation mit einem Computersystem der Zentralbank, wie etwa dem Zentralbankcomputersystem 220, an die Zentralbank gesendet. Die Herstellungsbestätigung umfasst beispielsweise die Seriennummer 106 und/oder den öffentlichen kryptographischen Schlüssel 116 der Banknote 100 zur Initialisierung der Banknote 100 in der für die Seriennummer 106 der entsprechenden Banknote 100 zuständigen Blockchain 148.

Das System 157 umfasst ferner beispielsweise ein Zentralbankcomputersystem 220 mit einem Speicher 222 und einem Prozessor 224 zum Ausführen von Programminstruktionen 226. Ferner umfasst das Zentralbankcomputersystem 220 beispielsweise eine Kommunikationsschnittstelle 228 zur Kommunikation mit dem Herstellercomputersystem 210 und/oder mit den Blockchain-Servern 140, 141, beispielsweise über das Netzwerk 160. Das Zentralbankcomputersystem 220 ist beispielsweise dazu konfiguriert Banknoten bzw. Blockchain-Adressen von Banknoten in der für die Seriennummern der entsprechenden Banknoten zuständigen Blockchains 148, 149, 167 zu registrieren und/oder zu sperren. Mit anderen Worten ist das Zentralbankcomputersystem 220 beispielsweise dazu konfiguriert eine Initialisierungsanfrage und/oder eine Sperranfrage zum Initialisieren bzw. Sperren der Banknote 100 an einen der Blockchain-Servern 140, 141 zu senden. Zum Erstellen der Initialisierungsanfrage verwendet das Zentralbankcomputersystem 220 beispielsweise Daten, welche das Herstellercomputersystem in Form der Herstellungsbestätigung zur Verfügung stellt. Ferner kann das Zentralbankcomputersystem 220 beispielsweise einen Sensor umfassen zum Prüfen von Sicherheitsmerkmalen einer beschädigten Banknote. Falls die Prüfung der Sicherheitsmerkmalen sowie des Beschädigungsgrads der Banknote ergibt, dass es sich um eine valide Banknote handelt, ersetzt die Zentralbank die beschädigte Banknote. Hierzu ermittelt das Zentralbankcomputersystem 220 beispielsweise den aktuellen Nominalwert der beschädigten Banknote unter Verwendung einer entsprechenden Anfrage an einen der Blockchain-Servern 140, 141, zahlt den aktuellen Nominalwert aus und sendet eine Sperranfrage zum Sperren der Blockchain-Adresse der beschädigten Banknote an einen der Blockchain-Servern 140, 141.

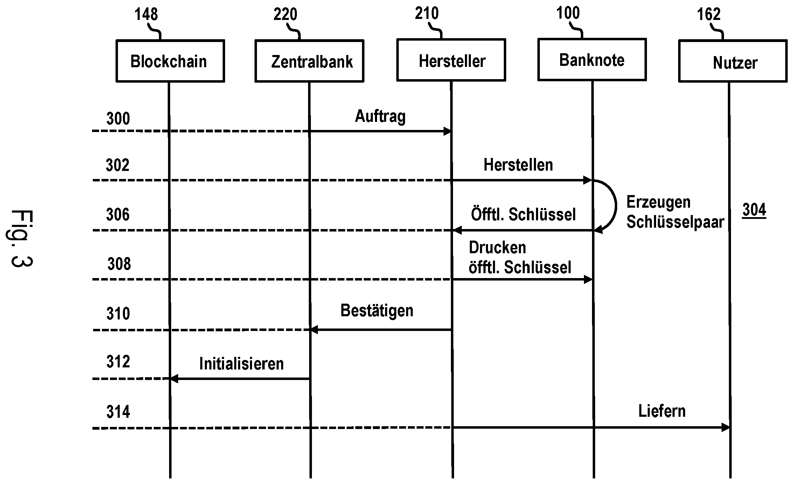

Figur 3 zeigt ein schematisches Flussdiagramm eines exemplarischen Verfahrens zum Ausstellen von Banknoten 100. In Schritt 300 sendet die Zentralbank 220 einen Auftrag zur Herstellung von Banknoten 100 an einen Hersteller 210, z.B. einer Druckerei. Der Auftrag gibt beispielsweise einen Bereich von Seriennummern vor. Der Bereich von Seriennummern gibt Seriennummern vor, welche für die herzustellenden Banknoten 100 zu verwenden sind. Beispielsweise gibt der Auftrag ferner initiale Nominalwerte für die herzustellenden Banknoten 100 vor. Beispielsweise gibt der Auftrag einen Mindestnominalwert und/oder einen variablen Zusatznominalwertanteil vor. In Schritt 302 stellt der Hersteller 210 die Banknoten 100 gemäß dem empfangenen Auftrag her. Die hergestellten Banknoten 100 umfassen beispielsweise jeweils ein Sicherheitselement mit einem Prozessor. In Schritt 304 erzeugen die Sicherheitselemente der Banknoten 100 jeweils ein banknotenindividuelles asymmetrischen Schlüsselpaar. Ein öffentlicher kryptographischer Schlüssel des asymmetrischen Schlüsselpaars wird jeweils in einem Speicher des entsprechenden Sicherheitselement gespeichert. Der private kryptographische Schlüssel des asymmetrischen Schlüsselpaars wird jeweils in einem geschützten Speicherbereich des entsprechenden Speichers gespeichert. In Schritt 306 liest der Hersteller 210 jeweils den öffentlichen kryptographischen Schlüssel aus den Speichern der Banknoten 100 aus. Beispielsweise umfassen die Banknoten 100 jeweils eine visuelle Angabe einer der Seriennummern aus dem vorgegebenen Bereich von Seriennummern, welche der jeweiligen Banknote 100 im Zuge des Herstellungsprozesses zugeordnet wurde. Beispielsweise werden die visuellen Angaben der Seriennummern der hergestellten Banknoten 100 gelesen. Beispielsweise sind in den Speichern der Banknoten 100 zusätzlich die Seriennummern der Banknoten 100 gespeichert.

Beispielsweise liest der Hersteller 210 zusätzlich jeweils die Seriennummer aus den Speichern der Banknoten 100 aus.

In Schritt 308 wird beispielsweise eine visuelle Angabe des ausgelesenen öffentlichen kryptographischen Schlüssels und/oder einer aus dem öffentlichen kryptographischen Schlüssel abgeleitete Blockchain-Adresse der Banknote zu der jeweiligen Banknote hinzugefügt, beispielsweise auf diese aufgedruckt. In Schritt 310 wird eine Herstellungsbestätigung an die Zentralbank 220 gesendet, welche die hergestellten Banknoten 100 identifiziert. Beispielsweise gibt die Herstellungsbestätigung die Seriennummern der hergestellten Banknoten 100 an. Beispielsweise gibt die Herstellungsbestätigung die öffentlichen kryptographischen Schlüssel und/oder die aus dem öffentlichen kryptographischen Schlüssel abgeleiteten Blockchain-Adressen der hergestellten Banknoten 100 an. Beispielsweise gibt die Herstellungsbestätigung die initialen Nominalwerte der hergestellten Banknoten 100 an. Beispielsweise gibt die Herstellungsbestätigung Mindestnominalwerte und/oder variable Zusatznominalwertanteile der initialen Nominalwerte an. In Schritt 312 werden die Blockchain-Adressen der hergestellten Banknoten 100 von der Zentralbank 220 in der Blockchain 148 initialisiert, welche für den Bereich von Seriennummern zuständig ist, in dem die Seriennummern der hergestellten Banknoten 100 liegen. Hierzu bestimmt die Zentralbank 220 unter Verwendung Seriennummern der hergestellten Banknoten 100 die zuständige Blockchain 148. Beispielsweise fügt die Zentralbank 220 der entsprechenden Blockchain 148 einen Initialisierungseintrag zu. Beispielsweise gibt der Initialisierungseintrag die öffentlichen kryptographischen Schlüssel und/oder die aus dem öffentlichen kryptographischen Schlüssel abgeleiteten Blockchain-Adressen der hergestellten Banknoten 100 an. Beispielsweise gibt der Initialisierungseintrag ferner die Seriennummern der hergestellten Banknoten 100 an. Beispielsweise gibt der Initialisierungseintrag ferner die initialen Nominalwerte der Banknoten 100 an. Beispielsweise gibt der Initialisierungseintrag ferner die Mindestnominalwerte der Banknoten 100 an. In Schritt 314 werden die hergestellten Banknoten 100 ausgeliefert und gelangen zu Nutzern 162. Beispielsweise gelangen die Banknoten im Zuge des bargeldbasierten Zahlungsverkehrs als Bargeld zu den Nutzern 162.

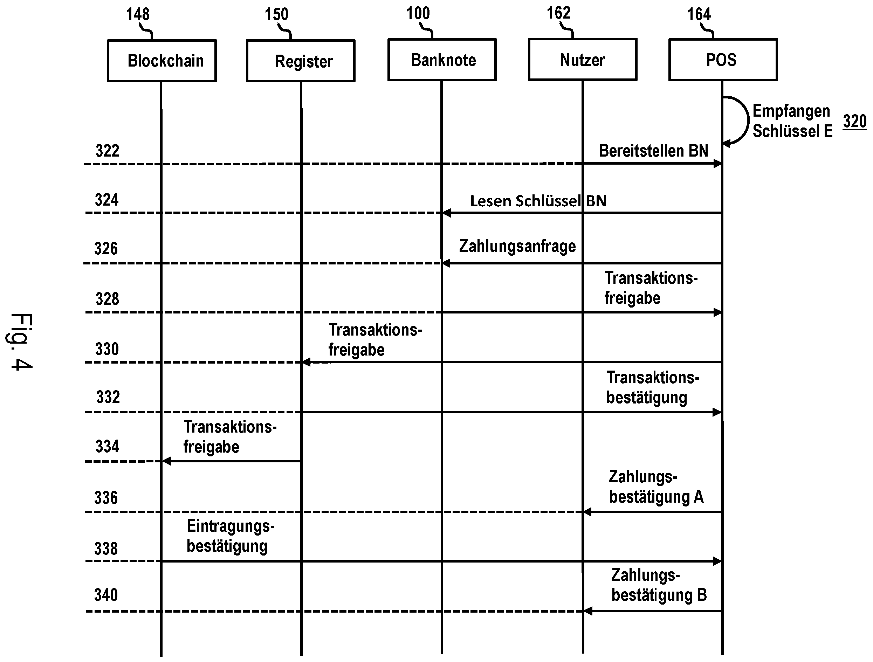

Figur 4 zeigt ein schematisches Flussdiagramm eines exemplarischen Verfahrens zur Zahlungsabwicklung mit einem Terminal eines PoS ("Point of Sale") 164. In Schritt 320 empfängt der PoS 164 bzw. das Terminal einen öffentlichen kryptographischen Schlüssel einer Blockchain-Adresse oder eine Blockchain-Adresse, welche der PoS 164 als Zahlungsempfänger zum Empfangen von Zahlungen über das Blockchain-System mit der Blockchain 148 verwendet. In Schritt 322 stellt der Nutzer 162 eine Banknote 100 für eine bargeldlose Zahlung bereit. In Schritt 324 liest der PoS 164 eine visuelle Angabe eines öffentlichen kryptographischen Schlüssels der Banknote 100 oder einer aus dem öffentlichen kryptographischen Schlüssel abgeleitete Blockchain-Adresse der Banknote 100. In Schritt 326 erstellt der PoS 164 eine Zahlungsanfrage und sendet die Zahlungsanfrage an die Banknote 100. Beispielsweise definiert die Zahlungsanfrage eine Transaktion eines zu zahlenden Betrags von einer Blockchain-Adresse der Banknote 100 an die Blockchain-Adresse des PoS 164 als Zahlungsempfänger. Alternativ könnte der PoS 164 auch die Seriennummer der Banknote 100 lesen und eine Abfrage an die für die entsprechende Seriennummer zuständige Blockchain 148 oder ein für die entsprechende Seriennummer zuständiges Register 150 senden, welche die der entsprechenden Seriennummer zugeordnete Blockchain-Adresse abfragt. Falls die entsprechende Blockchain 148 oder das entsprechende Register 150 einen Eintrag umfasst, welcher der Seriennummer der Banknote 100 eine Blockchain-Adresse der Banknote 100 zuordnet, empfängt der PoS 164 als Antwort auf die Anfrage beispielsweise die Blockchain-Adresse der Banknote 100 oder einen öffentlichen Schlüssel der Banknote 100, aus welchem sich die Blockchain-Adresse ableiten lässt.

In Schritt 328 erstellt die Banknote 100 eine Transaktionsfreigabe, signiert die Transaktionsfreigabe mit dem privaten kryptographischen Schlüssel der Banknote 100 und sendet eine Nachricht mit der Transaktionsfreigabe an den PoS 164. Die Transaktionsfreigabe umfasst beispielsweise die Blockchain-Adresse der Banknote 100, die Blockchain-Adresse des Zahlungsempfängers, d.h. des PoS 164, und den zu zahlenden Betrag. Ferner umfasst die Signatur beispielsweise einen Zeitstempel. In Schritt 330 leitet der PoS 164 die Nachricht, welche die Seriennummer der Banknote 100 umfasst, an das Blockchain-System. Dabei wird die Nachricht beispielsweise basierend auf der Seriennummer der Banknote an das Register 150 der Mehrzahl von Registern des Blockchain-Systems weitergeleitet, welches für den Bereich von Seriennummern mit der Seriennummer der entsprechenden Banknote 100 zuständig ist. Bei dem Register 150 handelt es sich beispielsweise um ein in regelmäßigen Intervallen geupdatetes Register, welches für die Blockchain-Adressen der für die Seriennummer der entsprechenden Banknote zuständigen Blockchain 148 jeweils einen aktuellen Nominalwert umfasst. Die aktuellen Nominalwerte werden aus den Bilanzen der in der zuständigen Blockchain 148 gespeicherten Transaktionen für die entsprechenden Blockchain-Adressen berechnet. Das Register 150 stellt beispielsweise eine "Fast Blockchain" bereit, in welcher die vorberechneten Bilanzergebnisse für die Blockchain-Adressen als aktuelle Nominalwerte der entsprechenden Blockchain-Adressen bereitgestellt werden. Eine Verwendung eines solchen Registers kann den Vorteil haben, dass aktuelle Nominalwerte schneller bestimmt werden können, da diese bereits vorliegen und nicht erst berechnet werden müssen. Das Register 150 kann beispielsweise von einer virtuellen Maschine (VM) eines Blockchain-Servers bzw. Blockchain-Knotens des Blockchain-Netzwerks verwaltet werden. Beispielsweise kann der PoS 164 die Nachricht mit der signierte Transaktionsfreigabe aber auch an die für die Seriennummer der entsprechenden Banknote zuständige Blockchain 148 senden bzw. die Nachricht kann an die entsprechende Blockchain 148 weitergeleitet werden, ohne Verwendung eines Registers 150.

In Schritt 332 prüft das zuständige Register 150 bzw. der Server/die virtuelle Maschine, auf welcher das Register 150 verwaltet wird, die von der Banknote 100 freigegebene bzw. autorisierte Transaktion. Beispielsweise prüft das Register 150, ob der aktuelle Nominalwert der Banknote 100 zu Zahlung des zu zahlenden Betrags unter Verwendung der zuständigen Blockchain 148 ausreicht. Beispielsweise prüft das Register 150, ob der aktuelle Nominalwert der Banknote 100 größer oder gleich dem zu zahlenden Betrag ist. Beispielsweise prüft das Register 150, ob der aktuelle Nominalwert einen Zusatznominalwertanteil umfasst, welcher ausreicht den zu zahlenden Betrag zu zahlen, d.h. das nach Zahlung des zu zahlenden Betrags der garantierten Mindestnominalwert verbleibt. Ferner prüft das Register 150 bzw. der Server/die virtuelle Maschine, auf welcher das Register 150 verwaltet wird, beispielsweise die Signatur der Transaktionsfreigabe. Ferner wird beispielsweise geprüft, dass eine identische Transaktion, z.B. mit identischem Zeitstempel der Transaktionsfreigabe, nicht bereits in die zugehörigen Blockchain 148 eingetragen wurde. Falls die Prüfung erfolgreich ist, sendet das Register 150 eine Transaktionsbestätigung, welche eine positive Prüfung der signierten Transaktionsfreigabe bestätigt, an den PoS 164. Ferner leitet das Register 150 bzw. der Server/die virtuelle Maschine, auf welcher das Register 150 verwaltet wird, die signierte Transaktionsfreigabe in Schritt 334 zur Eintragung an die zugehörige Blockchain 148 weiter. Alternativ oder zusätzlich kann der Server, auf welchem das Register 150 verwaltet wird, die Transaktion auf eine positive Prüfung der signierten Transaktionsfreigabe hin eintragen und die Eintragung an andere Server eines Blockchain-Netzwerks weiterleiten. In Schritt 336 bestätigt der PoS 164 auf den Empfang der Transaktionsbestätigung in Schritt 332 hin die Zahlung gegenüber dem Nutzer 164. Beispielsweise erfolgt die Zahlungsbestätigung in Schritt 336 nur unter der Voraussetzung, dass der zu zahlende Betrag kleiner als ein Schwellenwert ist. Falls der zu zahlende Betrag größer oder gleich dem Schwellenwert ist, ist für Bestätigung der Zahlung ferner ein Empfang einer Eintragungsbestätigung notwendig, welche die tatsächliche Eintragung der Transaktion in die zugehörige Blockchain 148 bestätigt. In Schritt 338 empfängt der PoS 164 von der zugehörigen Blockchain 148 bzw. einem die zugehörige Blockchain 148 verwaltenden Blockchain-Server nach der Eintragung der Transaktion in die zugehörige Blockchain 148 eine Eintragungsbestätigung. Falls der zu zahlende Betrag größer oder gleich dem Schwellenwert ist, erfolgt erst in Schritt 340 die Bestätigung der Zahlung gegenüber dem Nutzer 164.

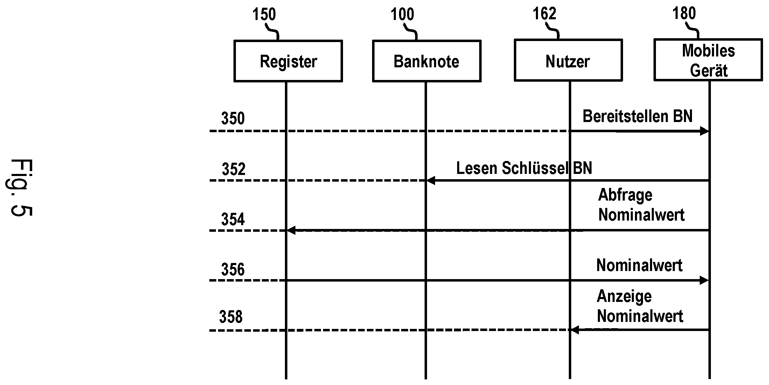

Figur 5 zeigt ein schematisches Flussdiagramm eines exemplarischen Verfahrens zum Ermitteln eines aktuellen Nominalwerts einer Banknote 100. In Schritt 350 stellt der Nutzer 162 die Banknote 100 einem Lesegerät, wie etwa einem mobilen tragbaren Kommunikationsgerät 180, z.B. einem Smartphone, bereit. In Schritt 352 liest das mobile Kommunikationsgerät 180 eine visuelle Angabe eines öffentlichen kryptographischen Schlüssels der Banknote 100 oder einer aus dem öffentlichen kryptographischen Schlüssel abgeleitete Blockchain-Adresse der Banknote 100 sowie die Seriennummer der Banknote 100. Alternativ könnte das Kommunikationsgerät 180 auch nur die Seriennummer der Banknote 100 lesen. In Schritt 354 sendet das Kommunikationsgerät 180 eine Nachricht mit einer Anfrage nach dem aktuellen Nominalwert, welcher der Blockchain-Adresse der Banknote 100 zugeordnet ist, an das Blockchain-System. Diese Nachricht wird basierend auf der von ihr umfassten Seriennummer der Banknote 100 an das für diese Seriennummer zuständige Register 150 geleitet. Alternativ könnte eine solche Anfrage auch an die zuständige Blockchain bzw. einen die Blockchain verwaltenden Server geleitet werden. Die Anfrage umfasst zum Identifizieren der Banknote 100, deren aktueller Nominalwert ermittelt werden soll, beispielsweise den öffentlichen kryptographischen Schlüssel der Banknote 100, aus welchem die Blockchain-Adresse der Banknote 100 ableitbar ist. Beispielsweise umfasst die Anfrage zum Identifizieren der Banknote 100 die Blockchain-Adresse der Banknote 100. Beispielsweise umfasst die Anfrage die Seriennummer der Banknote 100, falls die Blockchain 148 oder das Register 150 einen Eintrag umfasst, welcher der Seriennummer der Banknote 100 eine Blockchain-Adresse der Banknote 100 zuordnet. In Schritt 356 sendet das zuständige Register 150 oder die zuständige Blockchain 148 bzw. ein das zuständige Register 150 oder die zuständige Blockchain 148 verwaltender Server in Antwort auf die Anfrage den aktuellen Nominalwert an das mobile Kommunikationsgerät 180. In Schritt 358 zeigt das mobile Kommunikationsgerät 180 dem Nutzer 162 den aktuellen Nominalwert der Banknote 100 an.

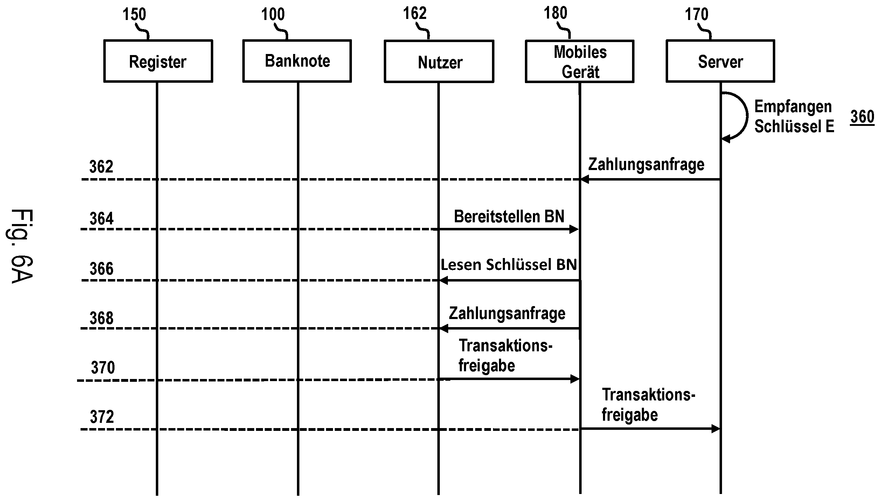

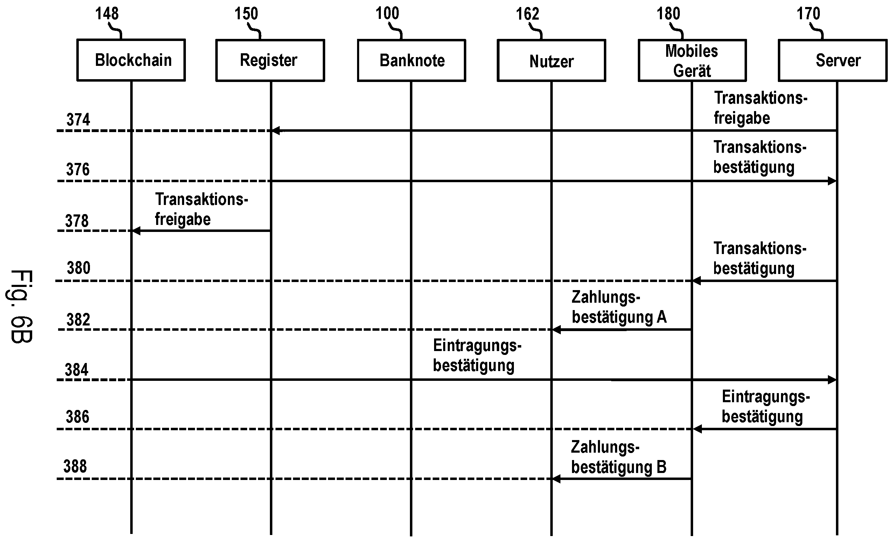

Figur 6 zeigt ein schematisches Flussdiagramm eines exemplarischen Verfahrens zur Zahlungsabwicklung mit einem mobilen tragbaren Kommunikationsgerät 180. Bei dem mobilen tragbaren Kommunikationsgerät 180 handelt es sich beispielsweise um ein Smartphone. Beispielsweise erfolgt die Zahlungsabwicklung mit dem mobilen tragbaren Kommunikationsgerät 180 unter Verwendung eines Servers 170. Das mobilen tragbaren Kommunikationsgerät 180 dient beispielsweise als ein PoS für einen Einkauf über das Internet unter Verwendung des Servers 170. In Schritt 360 empfängt der Server 170 einen öffentlichen kryptographischen Schlüssel einer Blockchain-Adresse oder eine Blockchain-Adresse, welche der Server 170 als Zahlungsempfänger zum Empfangen von Zahlungen über die Blockchain 148 verwendet. In Schritt 362 sendet der Server 170 eine Zahlungsanfrage zum Abwickeln einer Zahlung an das mobile Kommunikationsgerät 180. Beispielsweise handelt es sich bei dem Server 170 um einen Dienstserver und bei der Zahlung um eine Zahlung für einen von dem Dienstserver bereitgestellten und von dem Nutzer 162 in Anspruch genommenen Dienst. Beispielsweise handelt es sich bei dem Server 170 um einen Server eines Finanzdienstleister, welcher eine Zahlung für den Nutzer 162 abwickelt. Die Zahlungsanfrage umfasst beispielsweise eine Angabe des öffentlichen kryptographischen Schlüssels oder der Blockchain-Adresse des Server 170 als Zahlungsempfänger und eine Angabe des zu zahlenden Betrags. Ferner umfasst die Zahlungsanfrage umfasst beispielsweise eine Angabe beispielsweise eine Angabe einer Seriennummer einer Banknote des Zahlungsempfängers. In Schritt 364 stellt der Nutzer 162 eine Banknote 100 für eine bargeldlose Zahlung bereit. In Schritt 366 liest das mobile Kommunikationsgerät 180 eine visuelle Angabe eines öffentlichen kryptographischen Schlüssels der Banknote 100 oder einer aus dem öffentlichen kryptographischen Schlüssel abgeleitete Blockchain-Adresse der Banknote 100. In Schritt 368 ergänzt das mobile Kommunikationsgerät 180 die in Schritt 362 empfangene Zahlungsanfrage und sendet die ergänzte Zahlungsanfrage an die Banknote 100. Beispielsweise ergänzt das mobile Kommunikationsgerät 180 die Zahlungsanfrage um die Blockchain-Adresse der Banknote 100. Alternativ könnte das mobile Kommunikationsgerät 180 auch die Seriennummer der Banknote 100 lesen und eine Anfrage an die für diese Seriennummer zuständige Blockchain 148 oder ein zuständiges Register 150 senden, welche die der entsprechenden Seriennummer zugeordnete Blockchain-Adresse abfragt. Falls die zuständige Blockchain 148 oder das zuständige Register 150 einen Eintrag umfasst, welcher der Seriennummer der Banknote 100 eine Blockchain-Adresse der Banknote 100 zuordnet, empfängt das mobile Kommunikationsgerät 180 als Antwort auf die Anfrage beispielsweise die Blockchain-Adresse der Banknote 100 oder einen öffentlichen Schlüssel der Banknote 100, aus welchem sich die Blockchain-Adresse ableiten lässt.

In Schritt 370 erstellt die Banknote 100 eine Transaktionsfreigabe, signiert die Transaktionsfreigabe mit dem privaten kryptographischen Schlüssel der Banknote 100 und sendet eine Nachricht mit der signierten Transaktionsfreigabe an das mobile Kommunikationsgerät 180. Die Transaktionsfreigabe umfasst beispielsweise die Blockchain-Adresse der Banknote 100, die Blockchain-Adresse des Zahlungsempfängers, d.h. des Servers 170, und den zu zahlenden Betrag. Ferner umfasst die Signatur beispielsweise einen Zeitstempel. Die Nachricht umfasst die Seriennummer der Banknote 100, beispielsweise in einem Header. In Schritt 372 leitet das mobile Kommunikationsgerät 180 die Nachricht mit der signierten Transaktionsfreigabe an den Server 170 weiter, welcher die Nachricht in Schritt 374 an das Register 150 weiterleitet, das für die Seriennummer der entsprechenden Banknote 100 zuständig ist. Bei dem Register 150 handelt es sich beispielsweise um ein in regelmäßigen Intervallen geupdatetes Register, welches für die Blockchain-Adressen einer zugehörigen Blockchain 148 der Mehrzahl von Blockchains jeweils einen aktuellen Nominalwert umfasst. Die aktuellen Nominalwerte werden aus den Bilanzen der in der zugehörigen Blockchain 148 gespeicherten Transaktionen für die Blockchain-Adressen derjenigen Banknoten berechnet, für deren Seriennummern die Blockchain 148 zuständig ist. Das Register 150 stellt beispielsweise eine "Fast Blockchain" bereit, in welcher die vorberechneten Bilanzergebnisse für die Blockchain-Adressen als aktuelle Nominalwerte der entsprechenden Blockchain-Adressen bereitgestellt werden. Beispielsweise kann der Server 170 die Nachricht mit der signierten Transaktionsfreigabe aber auch an die zuständige Blockchain 148 weiterleiten, ohne Verwendung eines Registers 150. In Schritt 376 prüft das zuständige Register 150 bzw. der Server/die virtuelle Maschine, auf welcher das Register 150 verwaltet wird, die von der Banknote 100 freigegebene bzw. autorisierte Transaktion. Beispielsweise prüft das Register 150, ob der aktuelle Nominalwert der Banknote 100 zu Zahlung des zu zahlenden Betrags unter Verwendung der zugehörigen Blockchain 148 ausreicht.

Beispielsweise prüft das Register 150, ob der aktuelle Nominalwert der Banknote 100 größer oder gleich dem zu zahlenden Betrag ist. Beispielsweise prüft das zuständige Register 150, ob der aktuelle Nominalwert einen Zusatznominalwertanteil umfasst, welcher ausreicht den zu zahlenden Betrag zu zahlen, d.h. das nach Zahlung des zu zahlenden Betrags der garantierten Mindestnominalwert verbleibt. Ferner prüft das Register 150 bzw. der Server/die virtuelle Maschine, auf welcher das Register 150 verwaltet wird, beispielsweise die Signatur der Transaktionsfreigabe. Ferner wird beispielsweise geprüft, dass eine identische Transaktion, z.B. mit identischem Zeitstempel der Transaktionsfreigabe, nicht bereits in die zugehörige Blockchain eingetragen wurde. Falls die Prüfung erfolgreich ist, sendet das Register 150 eine Transaktionsbestätigung, welche eine positive Prüfung der signierten Transaktionsfreigabe bestätigt, an den Server 170. Ferner leitet das Register 150 bzw. der Server/die virtuelle Maschine, auf welcher das Register 150 verwaltet wird, die signierte Transaktionsfreigabe in Schritt 378 zur Eintragung an die zugehörige Blockchain 148 weiter. Alternativ oder zusätzlich kann der Server, auf welchem das Register 150 verwaltet wird, die Transaktion auf eine positive Prüfung der signierten Transaktionsfreigabe hin eintragen und die Eintragung an andere Server eines Blockchain-Netzwerks weiterleiten. In Schritt 380 leitet der Server 170 die Transaktionsbestätigung an das mobile Kommunikationsgerät 180 weiter. In Schritt 382 bestätigt das mobile Kommunikationsgerät 180 die Zahlung gegenüber dem Nutzer 164. Beispielsweise erfolgt die Zahlungsbestätigung in Schritt 382 nur unter der Voraussetzung, dass der zu zahlende Betrag kleiner als ein Schwellenwert ist. Falls der zu zahlende Betrag größer oder gleich dem Schwellenwert ist, ist für Bestätigung der Zahlung ferner ein Empfang einer Eintragungsbestätigung notwendig, welche die tatsächliche Eintragung der Transaktion in die zuständige Blockchain bestätigt. In Schritt 384 empfängt der Server 170 von der entsprechenden Blockchain 148 bzw. einem die entsprechende Blockchain 148 verwaltenden Blockchain-Server nach der Eintragung der Transaktion in die Blockchain 148 eine Eintragungsbestätigung. In Schritt 386 leitet der Server 170 die Eintragungsbestätigung an das mobile Kommunikationsgerät 180 weiter. Falls der zu zahlende Betrag größer oder gleich dem Schwellenwert ist, erfolgt erst in Schritt 388 die Bestätigung der Zahlung gegenüber dem Nutzer 164.

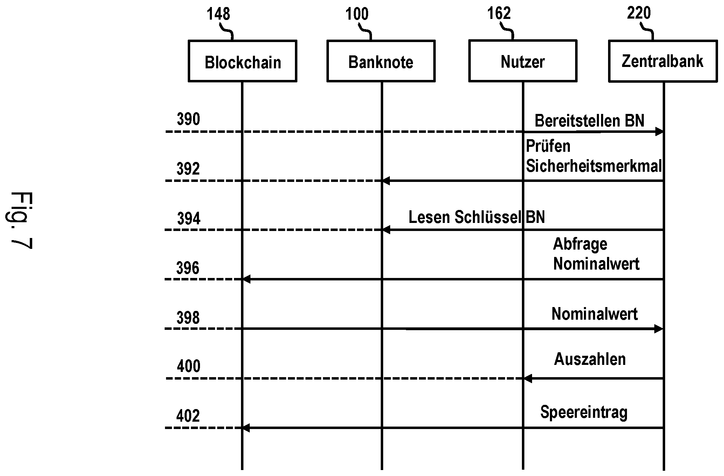

Figur 7 zeigt ein schematisches Flussdiagramm eines exemplarischen Verfahrens zum Ersetzen einer Banknote 100. In Schritt 390 stellt der Nutzer 162 der Zentralbank 220 eine beschädigte Banknote 100 bereit. In Schritt 392 prüft die Zentralbank 220 die Sicherheitsmerkmale der beschädigten Banknote 100, um festzustellen, ob es sich bei der beschädigten Banknote 100 um eine gültige Banknote 100 handelt, welche beschädigt wurde. Ferner prüft die Zentralbank 220 beispielsweise, ob von der vorliegenden Banknote 100 mehr als 50% unbeschädigt sind. Falls die Prüfung der Zentralbank 220 ergibt, dass es sich bei der beschädigten Banknote um eine gültige Banknote handelt, liest die Zentralbank 220 in Schritt 394 eine visuelle Angabe eines öffentlichen kryptographischen Schlüssels der Banknote 100 oder einer aus dem öffentlichen kryptographischen Schlüssel abgeleitete Blockchain-Adresse der Banknote 100. Alternativ könnte die Zentralbank 220 auch die Seriennummer der Banknote 100 lesen. In Schritt 396 sendet die Zentralbank 220 eine Nachricht mit einer Anfrage nach dem aktuellen Nominalwert, welcher der Blockchain-Adresse der Banknote 100 zugeordnet ist, an das Blockchain-System. Basierend auf der von der Nachricht umfasst Seriennummer der zu ersetzenden Banknote, wird die Nachricht an das für die entsprechende Seriennummer zuständige Register 150 weitergleitet. Alternativ könnte eine solche Nachricht auch an die zuständige Blockchain bzw. einen die zuständige Blockchain verwaltenden Server weitergeleitet werden. Die Anfrage umfasst zum Identifizieren der Banknote 100, deren aktueller Nominalwert ermittelt werden soll, beispielsweise den öffentlichen kryptographischen Schlüssel der Banknote 100, aus welchem die Blockchain-Adresse der Banknote 100 ableitbar ist. Beispielsweise umfasst die Anfrage zum Identifizieren der Banknote 100 die Blockchain-Adresse der Banknote 100. Beispielsweise wird die Blockchain-Adresse der Banknote 100 durch die Seriennummer der Banknote 100 identifiziert, falls die Blockchain 148 oder das Register 150 einen Eintrag umfasst, welcher der Seriennummer der Banknote 100 eine Blockchain-Adresse der Banknote 100 zuordnet. In Schritt 398 sendet das zuständige Register 150 oder die zuständige Blockchain 148 bzw. ein das entsprechende Register 150 oder die entsprechende Blockchain 148 verwaltender Server in Antwort auf die Anfrage den aktuellen Nominalwert an die Zentralbank 220.

In Schritt 400 zahlt die Zentralbank 220 den aktuellen Nominalwert der beschädigten Banknote 100 aus. Beispielsweise umfasst das Auszahlen des aktuellen Nominalwerts der beschädigten Banknote 100 ein Bereitstellen ein oder mehrerer Banknoten als Ersatz für die beschädigte Banknote 100, deren aktuelle Nominalwerte in der Summe dem aktuellen Nominalwert der beschädigten Banknote 100 entsprechen. Beispielsweise handelt es sich bei den ein oder mehreren Banknoten als Ersatz für die beschädigte Banknote 100 um Banknoten nach einer der zuvor beschriebenen Ausführungsformen. Beispielsweise umfasst das Auszahlen des aktuellen Nominalwerts der beschädigten Banknote 100 ein Eintragen einer Transaktion eines Betrags in Höhe des aktuellen Nominalwerts von einer Blockchain-Adresse der die beschädigte Banknote ausgebenden Zentralbank 220 an eine von einem Besitzer der beschädigten Banknote 100 angegebenen Blockchain-Adresse. Beispielsweise ist die angegebene Blockchain-Adresse einer anderen Banknote des Besitzers, d.h. Eigentümers, der beschädigten Banknoten 100, dem Besitzer der beschädigten Banknote persönlich oder einer anderen von dem Besitzer der beschädigten Banknoten gewählten Institution zugeordnet. In Schritt 402 sendet die Zentralbank 220 einen Sperreintrag an das Blockchain-System mit der Blockchain 148. Mit eintragen des Sperreintrags in die Blockchain 148 wird die Blockchain-Adresse der beschädigten Banknote 100 gesperrt. Beispielsweise wird der Speereintrag zusätzlich auch in alle weiteren Blockchains des Blockchain-Systems eingetragen. Infolge der Sperrung ist es beispielsweise nicht möglich eine Transaktion mit der Blockchain-Adresse der beschädigten Banknote 100 als Ausgangsadresse auszuführen, d.h. in die Blockchain 148 einzutragen. Ferner ist es beispielsweise nicht mehr möglich eine Transaktion mit der Blockchain-Adresse der beschädigten Banknote 100 als Zieladresse auszuführen, d.h. in eine Blockchain des Blockchain-Systems einzutragen, die für die Seriennummer der Banknote der Ausgangsgasadresse der entsprechenden Transaktion zuständig ist. Beispielsweise wird als Voraussetzung für ein Eintragen einer Transaktion in die zuständige Blockchain 148 geprüft, ob ein Sperreintrag für die Ausgangsadresse oder die Zieladresse der Transaktion vorliegt. Falls Ausgangsadresse oder Zieladresse der Transaktion gesperrt sind, wird der Eintrag beispielsweise verweigert. Andernfalls erfolgt der Eintrag beispielsweise.

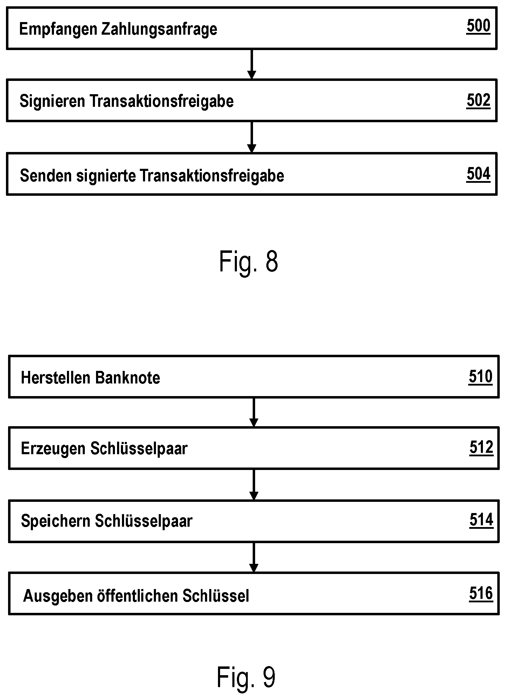

Figur 8 zeigt ein schematisches Flussdiagramm eines exemplarischen Verfahrens zum Verwenden einer Banknote. Die Banknote umfasst beispielsweise ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse Blockchain zugeordnet, welche eine die Banknote ausgebenden Zentralbank verwaltet. Der Prozessor ist dazu konfiguriert unter Verwendung der Programminstruktionen ein Zahlungsverfahren mit der Banknote auszuführen.

In Block 500 empfängt die Banknote eine Zahlungsanfrage für eine Zahlung in Form einer Transaktion eines zu zahlenden Betrags von der Blockchain-Adresse der Banknote an eine Blockchain-Adresse eines Zahlungsempfängers. Die Zahlungsanfrage gibt den zu zahlenden Betrag und die Blockchain-Adresse des Zahlungsempfängers an. In Block 502 wird eine Transaktionsfreigabe mit dem privaten kryptographischen Schlüssel der Banknote signiert. Die Transaktionsfreigabe umfasst die Blockchain-Adresse der Banknote, die Blockchain-Adresse des Zahlungsempfängers und den zu zahlenden Betrag. Ferner umfasst die Signatur einen Zeitstempel. In Block 504 wird eine Nachricht mit der signierten Transaktionsfreigabe gesendet, welche die Seriennummer der Banknote umfasst.

Figur 9 zeigt ein schematisches Flussdiagramm eines exemplarischen Verfahrens zum Ausstellen einer Banknote. In Block 510 wird die Banknote hergestellt. Die Banknote umfasst eine visuelle Angabe einer die Banknote eindeutig identifizierenden Seriennummer der Banknote aus einem vordefinierten Bereich von Seriennummern und einen initialen Nominalwert der Banknote. Die Banknote umfasst ferner ein Sicherheitselement mit einem Prozessor und einem Speicher. In Block 512 erzeugt die Banknote ein banknotenindividuelles asymmetrisches Schlüsselpaar mit einem privaten und einem öffentlichen kryptographischen Schlüssel. In Block 514 speichert die Banknote das erzeugte banknotenindividuelle asymmetrische Schlüsselpaar in dem Speicher. Der private kryptographische Schlüssel wird dabei in einem geschützten Speicherbereich des Speichers gespeichert. In Block 516 gibt die Banknote den erzeugten öffentlichen kryptographischen Schlüssel aus zum Initialisieren einer aus dem öffentlichen kryptographischen Schlüssel abgeleiteten banknotenindividuellen Blockchain-Adresse durch eine die Banknote ausgebenden Zentralbank in einer Blockchain. Der Blockchain-Adresse der Banknote wird im Zuge der Initialisierung der initiale Nominalwert zugeordnet.

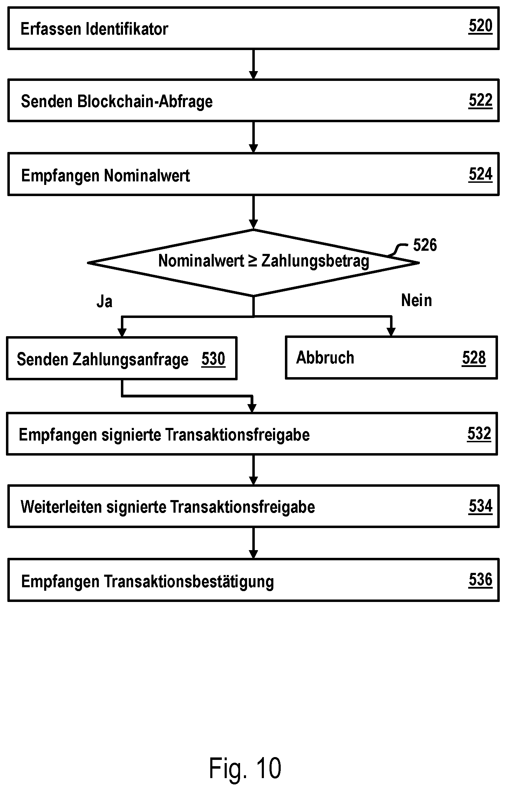

Figur 10 ein schematisches Flussdiagramm eines exemplarischen Verfahrens zur Zahlungsabwicklung mit einem Terminal. Die Zahlung erfolgt mit einer Banknote, welche beispielsweise eine visuelle Angabe eines eine Blockchain-Adresse der Banknote eindeutig identifizierenden Identifikator umfasst. Die Banknote umfasst eine Kommunikationsschnittstelle zur Kommunikation mit dem Terminal und ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse zugeordnet ist, welches eine die Banknote ausgebenden Zentralbank verwaltet. Beispielsweise ist in dem Speicher ferner der Identifikator der Blockchain-Adresse der Banknote gespeichert. Bei dem Identifikator handelt es sich beispielsweise um die Seriennummer der Banknote, den öffentlichen kryptographischen Schlüssel der Banknote, oder die Blockchain-Adresse der Banknote selbst. Das Terminal umfasst einen Prozessor, einen Speicher und eine Kommunikationsschnittstelle zu Kommunikation mit der Banknote.

In Block 520 erfasst das Terminal den Identifikator der Blockchain-Adresse der Banknote, welcher die Blockchain-Adresse der Banknote eindeutig identifiziert. Bei dem erfassten Identifikator handelt es sich beispielsweise um die Seriennummer der Banknote, den öffentlichen kryptographischen Schlüssel der Banknote, oder die Blockchain-Adresse der Banknote selbst. Die Erfassung kann eine optische Erfassung einer visuellen Angabe des Identifikators mit einem optischen Sensor und/oder ein auslesen des in dem Speicher gespeicherten Identifikator über die Kommunikationsschnittstelle der Banknote umfassen. In Block 522 sendet das Terminal eine Blockchain-Abfrage nach dem aktuellen Nominalwert der Blockchain-Adresse der Banknote, welche durch den erfassten Identifikator identifiziert wird. Die entsprechende Nachricht mit der Blockchain-Abfrage umfasst die Seriennummer der Banknote, unter deren Verwendung die Nachricht zu dem für die entsprechende Seriennummer und damit für die entsprechende Nachricht zuständigen Blockchain einer Mehrzahl von Blockchains geleitet wird. In Block 524 empfängt das Terminal den aktuellen Nominalwert der Blockchain-Adresse der Banknote. In Block 526 prüft das Terminal, ob der empfangene aktuelle Nominalwert größer gleich dem zu zahlenden Betrag ist. Falls der aktuelle Nominalwert nicht größer gleich dem zu zahlenden Betrag ist, d.h. die Prüfung erfolglos ist, wird das Verfahren mit Block 528 fortgesetzt. In Block 528 wird das Verfahren abgebrochen. Falls der aktuelle Nominalwert größer gleich dem zu zahlenden Betrag ist, d.h. die Prüfung erfolgreich ist, wird das Verfahren mit Block 530 fortgesetzt. In Block 530 sendet das Terminal eine Zahlungsanfrage an die Banknote in Form einer Transaktion eines zu zahlenden Betrags von der Blockchain-Adresse der Banknote an eine Blockchain-Adresse eines Zahlungsempfängers. Die Zahlungsanfrage gibt den zu zahlenden Betrag und die Blockchain-Adresse des Zahlungsempfängers an. In Block 532 empfängt das Terminal eine signierte Transaktionsfreigabe von der Banknote. Die Transaktionsfreigabe ist signiert mit einem privaten kryptographischen Schlüssel der Banknote. Die Transaktionsfreigabe umfasst die Blockchain-Adresse der Banknote, die Blockchain-Adresse des Zahlungsempfängers und den zu zahlenden Betrag. Ferner umfasst die Signatur beispielsweise einen Zeitstempel. In Block 534 leitet das Terminal die signierte Transaktionsfreigabe der Banknote an einen Blockchain-Server der Blockchain weiter zum Prüfen und Eintragen der Transaktion in die Blockchain. In Block 536 empfängt das Terminal, auf eine erfolgreiche Prüfung der signierten Transaktionsfreigabe hin, eine Transaktionsbestätigung.

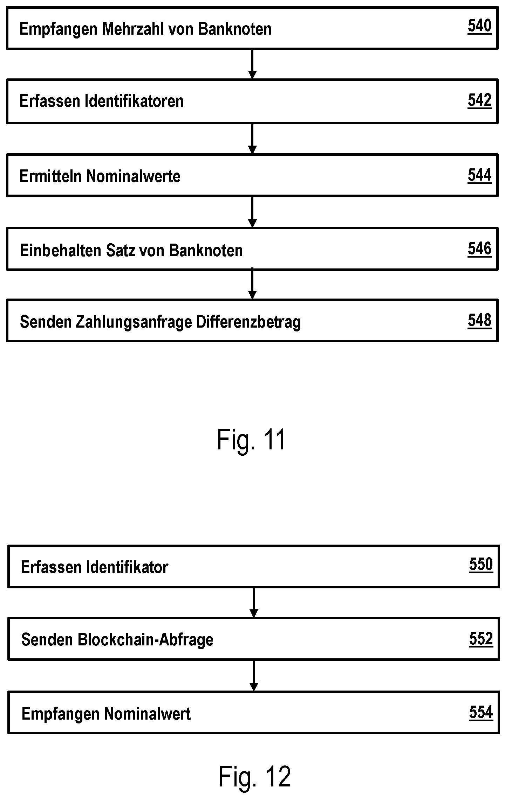

Figur 11 zeigt ein schematisches Flussdiagramm eines exemplarischen Verfahrens zur Zahlungsabwicklung mit einer Mehrzahl von Banknoten. In Block 540 wird eine Mehrzahl von Banknoten empfangen. In Block 542 werden die Identifikatoren der Blockchain-Adressen der empfangenen Banknoten erfasst, d.h. beispielsweise die Seriennummern, öffentlichen kryptographischen Schlüssel und/oder Blockchain-Adressen der entsprechenden Banknoten. In Block 544 wird für jeden der erfassten Identifikatoren jeweils ein aktueller Nominalwert ermittelt, welcher unter der entsprechenden Blockchain-Adresse gespeicherter ist. Hierfür wird eine Blockchain-Abfrage nach dem entsprechenden Nominalwert verwendet. Beispielsweise wird jeweils eine Nachricht mit der Blockchain-Abfrage erstellt, welche die Seriennummer der entsprechenden Banknote umfasst. Unter Verwendung der Seriennummer kann die Nachricht zu dem für die entsprechende Seriennummer und damit für die entsprechende Nachricht zuständigen Blockchain einer Mehrzahl von Blockchains geleitet werden. In Block 546 wird aus der Mehrzahl von empfangenen Banknoten ein Satz von Banknoten ausgewählt und einbehalten, deren aufsummierte aktuelle Nominalwerte einen Betrag ergeben, der kleiner als ein zu zahlender Betrag ist. Ein verbleibender Differenzbetrag zwischen dem zu zahlenden Betrag und dem aufsummierten Betrag des Satzes von ausgewählten Banknoten ist kleiner als ein aktueller Nominalwert einer weiteren Banknote der Mehrzahl von Banknoten, welche nicht von dem Satz von ausgewählten Banknoten umfasst ist. In Block 548 wird eine Zahlungsanfrage zur Zahlung des Differenzbetrags an die weitere Banknote gesendet.

Figur 12 zeigt ein schematisches Flussdiagramm eines exemplarischen Verfahrens zum Ermitteln eines aktuellen Nominalwerts. Die Banknote umfasst eine visuelle Angabe eines die Blockchain-Adresse der Banknote eindeutig identifizierenden Identifikators. Die Banknote umfasst eine Kommunikationsschnittstelle zur Kommunikation mit dem Terminal und ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse Blockchain zugeordnet, welche von einer die Banknote ausgebenden Zentralbank verwalteten wird. Bei dem Identifikator handelt es sich beispielsweise um die Seriennummer, den öffentlichen kryptographischen Schlüssel und/oder die Blockchain-Adresse der Banknote.

Das Terminal umfasst einen Prozessor, einen Speicher und eine Kommunikationsschnittstelle zu Kommunikation mit der Banknote. In Block 550 erfasst das Terminal einen Identifikator der Blockchain-Adresse der Banknote, welcher die Blockchain-Adresse der Banknote eindeutig identifiziert. Bei dem erfassten Identifikator handelt es sich beispielsweise die Seriennummer der Banknote, den öffentlichen kryptographischen Schlüssel der Banknote, oder die Blockchain-Adresse der Banknote selbst. In Block 552 erstellt und sendet das Terminal eine Nachricht mit einer Blockchain-Abfrage nach dem aktuellen Nominalwert der Blockchain-Adresse der Banknote, welche durch den erfassten Identifikator identifiziert wird. Die entsprechende Nachricht mit der Blockchain-Abfrage umfasst die Seriennummer der Banknote, unter deren Verwendung die Nachricht zu dem für die entsprechende Seriennummer und damit für die entsprechende Nachricht zuständigen Blockchain einer Mehrzahl von Blockchains geleitet wird. In Block 554 empfängt das Terminal den aktuellen Nominalwert der Blockchain-Adresse der Banknote.

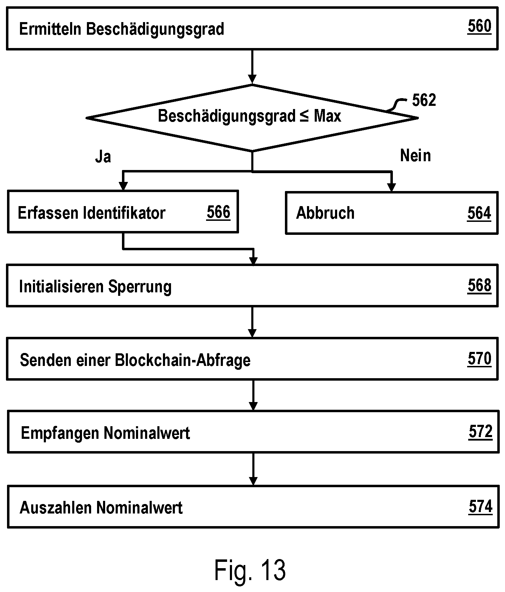

Figur 13 zeigt ein schematisches Flussdiagramm eines exemplarischen Verfahrens zum Ersetzen einer Banknote. Die Banknote umfasst beispielsweise eine visuelle Angabe eines Identifikators einer Blockchain-Adresse der Banknote. Die Banknote umfasst die visuelle Angabe des Identifikators beispielsweise mehrfach über die Banknote verteilt. Ferner umfasst die Banknote ferner eine Mehrzahl von über die Banknote verteilt angeordneten Sicherheitsmerkmalen. Die Banknote umfasst ein Sicherheitselement mit einem Prozessor und einem Speicher mit Programminstruktionen. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchain-Adresse in einer Blockchain zugeordnet, welche von einer die Banknote ausgebenden Zentralbank verwaltet wird.

Die Banknote weist eine Beschädigung auf. In Block 560 wird ein Beschädigungsgrad der Banknote ermittelt. In Block 562 wird geprüft, ob der Beschädigungsgrads der Banknote einen vordefinierten zulässigen maximalen Beschädigungsgrad überschreitet. Falls der Beschädigungsgrads der Banknote den vordefinierten zulässigen maximalen Beschädigungsgrad überschreitet, wird das Verfahren in Block 564 abgebrochen. Falls der Beschädigungsgrads der Banknote einen vordefinierten zulässigen maximalen Beschädigungsgrad nicht überschreitet, wird das Verfahren in Block 566 mit einem Erfassen des Identifikators der Blockchain-Adresse der beschädigten Banknote fortgesetzt, welcher die Blockchain-Adresse der beschädigten Banknote eindeutig identifiziert. Bei dem erfassten Identifikator handelt es sich beispielsweise die Seriennummer der beschädigten Banknote, den öffentlichen kryptographischen Schlüssel der beschädigten Banknote, oder die Blockchain-Adresse der beschädigten Banknote selbst. In Block 568 wird eine Sperrung der Blockchain-Adresse der beschädigten Banknote initialisiert unter Verwendung des erfassten Identifikators. In Block 570 wird eine Nachricht mit einer Blockchain-Abfrage nach dem aktuellen Nominalwert der Blockchain-Adresse der beschädigten Banknote gesendet. Die entsprechende Nachricht mit der Blockchain-Abfrage umfasst die Seriennummer der zu ersetzenden Banknote, unter deren Verwendung die Nachricht zu dem für die entsprechende Seriennummer und damit für die entsprechende Nachricht zuständigen Blockchain einer Mehrzahl von Blockchains geleitet wird. In Block 572, wird der aktuelle Nominalwert der entsprechenden Blockchain-Adresse empfangen und in Block 574 ausgezahlt. Dabei kann der Block 568 beispielsweise vor dem Block 570 oder nach dem Block 572 erfolgen.

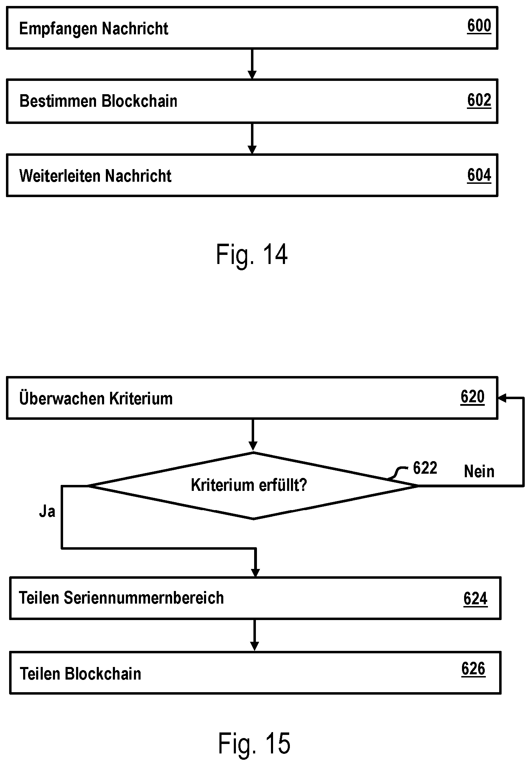

Figur 14 zeigt ein exemplarisches Verfahren zum Ausführen einer Zahlung unter Verwendung eines mobilen tragbaren Endgeräts einer Mehrzahl von mobilen tragbaren Endgeräten und eines Blockchain-Systems bzw. eines Weiterleitens einer Transaktionsfreigabe. Das Blockchain-System umfasst eine Mehrzahl von Blockchains. Jeder der Blockchains sind jeweils ein oder mehrere Blockchain-Server zugeordnet, welche die entsprechende Blockchain verwalten. Jedes mobile tragbare Endgerät der Mehrzahl von mobilen tragbaren Endgeräten ist jeweils eine Seriennummer aus einem Raum von Seriennummern zugeordnet. Der Raum von Seriennummern ist unterteilt in eine Mehrzahl von Bereichen von Seriennummern. Jedem der Bereiche von Seriennummern ist jeweils eine der Blockchains des Blockchain-Systems zugeordnet, welche Zahlungen von banknotenindividuellen Blockchain-Adressen protokolliert, welchen mobile tragbare Endgeräte mit Seriennummern aus dem entsprechenden Bereich von Seriennummern zugeordnet sind.

In Block 600 wird eine Nachricht des mobilen tragbaren Endgeräts mit einer Transaktionsfreigabe empfangen, welche unter Verwendung eines banknotenindividuellen privaten kryptographischen Schlüssels eines asymmetrischen Schlüsselpaars des mobilen tragbaren Endgeräts signiert ist. Das asymmetrische Schlüsselpaar ist einer banknotenindividuellen Blockchain-Adresse des mobilen tragbaren Endgeräts zugeordnet und die Transaktionsfreigabe umfasst beispielsweise die Blockchain-Adresse der Banknote, eine Blockchain-Adresse des Zahlungsempfängers und einen zu zahlenden Betrag umfasst. In Block 602 wird unter Verwendung einer Seriennummer der Banknote, welche die Nachricht umfasst, eine Blockchain der Mehrzahl von Blockchains bestimmt, die dem Bereich von Seriennummern zugeordnet ist, der die Seriennummer umfasst. Dieses Bestimmen der Blockchain bzw. Zuordnen der Seriennummer des mobilen tragbaren Endgeräts zu einem Bereich von Seriennummern erfolgt beispielsweise unter Verwendung einer Routingtabelle. In Block 604 wird die Nachricht über an einen Blockchain-Server, welcher die bestimmte Blockchain verwaltet, zum Prüfen und Eintragen der von der Transaktionsfreigabe freigegebenen Transaktion in die bestimmte Blockchain weitergeleitet. Die Auswahl des zuständigen Blockchain-Servers und/oder eine Adressierung des ausgewählten Blockchain-Servers erfolgt beispielsweise unter Verwendung der Routingtabelle.

Figur 15 zeigt ein exemplarisches Verfahren zum Teilen einer Blockchain, beispielsweise durch einen Blockchain-Server eines die Blockchain verwaltenden Blockchain-Systems. In Block 620 wird überwacht, ob die Blockchain ein vordefiniertes Kriterium für eine Teilung erfüllt. Solange die Blockchain das Teilungskriterium nicht erfüllt, besteht keine Notwendigkeit für eine Teilung. Im Zuge der Überwachung wird geprüft, ob die Blockchain das Kriterium erfüllt. Falls die Prüfung in Block 622 ergibt, dass die Blockchain das Kriterium nicht erfüllt, wird die Überwachung fortgesetzt. Falls die Prüfung in Block 622 ergibt, dass die Blockchain das Kriterium nicht erfüllt, wird in Block 624 der Bereich von, welcher der zu teilenden Blockchain zugeordnet ist, in zwei oder mehr Teilbereiche aufgeteilt. Ferner wird in Block 626 die Blockchain geteilt und jedem der Teilbereiche im Zuge des Aufteilens eine eigenständige Blockchain zugeordnet.

Beispielsweise überwacht der Blockchain-Server in Block 620 eine Last der Blockchain. Bei dem vordefinierten Kriterium handelt es sich beispielsweise um ein Überschreiten eines vordefinierten Schwellenwerts der Last durch eine im Zuge der Überwachung erfasste aktuelle Last. Beispielsweise legt das vordefinierte Kriterium fest, dass eine Teilung erfolgt, falls der vordefinierte Schwellenwert durch die im Zuge der Überwachung erfasste aktuelle Last bereits einmalig überschritten wird oder falls der entsprechende Schwellenwert eine vordefinierte Zeit lang konstant überschritten wird. Beispielsweise sind zwei Schwellenwerte vordefiniert, wobei ein kleiner der beiden Schwellenwerte für eine Teilung eine vordefinierte Zeit lang konstant überschritten werden muss, werden bereits ein einmaliges Überschreiten des größeren Schwellenwert eine Teilung initiiert. Last ist beispielsweise definiert als Anzahl von einzutragenden Transaktionsfreigaben pro Zeit. Die Last kann ferner beispielsweise eine Anzahl an Abfragen, welche pro Zeit an die Blockchain gerichtet, berücksichtigen. Bei den Abfragen handelt es sich beispielsweise um Abfragen von Guthaben, welche Seriennummern des Bereiches zugeordnet sind, dem die entsprechende Blockchain zugeordnet ist.

Im Zuge der Teilung in Block 624 wird für jeden der potentiellen Teilbereiche beispielsweise jeweils bestimmt, welcher Anteil der erfassten aktuellen Last auf den entsprechenden Teilbereich entfällt, und das Aufteilen in die Teilbereiche wird so angepasst, dass ein Unterschied zwischen den auf die Teilbereiche entfallenden Teilbereiche kleiner oder gleich einem vordefinierten ersten Maximalwert sind. Beispielsweise erfolgt die Aufteilung so, dass der Unterschied minimiert wird. Beispielsweise erfolgt die Aufteilung so, dass der Unterschied verschwindet, d.h. der erste Maximalwert ist Null.

Beispielsweise überwacht der Blockchain-Server in Block 620 eine Summe von Guthaben, welche den Seriennummern des Bereichs von Seriennummern der entsprechenden Blockchain zugeordnet sind. Beispielswiese handelt es sich bei dem vordefinierten Kriterium um ein Überschreiten eines vordefinierten Schwellenwerts durch die Summe der Guthaben. Beispielsweise legt das vordefinierte Kriterium fest, dass eine Teilung erfolgt, falls der vordefinierte Schwellenwert durch die Summe der Guthaben bereits einmalig überschritten wird oder falls der entsprechende Schwellenwert eine vordefinierte Zeit lang konstant überschritten. Beispielsweise sind zwei Schwellenwerte vordefiniert, wobei ein kleiner der beiden Schwellenwerte für eine Teilung eine vordefinierte Zeit lang konstant überschritten werden muss, werden bereits ein einmaliges Überschreiten des größeren Schwellenwert eine Teilung initiiert.

Im Zuge der Teilung in Block 624 wird für jeden der potentiellen Teilbereiche beispielsweise jeweils eine Summe der Guthaben bestimmt, welche den Seriennummern des entsprechenden Teilbereichs zugeordnet sind, und das Aufteilen in die Teilbereiche so angepasst wird, dass ein Unterschied zwischen den Summen der Guthaben der Teilbereiche kleiner oder gleich einem vordefinierten zweiten Maximalwert sind. Dies kann beispielsweise die Wahrscheinlichkeit einer möglichst gleichmäßige zukünftigen Lastverteilung zwischen den resultierenden Blockchains erhöhen. Beispielsweise erfolgt die Aufteilung so, dass der Unterschied minimiert wird. Beispielsweise erfolgt die Aufteilung so, dass der Unterschied verschwindet, d.h. der zweite Maximalwert ist Null.

Beispielsweise wird der aufzuteilende Bereich von Seriennummern in Block 624 so aufgeteilt, dass Größenunterschiede der Teilbereiche hinsichtlich der von den Teilbereichen jeweils umfasst Anzahl an Seriennummern kleiner oder gleich einem vordefinierten dritten Maximalwert sind. Beispielsweise erfolgt die Aufteilung so, dass der Unterschied minimiert wird. Beispielsweise erfolgt die Aufteilung so, dass der Unterschied verschwindet, d.h. der dritte Maximalwert ist Null und jeder der Teilbereiche dieselbe Anzahl an Seriennummern umfasst.

Beispielsweise umfasst das Teilen der Blockchain in Block 624 ein Zuordnen der zu teilende Blockchain zu einem ersten der Teilbereiche. Die zu teilende Blockchain wird beispielsweise weiterhin zum Protokollieren von Zahlungen von Blockchain-Adressen von Seriennummern des ersten Teilbereichs verwendet. Für jeden Weiteren der Teilbereiche wird beispielsweise jeweils eine eigenständige zusätzliche Blockchain erzeugt. Das Erzeugen der zusätzlichen Blockchains umfasst jeweils ein Eintragen eines Teilungsvermerks für jede Blockchain-Adressen von Seriennummern des weiteren Teilbereichs in die zu teilenden Blockchain. Ferner wird ein Genesisblocks für der jede Blockchain-Adressen von Seriennummern des weiteren Teilbereichs in die zusätzliche Blockchain eingetragen. Die Genesisblöcke umfassen jeweils eine Angabe eines aktuellen Guthabens, welches der entsprechenden Seriennummer zum Zeitpunkt der Teilung in der zu teilenden Blockchain zugeordnet ist.

Die Teilungsvermerke haben beispielsweise zur Folge, dass in der zu teilende Blockchain keine Zahlungen von den entsprechenden Blockchain-Adressen mehr protokolliert werden können. Beispielsweise sind die Teilungsvermerke und/oder die Genesisblöcke jeweils mit einem privaten kryptographischen Schlüssel einer die Blockchains verwaltenden Instanz, wie etwa einer Zentralbank signiert.

Beispielsweise umfasst das Teilen der Blockchain in Block 624 ein Beenden der zu teilenden Blockchain sowie ein Erzeugen einer eine eigenständigen zusätzlichen Blockchain für jeden der Teilbereiche. Das Erzeugen der zusätzlichen Blockchains umfasst beispielsweise jeweils ein Eintragen eines Teilungsvermerks für jede Blockchain-Adressen von Seriennummern des weiteren Teilbereichs in die zu teilenden Blockchain und ein Eintragen eines Genesisblocks für der jede Blockchain-Adressen von Seriennummern des weiteren Teilbereichs in die zusätzliche Blockchain. Die Genesisblöcke umfassen jeweils eine Angabe eines aktuellen Guthabens, welches der entsprechenden Seriennummer zum Zeitpunkt der Teilung in der zu teilenden Blockchain zugeordnet ist.

Die Teilungsvermerke haben beispielsweise zur Folge, dass in der zu teilende Blockchain keine Zahlungen von den entsprechenden Blockchain-Adressen mehr protokolliert werden können. Beispielsweise ist die zu teilende Blockchain beendet, wenn für alle von ihr umfassten Blockchain-Adressen jeweils ein Teilungsvermerk eingetragen ist. Beispielsweise sind die Teilungsvermerke und/oder die Genesisblöcke jeweils mit einem privaten kryptographischen Schlüssel einer die Blockchains verwaltenden Instanz, wie etwa einer Zentralbank signiert.

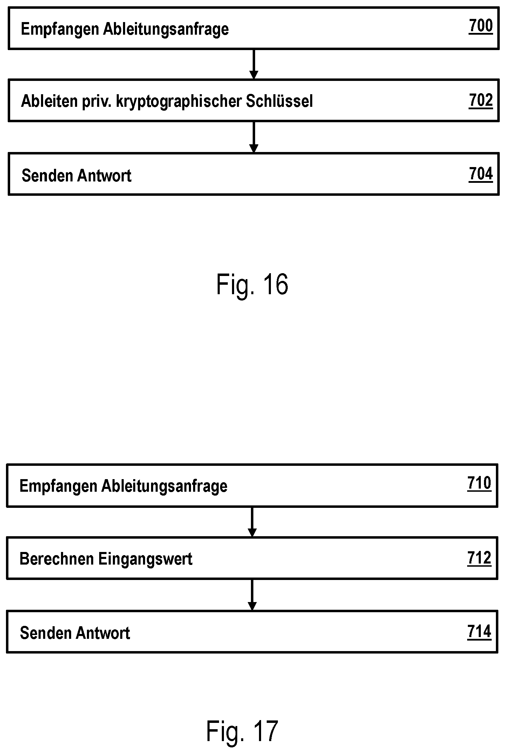

Figur 16 zeigt ein exemplarisches Verfahren zum Ableiten eines privaten kryptographischen Schlüssels einer Blockchain-Adresse für ein mobiles tragbares Endgerät unter Verwendung einer Banknote. Die Blockchain-Adresse des mobilen tragbaren Endgeräts ist von einer Blockchain-Adresse einer Banknote abhängig, bzw. ein der Banknote des mobilen tragbaren Endgeräts zugeordneter privater kryptographischer Schlüssel ist von einem einer Blockchain-Adresse der Banknote zugeordneten privaten kryptographischen Schlüssel abhängig. Die Banknote umfasst beispielsweise ein Sicherheitselement mit einem Prozessor und einem Speicher mit Programminstruktionen. In dem Speicher des Sicherheitselements ist eine Blockchain-Adresse der Banknote gespeichert. In einem geschützten Speicherbereich des Speichers des Sicherheitselements ist ein banknotenindividueller privater kryptographischer Schlüssel gespeichert.

In Block 700 empfängt die Banknote eine Ableitungsanfrage zum Ableiten des privaten kryptographischen Schlüssels von dem mobilen tragbaren Endgerät. In Block 702 leitet die Banknote den privaten kryptographischen Schlüssel für das mobile tragbare Endgerät unter Verwendung einer Einwegfunktion und des banknotenindividuellen privaten kryptographischen Schlüssels ab. In Block 704 sendet die Banknote den abgeleiteten privaten kryptographischen Schlüssel in Antwort auf die Ableitungsanfrage an das mobile tragbare Endgerät. Der abgeleitete private kryptographische Schlüssel dient dem mobilen tragbaren Endgerät zum Signieren von Transaktionsfreigaben. Beispielsweise berechnet die Banknote zusätzlich zu dem privaten kryptographischen Schlüssel einen öffentlichen kryptographischen Schlüssel und sendet das resultierende erste asymmetrische Schlüsselpaar an das mobile tragbare Endgerät. Beispielsweise wird der öffentliche kryptographische Schlüssel für den privaten kryptographischen Schlüssel von dem mobilen tragbaren Endgerät berechnet. Ferner umfasst die Antwort der Banknote beispielsweise eine Seriennummer zum Erstellen von Transaktionsfreigaben. Die Seriennummer ist beispielsweise von einer Seriennummer der Banknote abgeleitet. Beispielsweise umfasst die Banknote eine Mehrzahl von zusätzlichen Seriennummern zur Vergabe an mobile tragbare Endgeräte im Zuge eines Ableitens von privaten kryptographischen Schlüsseln für das entsprechende mobile tragbare Endgerät.

Figur 17 zeigt ein weiteres exemplarisches Verfahren zum Ableiten des privaten kryptographischen Schlüssels der Blockchain-Adresse für das mobile tragbare Endgerät unter Verwendung der Banknote. In Block 710 empfängt die Banknote eine Ableitungsanfrage zum Ableiten des privaten kryptographischen Schlüssels für das mobile tragbare Endgerät. In Block 712 berechnet die Banknote aus dem banknotenindividuellen privaten kryptographischen Schlüssel einen Eingangswert für die Einwegfunktion zum Ableiten des privaten kryptographischen Schlüssels für das mobile tragbare Endgerät. In Block 714 sendet die Banknote den berechneten Eingangswert in Antwort auf die Ableitungsanfrage an das mobile tragbare Endgerät. Das mobile tragbare Endgerät kann den gesendeten Eingangswert dann zum Ableiten des privaten kryptographischen Schlüssels unter Verwendung der Einwegfunktion verwenden. Ferner kann das mobile tragbare Endgerät einen öffentlichen kryptographischen Schlüssel für den privaten kryptographischen Schlüssel berechnen. Ferner umfasst die Antwort der Banknote beispielsweise eine Seriennummer zum Erstellen von Transaktionsfreigaben. Die Seriennummer ist beispielsweise von einer Seriennummer der Banknote abgeleitet. Beispielsweise umfasst die Banknote eine Mehrzahl von zusätzlichen Seriennummern zur Vergabe an mobile tragbare Endgeräte im Zuge eines Ableitens von privaten kryptographischen Schlüsseln für das entsprechende mobile tragbare Endgerät.

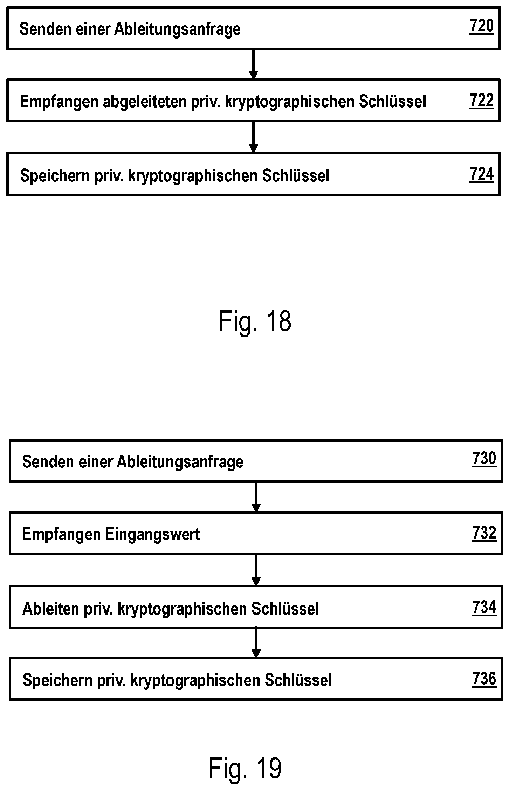

Figur 18 zeigt ein exemplarisches Verfahren zum Ableiten des privaten kryptographischen Schlüssels für das mobile tragbare Endgerät. Beispielsweise entspricht das Verfahren gemäß Figur 18 dem Verfahren aus Figur 16 aus Sicht des mobilen tragbaren Endgeräts. In Block 720 sendet das mobile tragbare Endgerät eine Ableitungsanfrage zum Ableiten des privaten kryptographischen Schlüssels an die Banknote. In Block 722 empfängt das mobile tragbare Endgerät in Antwort auf die Ableitungsanfrage den abgeleiteten privaten kryptographischen Schlüssel. Dieser private kryptographische Schlüssel ist beispielsweise unter Verwendung einer Einwegfunktion und des banknotenindividuellen privaten kryptographischen Schlüssels der Banknote abgeleitet. In Block 724 speichert das mobile tragbare Endgerät den abgeleiteten privaten kryptographischen Schlüssel zur weiteren Verwendung. Beispielsweise wird der private kryptographische Schlüssel in einem geschützten Speicherbereich des mobilen tragbaren Endgeräts gespeichert. Der abgeleitete private kryptographische Schlüssel dient dem mobilen tragbaren Endgerät zum Signieren von Zahlungsfreigaben. Beispielsweise empfängt das mobile tragbare Endgerät in Block 722 zusammen mit dem privaten kryptographischen Schlüssel einen öffentlichen kryptographischen Schlüssel. Beispielsweise wird der öffentliche kryptographische Schlüssel für den privaten kryptographischen Schlüssel von dem mobilen tragbaren Endgerät berechnet. Ferner umfasst die Antwort der Banknote in Block 722 beispielsweise eine Seriennummer zum Erstellen von Transaktionsfreigaben. Die Seriennummer ist beispielsweise von einer Seriennummer der Banknote abgeleitet. Beispielsweise umfasst die Banknote eine Mehrzahl von zusätzlichen Seriennummern zur Vergabe an mobile tragbare Endgeräte im Zuge eines Ableitens von privaten kryptographischen Schlüsseln für das entsprechende mobile tragbare Endgerät.

Figur 19 zeigt ein exemplarisches Verfahren zum Ableiten des privaten kryptographischen Schlüssels des mobilen tragbaren Endgeräts. Beispielsweise entspricht das Verfahren gemäß Figur 19 dem Verfahren aus Figur 17 aus Sicht des mobilen tragbaren Endgeräts. In Block 730 sendet das mobile tragbare Endgerät eine Ableitungsanfrage zum Ableiten des privaten kryptographischen Schlüssels für das abhängige anonyme Konto an die Banknote.

In Block 732 empfängt das mobile tragbare Endgerät in Antwort auf die Ableitungsanfrage von der Banknote einen aus dem banknotenindividuellen privaten kryptographischen Schlüssel berechneten Eingangswert für die Einwegfunktion zum Ableiten des privaten kryptographischen Schlüssels. In Block 734 leitet das mobile tragbare Endgerät den privaten kryptographischen Schlüssel unter Verwendung der Einwegfunktion und des empfangenen Eingangswerts ab. Ferner kann das mobile tragbare Endgerät einen öffentlichen kryptographischen Schlüssel für den privaten kryptographischen Schlüssel berechnen. In Block 736 speichert das mobile tragbare Endgerät den abgeleiteten privaten kryptographischen Schlüssel zur weiteren Verwendung. Beispielsweise wird der private kryptographische Schlüssel in einem geschützten Speicherbereich des mobilen tragbaren Endgeräts gespeichert. Der abgeleitete private kryptographische Schlüssel dient dem mobilen tragbaren Endgerät beispielsweise zur Signatur von Transaktionsfreigaben. Ferner umfasst die Antwort der Banknote in Block 732 beispielsweise eine Seriennummer zum Erstellen von Transaktionsfreigaben. Die Seriennummer ist beispielsweise von einer Seriennummer der Banknote abgeleitet. Beispielsweise umfasst die Banknote eine Mehrzahl von zusätzlichen Seriennummern zur Vergabe an mobile tragbare Endgeräte im Zuge eines Ableitens von privaten kryptographischen Schlüsseln für das entsprechende mobile tragbare Endgerät.

### Bezugszeichenliste

- 100: Banknote
- 102: Sicherheitselement
- 104: Kommunikationsschnittstelle
- 106: Seriennummer
- 107: visuelle Angabe
- 108: Nominalwert
- 110: Sicherheitsmerkmal
- 112: Nutzerschnittstelle
- 116: öfftl. Schlüssel
- 118: priv. Schlüssel
- 120: Speicher
- 122: geschützter Speicherbereich
- 124: Prozessor
- 128: Programminstruktionen
- 130: Terminal
- 132: Speicher
- 134: Prozessor
- 136: Programminstruktionen
- 137: Kommunikationsschnittstelle
- 138: Kommunikationsschnittstelle
- 139: Sensor
- 140: Blockchain-Server
- 141: Blockchain-Server
- 142: Prozessor
- 143: Prozessor
- 144: Programminstruktionen
- 145: Programminstruktionen
- 146: Speicher
- 147: Speicher
- 148: Blockchain
- 149: Blockchain
- 150: Register
- 151: Register
- 152: Kommunikationsschnittstelle
- 153: Kommunikationsschnittstelle
- 154: Blockchain-Netzwerk
- 156: Blockchain-System
- 157: System
- 160: Netzwerk
- 161: Blockchain-Server
- 162: Nutzer
- 163: Prozessor
- 164: PoS
- 165: Programminstruktionen
- 166: Speicher
- 167: Blockchain
- 168: Register
- 169: Schnittstelle
- 170: Server
- 172: Speicher
- 174: Prozessor
- 176: Programminstruktionen
- 178: Kommunikationsschnittstelle
- 180: mobiles tragbares Kommunikationsgerät
- 181: Nutzerschnittstelle
- 182: Speicher
- 184: Prozessor
- 186: Programminstruktionen
- 187: Kommunikationsschnittstelle
- 188: Kommunikationsschnittstelle
- 189: Kamera
- 190: Nutzercomputersystem
- 191: Nutzerschnittstelle
- 192: Speicher
- 194: Prozessor
- 196: Programminstruktionen
- 197: Kommunikationsschnittstelle
- 198: Kommunikationsschnittstelle
- 199: Sensor
- 200: Zahlungsdienstserver
- 202: Speicher
- 204: Prozessor
- 206: Programminstruktionen
- 208: Kommunikationsschnittstelle
- 210: Herstellercomputersystem
- 212: Speicher
- 214: Prozessor
- 216: Programminstruktionen
- 217: Kommunikationsschnittstelle
- 218: Kommunikationsschnittstelle
- 219: Sensor
- 220: Zentralcomputersystem
- 222: Speicher
- 224: Prozessor
- 226: Programminstruktionen
- 228: Kommunikationsschnittstelle
- 229: Sensor

## Patentansprüche

1. Verfahren zum Ausführen einer Zahlung unter Verwendung eines ersten mobilen tragbaren Endgeräts (100) einer Mehrzahl von mobilen tragbaren Endgeräten und eines Blockchain-Systems (156),
wobei das Blockchain-System (156) eine Mehrzahl von Blockchains (148, 149, 167) umfasst, wobei jeder der Blockchains (148, 149, 167) jeweils ein oder mehrere Blockchain-Server (140, 141, 161) zugeordnet sind, welche die entsprechende Blockchain (148, 149, 167) verwalten,
wobei jedem mobilen tragbaren Endgerät der Mehrzahl von mobilen tragbaren Endgeräten jeweils eine Seriennummer aus einem Raum von Seriennummern zugeordnet ist, wobei der Raum von Seriennummern unterteilt ist in eine Mehrzahl von Bereichen von Seriennummern, wobei jedem der Bereiche von Seriennummern jeweils eine der Blockchains (148, 149, 167) des Blockchain-Systems (156) zugeordnet ist, welche Zahlungen von Blockchain-Adressen protokolliert, welche mobilen tragbaren Endgeräten mit Seriennummern aus dem entsprechenden Bereich von Seriennummern zugeordnet sind,
wobei das Verfahren umfasst:
• Empfangen einer Nachricht des ersten mobilen tragbaren Endgeräts (100) mit einer Transaktionsfreigabe, wobei die Transaktionsfreigabe unter Verwendung eines privaten kryptographischen Schlüssels (118) eines asymmetrischen Schlüsselpaars des ersten mobilen tragbaren Endgeräts (100) signiert ist, wobei das asymmetrische Schlüsselpaar einer erste Blockchain-Adresse des ersten mobilen tragbaren Endgeräts (100) zugeordnet ist, wobei die Transaktionsfreigabe die erste Blockchain-Adresse des ersten mobilen tragbaren Endgeräts (100), eine zweite Blockchain-Adresse des Zahlungsempfängers und einen zu zahlenden Betrag umfasst,
• Bestimmen unter Verwendung einer ersten Seriennummer (106) des ersten mobilen tragbaren Endgeräts (100), welche die Nachricht umfasst, einer ersten Blockchain (148) der Mehrzahl von Blockchains (148, 149, 167), welche demjenigen Bereich von Seriennummern zugeordnet ist, welcher die erste Seriennummer (106) umfasst,
• Weiterleiten der Nachricht an einen ersten Blockchain-Server (140), welcher die bestimmte erste Blockchain (148) verwaltet, zum Prüfen und Eintragen der von der Transaktionsfreigabe freigegebenen Transaktion in die erste Blockchain (148).

2. Verfahren nach Anspruch 1, wobei es sich bei dem ersten mobilen tragbaren Endgerät (100) um eine von einer Zentralbank ausgegebenen ersten Banknote handelt, wobei es sich bei der ersten Blockchain-Adresse um eine banknotenindividuelle Blockchain-Adresse handelt, wobei es sich bei dem privaten kryptographischen Schlüssel (118) um einen banknotenindividuellen privaten kryptographischen Schlüsseleines banknotenindividuellen asymmetrischen Schlüsselpaars handelt, oder
wobei es sich bei dem privaten kryptographischen Schlüssel des ersten mobilen tragbaren Endgeräts (100) um einen abgeleiteten privaten kryptographischen Schlüssel einer Blockchain-Adresse handelt, welche von einer Blockchain-Adresse einer zweiten Banknote (100) abhängig ist, wobei die zweite Banknote (100) ein Sicherheitselement (102) mit einem Prozessor (124) und einem Speicher (120) mit Programminstruktionen (128) umfasst,
wobei in dem Speicher (120) des Sicherheitselements (102) die Blockchain-Adresse der zweiten Banknote (100) gespeichert ist, wobei in einem geschützten Speicherbereich (122) des Speichers (120) des Sicherheitselements (102) der zweiten Banknote (100) ein banknotenindividueller kryptographischer Schlüssel der zweiten Banknote (100) gespeichert ist,
wobei ein Ableiten des privaten kryptographischen Schlüssels des ersten mobilen tragbaren Endgeräts (100) umfasst:
• Empfangen einer Ableitungsanfrage zum Ableiten des privaten kryptographischen Schlüssels für das erste mobile tragbare Endgerät (100) durch die zweite Banknote (100),
• Initiieren eines Ableitens des privaten kryptographischen Schlüssels für das erste mobile tragbare Endgerät (100) unter Verwendung einer Einwegfunktion und des banknotenindividuellen kryptographischen Schlüssels der zweiten Banknote (100),
• Senden der ersten Seriennummer (106) an das erste mobile tragbare Endgerät (100) durch die zweite Banknote (100).

3. Verfahren nach einem der vorangehenden Ansprüche, wobei es sich bei der ersten Blockchain-Adresse um die erste Seriennummer (106) des ersten mobilen tragbaren Endgeräts (100) handelt oder die erste Blockchain-Adresse aus der ersten Seriennummer (106) des ersten mobilen tragbaren Endgeräts (100) abgeleitet ist,
wobei beispielsweise ein öffentlicher kryptographischer Schlüssel (116) des asymmetrischen Schlüsselpaars des ersten mobilen tragbaren Endgeräts (100) der ersten Blockchain-Adresse durch eine die erste Blockchain-Adresse initialisierenden Transaktion an die erste Blockchain-Adresse zugeordnet wird, mit welcher der öffentliche kryptographische Schlüssel (116) des asymmetrischen Schlüsselpaars des ersten mobilen tragbaren Endgeräts (100) in die erste Blockchain (148) eingetragen wird, oder
wobei es sich bei der ersten Blockchain-Adresse um den öffentlichen kryptographischen Schlüssel (116) des asymmetrischen Schlüsselpaars des ersten mobilen tragbaren Endgeräts (100) handelt oder die erste Blockchain-Adresse aus dem öffentlichen kryptographischen Schlüssel (116) des asymmetrischen Schlüsselpaars des ersten mobilen tragbaren Endgeräts (100) abgeleitet ist.
wobei beispielsweise die erste Seriennummer (106) der ersten Blockchain-Adresse durch eine initiale Transaktion an die erste Blockchain-Adresse zugeordnet wird, mit welcher die erste Seriennummer (106) in die erste Blockchain (148) eingetragen wird.

4. Verfahren nach einem der vorangehenden Ansprüche, wobei das Weiterleiten der Nachricht an den ersten Blockchain-Server (140) unter Verwendung einer Routingtabelle erfolgt, welche für die Bereiche der Mehrzahl von Bereichen von Seriennummern jeweils ein oder mehrere zugeordnete Blockchain-Server identifiziert, welche die dem entsprechenden Bereich von Seriennummern zugeordnete Blockchain verwalten,
wobei die Routingtabelle beispielsweise ferner jeweils eine Netzwerkadresse der Blockchain-Server (140, 141, 161) identifiziert.

5. Verfahren nach einem der vorangehenden Ansprüche, wobei das Empfangen und Weiterleiten der Nachricht durch ein Terminalcomputersystem (130, 180, 190) oder einen Server (170, 200) erfolgt.

6. Verfahren nach einem der Ansprüche 1 bis 4, wobei das Empfangen und Weiterleiten der Nachricht durch einen Blockchain-Server (141, 161) des Blockchain-Systems (156) erfolgt.

7. Verfahren nach Anspruch 6, wobei der Blockchain-Server (141, 161) ferner dazu konfiguriert ist eine der Blockchains (148, 149, 167) des Blockchain-Systems (156) zu teilen, falls ein vordefiniertes Kriterium erfüllt wird, wobei das Teilen der Blockchain ein Aufteilen des Bereichs von Seriennummern umfasst, welcher der zu teilenden Blockchain zugeordnet ist, in zwei oder mehr Teilbereiche, wobei jedem der Teilbereiche im Zuge des Aufteilens eine eigenständige Blockchain zugeordnet wird.

8. Verfahren nach Anspruch 7, wobei der Blockchain-Server (141, 161) eine Last der Blockchain überwacht, wobei es sich bei dem vordefinierten Kriterium um ein Überschreiten eines vordefinierten Schwellenwerts der Last durch eine im Zuge der Überwachung erfasste aktuelle Last handelt,
wobei beispielsweise für jeden der Teilbereiche jeweils bestimmt wird, welcher Anteil der erfassten aktuellen Last auf den entsprechenden Teilbereich entfällt, und das Aufteilen in die Teilbereiche so angepasst wird, dass ein Unterschied zwischen den auf die Teilbereiche entfallenden Teilbereiche kleiner oder gleich einem vordefinierten ersten Maximalwert sind.

9. Verfahren nach Anspruch 7, wobei es sich bei dem vordefinierten Kriterium um ein Überschreiten eines vordefinierten Schwellenwerts einer Summe von Guthaben handelt, welche den Seriennummern des Bereichs von Seriennummern der entsprechenden Blockchain zugeordnet sind,
wobei beispielsweise für jeden der Teilbereiche jeweils eine Summe der Guthaben bestimmt wird, welche den Seriennummern des entsprechenden Teilbereichs zugeordnet sind, und das Aufteilen in die Teilbereiche so angepasst wird, dass ein Unterschied zwischen den Summen der Guthaben der Teilbereiche kleiner oder gleich einem vordefinierten zweiten Maximalwert sind.

10. Verfahren nach einem der Anspruche 7 bis 9, wobei der aufzuteilende Bereich von Seriennummern so aufgeteilt wird, dass Größenunterschiede der Teilbereiche hinsichtlich der von den Teilbereichen jeweils umfasst Anzahl an Seriennummern kleiner oder gleich einem vordefinierten dritten Maximalwert sind.

11. Verfahren nach einem der Ansprüche 7 bis 10, wobei die zu teilende Blockchain einem ersten der Teilbereiche zugeordnet wird und zum Protokollieren von Zahlungen von Blockchain-Adressen von Seriennummern des ersten Teilbereichs weiterverwendet wird, wobei für jeden Weiteren der Teilbereiche jeweils eine eigenständige zusätzliche Blockchain erzeugt wird, wobei das Erzeugen der zusätzlichen Blockchains umfasst jeweils:
• Eintragen eines Teilungsvermerks für jede Blockchain-Adressen von Seriennummern des weiteren Teilbereichs in die zu teilenden Blockchain,
• Eintragen eines Genesisblocks für der jede Blockchain-Adressen von Seriennummern des weiteren Teilbereichs in die zusätzliche Blockchain, wobei die Genesisblöcke jeweils eine Angabe eines aktuellen Guthabens umfassen, welches der entsprechenden Seriennummer zum Zeitpunkt der Teilung in der zu teilenden Blockchain zugeordnet ist, oder
wobei die zu teilende Blockchain beendet wird und für jeden der Teilbereiche jeweils eine eigenständige zusätzliche Blockchain erzeugt wird, wobei das Erzeugen der zusätzlichen Blockchains umfasst jeweils:
• Eintragen eines Teilungsvermerks für jede Blockchain-Adressen von Seriennummern des weiteren Teilbereichs in die zu teilenden Blockchain,
• Eintragen eines Genesisblocks für der jede Blockchain-Adressen von Seriennummern des weiteren Teilbereichs in die zusätzliche Blockchain, wobei die Genesisblöcke jeweils eine Angabe eines aktuellen Guthabens umfassen, welches der entsprechenden Seriennummer zum Zeitpunkt der Teilung in der zu teilenden Blockchain zugeordnet ist.

12. Verfahren nach einem der vorangehenden Ansprüche, wobei es sich bei der zweiten Blockchain-Adresse des Zahlungsempfängers um eine zweite Blockchain-Adresse eines zweiten mobilen tragbaren Endgeräts des Zahlungsempfängers handelt, wobei die Nachricht eine zweite Seriennummer des zweiten mobilen tragbaren Endgeräts des Zahlungsempfängers umfasst,
wobei das Verfahren ferner umfasst:
• auf ein Eintragen der von der Transaktionsfreigabe freigegebenen Transaktion in die erste Blockchain (148) hin, Prüfen, ob die zweite Seriennummer von einem Bereich von Seriennummern umfasst ist, welcher einer anderen, zweiten Blockchain der Mehrzahl von Blockchains (148, 149, 167) als der ersten Blockchain zugeordnet ist,
• falls die zweite Seriennummer einer anderen, zweiten Blockchain (149, 167) zugeordnet ist, Bestimmen der zweiten Blockchain (149, 167), welcher die zweite Seriennummer zugeordnet ist,
• Erzeugen einer Eintragungsbestätigung der freigegebenen Transaktion in die erste Blockchain, welche die Transaktionsfreigabe umfasst,
• Senden der Eintragungsbestätigung an einen zweiten Blockchain-Server (141, 161), welcher die zweite Blockchain (149, 167) verwaltet, zum zusätzlichen Eintragen der von der Transaktionsfreigabe freigegebenen Transaktion in die zweite Blockchain (149, 167),
wobei beispielsweise die Eintragungsbestätigung die zweite Seriennummer in einem Header umfasst und/oder
wobei beispielsweise die Eintragungsbestätigung von dem ersten Blockchain-Server (140) signiert ist und/oder
wobei beispielsweise das Verfahren ferner ein Prüfen der Eintragungsbestätigung durch den zweiten Blockchain-Server (141, 161) umfasst, wobei der zweite Blockchain-Server (141, 161) auf ein erfolgreiches Prüfen hin die von der Transaktionsfreigabe freigegebene Transaktion zusätzlich in die zweite Blockchain (149, 167) einträgt.

13. Computersystem (130, 141, 161, 170, 180, 190, 200) zum Ausführen einer Zahlung unter Verwendung eines mobilen tragbaren Endgeräts (100) einer Mehrzahl von mobilen tragbaren Endgeräten und eines Blockchain-Systems (156),
wobei das Blockchain-System (156) eine Mehrzahl von Blockchains (148, 149, 167) umfasst, wobei jeder der Blockchains (148, 149, 167) jeweils ein oder mehrere Blockchain-Server (140, 141, 161) zugeordnet sind, welche die entsprechende Blockchain (148, 149, 167) verwalten,
wobei jedem mobilen tragbaren Endgerät (100) der Mehrzahl von mobilen tragbaren Endgeräten jeweils eine Seriennummer aus einem Raum von Seriennummern zugeordnet ist, wobei der Raum von Seriennummern unterteilt ist in eine Mehrzahl von Bereichen von Seriennummern, wobei jedem der Bereiche von Seriennummern jeweils eine der Blockchains (148, 149, 167) des Blockchain-Systems (156) zugeordnet ist, welche Zahlungen von Blockchain-Adressen protokolliert, welche mobilen tragbaren Endgeräten mit Seriennummern aus dem entsprechenden Bereich von Seriennummern zugeordnet sind,
wobei das Computersystem (130, 141, 161, 170, 180, 190, 200) einen Prozessor (134 143, 163, 174, 184, 194, 204), einen Speicher (132, 147, 167, 172, 182, 192, 202) mit Programminstruktionen (136, 145, 165, 176, 186, 196, 206) und eine Kommunikationsschnittstelle (138, 153, 169, 178, 188, 198, 208) umfasst, wobei der Prozessor (134 143, 163, 174, 184, 194, 204) dazu konfiguriert ist bei Ausführen der Programminstruktionen (136, 145, 165, 176, 186, 196, 206) Folgendes auszuführen:
• Empfangen einer Nachricht des mobilen tragbaren Endgeräts (100) mit einer Transaktionsfreigabe über die Kommunikationsschnittstelle (138, 153, 169, 178, 188, 198, 208), wobei die Transaktionsfreigabe unter Verwendung eines privaten kryptographischen Schlüssels (118) eines asymmetrischen Schlüsselpaars des mobilen tragbaren Endgeräts (100) signiert ist, wobei das asymmetrische Schlüsselpaar einer Blockchain-Adresse des mobilen tragbaren Endgeräts (100) zugeordnet ist, wobei die Transaktionsfreigabe die Blockchain-Adresse des mobilen tragbaren Endgeräts (100), eine Blockchain-Adresse des Zahlungsempfängers und einen zu zahlenden Betrag umfasst,
• Bestimmen unter Verwendung einer Seriennummer (106) des mobilen tragbaren Endgeräts (100), welche die Nachricht umfasst, einer Blockchain (148) der Mehrzahl von Blockchains (148, 149, 167), welche demjenigen Bereich von Seriennummern zugeordnet ist, welcher die Seriennummer (106) umfasst,
• Weiterleiten der Nachricht über die Kommunikationsschnittstelle (138, 153, 169, 178, 188, 198, 208) an einen Blockchain-Server (140), welcher die bestimmte Blockchain (148) verwaltet, zum Prüfen und Eintragen der von der Transaktionsfreigabe freigegebenen Transaktion in die bestimmte Blockchain (148).

14. System (157), umfassend ein Computersystem nach Anspruch 13 und ein mobiles tragbares Endgerät (100), wobei das mobile tragbare Endgerät (100) ein Sicherheitselement (102) mit einem Prozessor (124) und einem Speicher (120) mit Programminstruktionen (128) umfasst,
wobei in einem geschützten Speicherbereich (122) des Speichers (120) private kryptographische Schlüssel (118) des mobilen tragbaren Endgeräts (100) gespeichert ist,
wobei der Prozessor (124) dazu konfiguriert ist bei Ausführen der Programminstruktionen (128) Folgendes zu auszuführen:
• Empfangen einer Zahlungsanfrage für eine Zahlung mit dem mobilen tragbaren Endgerät (100) in Form der Transaktion des zu zahlenden Betrags von der Blockchain-Adresse des mobilen tragbaren Endgeräts (100) an die Blockchain-Adresse des Zahlungsempfängers, wobei die Zahlungsanfrage den zu zahlenden Betrag und die Blockchain-Adresse des Zahlungsempfängers angibt,
• Signieren der Transaktionsfreigabe mit dem privaten kryptographischen Schlüssel (118) des mobilen tragbaren Endgeräts (100),
• Senden der Nachricht mit der signierten Transaktionsfreigabe.

15. System (157) nach Anspruch 14, ferner umfassend ein Blockchain-System (156) mit einer Mehrzahl von Blockchains (148, 149, 167), wobei jeder der Blockchains (148, 149, 167) jeweils ein oder mehrere Blockchain-Server (140,141, 161) zugeordnet sind, welche die entsprechende Blockchain (148, 149, 167) verwalten, wobei ein Raum von Seriennummern von verwendeten mobilen tragbaren Endgeräten unterteilt ist in eine Mehrzahl von Bereichen von Seriennummern, wobei jedem der Bereiche von Seriennummern jeweils eine der Blockchains (148, 149, 167) des Blockchain-Systems (156) zugeordnet ist, welche Zahlungen von Blockchain-Adressen protokolliert, welche mobilen tragbaren Endgeräten mit Seriennummern aus dem entsprechenden Bereich von Seriennummern zugeordnet sind.

## Claims

1. A method for executing a payment using a first mobile portable terminal (100) of a plurality of mobile portable terminals and a blockchain system (156),
wherein the blockchain system (156) comprises a plurality of blockchains (148, 149, 167), wherein each of the blockchains (148, 149, 167) is assigned to one or more blockchain servers (140, 141, 161), which manage the corresponding blockchain (148, 149, 167),
wherein each mobile portable terminal of the plurality of mobile portable terminals is assigned a respective serial number from a space of serial numbers, wherein the space of serial numbers is divided into a plurality of ranges of serial numbers, wherein each of the ranges of serial numbers is assigned a respective one of the blockchains (148, 149, 167) of the blockchain system (156) which logs payments from blockchain addresses assigned to mobile portable terminals with serial numbers from the corresponding range of serial numbers,
wherein the method comprises:
• receiving a message of the first mobile portable terminal (100) with a transaction release, wherein the transaction release is signed using a private cryptographic key (118) of an asymmetric key pair of the first mobile portable terminal (100), wherein the asymmetric key pair is assigned to a first blockchain address of the first mobile portable terminal (100), wherein the transaction release comprises the first blockchain address of the first mobile portable terminal (100), a second blockchain address of the payee and an amount to be paid,
• determining, using a first serial number (106) of the first mobile portable terminal (100) comprising the message, a first blockchain (148) of the plurality of blockchains (148, 149, 167) associated with the range of serial numbers comprising the first serial number (106),
• forwarding the message to a first blockchain server (140), which manages the particular first blockchain (148), for checking and entering the transaction released by the transaction release into the first blockchain (148).

2. The method according to claim 1, wherein the first mobile portable terminal (100) is a first banknote issued by a central bank, wherein the first blockchain address is a banknote-specific blockchain address, wherein the private cryptographic key (118) is a banknote-specific private cryptographic key of a banknote-specific asymmetric key pair, or
wherein the private cryptographic key of the first mobile portable terminal (100) is a derived private cryptographic key of a blockchain address which is dependent on a blockchain address of a second banknote (100), wherein the second banknote (100) comprises a security element (102) with a processor (124) and a memory (120) with program instructions (128),
wherein the blockchain address of the second banknote (100) is stored in the memory (120) of the security element (102), wherein a banknote-specific cryptographic key of the second banknote (100) is stored in a protected memory area (122) of the memory (120) of the security element (102) of the second banknote (100),
wherein deriving the private cryptographic key of the first mobile portable terminal (100) comprises:
• receiving a derivation request for deriving the private cryptographic key for the first mobile portable terminal (100) by the second banknote (100),
• initiating a derivation of the private cryptographic key for the first mobile portable terminal (100) using a one-way function and the banknote-specific cryptographic key of the second banknote (100),
• sending the first serial number (106) to the first mobile portable terminal (100) by the second banknote (100).

3. The method according any to one of the preceding claims, wherein the first blockchain address is the first serial number (106) of the first mobile portable terminal (100) or the first blockchain address is derived from the first serial number (106) of the first mobile portable terminal (100),
wherein, for example, a public cryptographic key (116) of the asymmetric key pair of the first mobile portable terminal (100) is assigned to the first blockchain address by a transaction, initialising the first blockchain address, to the first blockchain address, with which the public cryptographic key (116) of the asymmetric key pair of the first mobile portable terminal (100) is entered into the first blockchain (148), or
wherein the first blockchain address is the public cryptographic key (116) of the asymmetric key pair of the first mobile portable terminal (100) or the first blockchain address is derived from the public cryptographic key (116) of the asymmetric key pair of the first mobile portable terminal (100),
wherein, for example, the first serial number (106) is assigned to the first blockchain address by an initial transaction to the first blockchain address, with which the first serial number (106) is entered into the first blockchain (148).

4. The method according to any one of the preceding claims, wherein the message is forwarded to the first blockchain server (140) using a routing table which identifies, for each of the ranges of the plurality of serial numbers, one or more assigned blockchain servers which manage the blockchain assigned to the corresponding range of serial numbers,
wherein the routing table further identifies, for example, a respective network address of the blockchain servers (140, 141, 161).

5. The method according to any one of the preceding claims, wherein the receiving and forwarding of the message is carried out by a terminal computer system (130, 180, 190) or a server (170, 200).

6. The method according to any one of claims 1 to 4, wherein the receiving and forwarding of the message is performed by a blockchain server (141, 161) of the blockchain system (156).

7. The method according to claim 6, wherein the blockchain server (141, 161) is further configured to split one of the blockchains (148, 149, 167) of the blockchain system (156) if a predefined criterion is met, wherein the splitting of the blockchain comprises splitting the range of serial numbers assigned to the blockchain to be split into two or more sub-ranges, wherein each of the sub-ranges is assigned to an independent blockchain in the course of the splitting.

8. The method according to claim 7, wherein the blockchain server (141, 161) monitors a load of the blockchain, wherein the predefined criterion is an exceeding of a predefined threshold value of the load by a current load detected in the course of the monitoring,
wherein, for example, it is determined for each of the sub-ranges in each case what proportion of the detected current load is attributable to the corresponding sub-range, and the division into the sub-ranges is adapted such that a difference between the sub-ranges attributable to the sub-ranges is less than or equal to a predefined first maximum value.

9. The method according to claim 7, wherein the predefined criterion is an exceeding of a predefined threshold value of a sum of balances associated with the serial numbers of the range of serial numbers of the corresponding blockchain,
wherein, for example, for each of the sub-ranges, a sum of the balances assigned to the serial numbers of the corresponding sub-range is determined, and the splitting into the sub-ranges is adjusted such that a difference between the sums of the balances of the sub-ranges are less than or equal to a predefined second maximum value.

10. The method according to any one of claims 7 to 9, wherein the range of serial numbers to be divided is divided in such a way that differences in size of the sub-ranges with respect to the number of serial numbers comprised by the sub-ranges are smaller than or equal to a predefined third maximum value.

11. The method according to any one of claims 7 to 10, wherein the blockchain to be divided is assigned to a first of the sub-ranges and is further used for logging payments of blockchain addresses of serial numbers of the first sub-range, wherein for each further of the sub-ranges an independent additional blockchain is generated in each case, wherein the generation of the additional blockchains comprises in each case:
• entering a division note for each blockchain address of serial numbers of the further sub-range into the blockchain to be divided,
• entering a genesis block for each blockchain address of serial numbers of the further sub-range into the additional blockchain, wherein the genesis blocks each comprise an indication of a current balance which is assigned to the corresponding serial number at the time of the division in the blockchain to be divided, or
wherein the blockchain to be divided is terminated and an independent additional blockchain is created for each of the sub-ranges, wherein the creation of the additional blockchains comprises in each case:
• entering a division note for each blockchain address of serial numbers of the further sub-range into the blockchain to be divided,
• entering a genesis block for each blockchain address of serial numbers of the further sub-range into the additional blockchain, wherein the genesis blocks each comprise an indication of a current balance which is assigned to the corresponding serial number at the time of the division in the blockchain to be divided.

12. The method according to any of the preceding claims, wherein the second blockchain address of the payee is a second blockchain address of a second mobile portable terminal of the payee, wherein the message comprises a second serial number of the second mobile portable terminal of the payee,
wherein the method further comprises:
• upon an entry of the transaction released by the transaction release into the first blockchain (148), checking whether the second serial number is included in a range of serial numbers which is assigned to a different, second blockchain of the plurality of blockchains (148, 149, 167) than the first blockchain,
• if the second serial number is assigned to another, second blockchain (149, 167), determining the second blockchain (149, 167) to which the second serial number is assigned,
• generating a confirmation entry of the released transaction in the first blockchain, which includes the transaction release,
• sending the entry confirmation to a second blockchain server (141, 161), which manages the second blockchain (149, 167), for additional entry of the transaction released by the transaction release into the second blockchain (149, 167),
wherein, for example, the entry confirmation comprises the second serial number in a header, and/or
wherein, for example, the entry confirmation is signed by the first blockchain server (140), and/or
wherein, for example, the method further comprises checking the entry confirmation by the second blockchain server (141, 161), wherein the second blockchain server (141, 161) additionally enters the transaction released by the transaction release into the second blockchain (149, 167) upon a successful check.

13. A computer system (130, 141, 161, 170, 180, 190, 200) for executing a payment using a mobile portable terminal (100) of a plurality of mobile portable terminals and a blockchain system (156),
wherein the blockchain system (156) comprises a plurality of blockchains (148, 149, 167), wherein each of the blockchains (148, 149, 167) is associated with one or more blockchain servers (140, 141, 161) which manage the corresponding blockchain (148, 149, 167),
wherein each mobile portable terminal (100) of the plurality of mobile portable terminals is assigned a respective serial number from a space of serial numbers, wherein the space of serial numbers is divided into a plurality of ranges of serial numbers, wherein each of the ranges of serial numbers is assigned a respective one of the blockchains (148, 149, 167) of the blockchain system (156) which logs payments from blockchain addresses assigned to mobile portable terminals with serial numbers from the corresponding range of serial numbers,
wherein the computer system (130, 141, 161, 170, 180, 190, 200) comprises a processor (134, 143, 163, 174, 184, 194, 204), a memory (132, 147, 167, 172, 182, 192, 202) with program instructions (136, 145, 165, 176, 186, 196, 206) and a communication interface (138, 153, 169, 178, 188, 198, 208), wherein the processor (134, 143, 163, 174, 184, 194, 204) is configured to perform the following upon execution of the program instructions (136, 145, 165, 176, 186, 196, 206):
• receiving a message of the mobile portable terminal (100) with a transaction release via the communication interface (138, 153, 169, 178, 188, 198, 208), wherein the transaction release is signed using a private cryptographic key (118) of an asymmetric key pair of the mobile portable terminal (100), wherein the asymmetric key pair is assigned to a blockchain address of the mobile portable terminal (100), wherein the transaction release comprises the blockchain address of the mobile portable terminal (100), a blockchain address of the payee and an amount to be paid,
• determining, using a serial number (106) of the mobile portable terminal (100) comprising the message, a blockchain (148) of the plurality of blockchains (148, 149, 167) assigned to the range of serial numbers comprising the serial number (106),
• forwarding the message via the communication interface (138, 153, 169, 178, 188, 198, 208) to a blockchain server (140), which manages the particular blockchain (148), for checking and entering the transaction released by the transaction release into the particular blockchain (148).

14. A system (157) comprising a computer system according to claim 13 and a mobile portable terminal (100), wherein the mobile portable terminal (100) comprises a security element (102) with a processor (124) and a memory (120) with program instructions (128),
wherein private cryptographic keys (118) of the mobile portable terminal (100) are stored in a protected memory area (122) of the memory (120),
wherein the processor (124) is configured to execute the following when executing the program instructions (128):
• receiving a payment request for a payment with the mobile portable terminal (100) in the form of the transaction of the amount to be paid from the blockchain address of the mobile portable terminal (100) to the blockchain address of the payee, wherein the payment request specifies the amount to be paid and the blockchain address of the payee,
• signing the transaction release with the private cryptographic key (118) of the mobile portable terminal (100),
• sending the message with the signed transaction release.

15. The system (157) according to claim 14, further comprising a blockchain system (156) having a plurality of blockchains (148, 149, 167), wherein each of the blockchains (148, 149, 167) is associated with one or more blockchain servers (140, 141, 161) that manage the corresponding blockchain (148, 149, 167), wherein a space of serial numbers of mobile portable terminals used is divided into a plurality of ranges of serial numbers, wherein each of the ranges of serial numbers is associated with one of the blockchains (148, 149, 167) of the blockchain system (156), which logs payments from blockchain addresses associated with mobile portable terminals with serial numbers from the corresponding range of serial numbers.

## Revendications

1. Procédé d'exécution d'un paiement en utilisant un premier terminal portable mobile (100) d'une pluralité de terminaux portables mobiles et un système de blockchain (156),
dans lequel le système de blockchain (156) comprend une pluralité de blockchains (148, 149, 167), dans lequel chacune des blockchains (148, 149, 167) est attribuée à un ou plusieurs serveurs de blockchain (140, 141, 161), qui gèrent la blockchain (148, 149, 167) correspondante,
dans lequel chaque terminal portable mobile de la pluralité de terminaux portables mobiles se voit attribuer un numéro de série respectif depuis un espace de numéros de série, dans lequel l'espace de numéros de série est divisé en une pluralité de plages de numéros de série, dans lequel chacune des plages de numéros de série se voit attribuer l'une des blockchains (148, 149, 167) respectives du système de blockchain (156) qui consigne les paiements depuis les adresses de blockchain attribuées aux terminaux portables mobiles avec des numéros de série de la plage correspondante de numéros de série,
dans lequel le procédé comprend les étapes consistant à :
• recevoir un message du premier terminal portable mobile (100) avec une libération de transaction, dans lequel la libération de transaction est signée en utilisant une clé cryptographique privée (118) d'une paire de clés asymétriques du premier terminal portable mobile (100), dans lequel la paire de clés asymétriques est attribuée à une première adresse de blockchain du premier terminal portable mobile (100), dans lequel la libération de transaction comprend la première adresse de blockchain du premier terminal portable mobile (100), une seconde adresse de blockchain du bénéficiaire et une somme à payer,
• déterminer, en utilisant un premier numéro de série (106) du premier terminal portable mobile (100) comprenant le message, une première blockchain (148) de la pluralité de blockchains (148, 149, 167) associées à la plage de numéros de série comprenant le premier numéro de série (106),
• transférer le message à un premier serveur de blockchain (140), qui gère la première blockchain (148) particulière, pour contrôler et entrer la transaction libérée par la libération de transaction dans la première blockchain (148).

2. Procédé selon la revendication 1, dans lequel le premier terminal portable mobile (100) est un premier billet de banque émis par une banque centrale, dans lequel la première adresse de blockchain est une adresse de blockchain spécifique d'un billet de banque, dans lequel la clé cryptographique privée (118) est une clé cryptographique privée spécifique d'un billet de banque d'une paire de clés asymétriques spécifiques d'un billet de banque, ou
dans lequel la clé cryptographique privée du premier terminal portable mobile (100) est une clé cryptographique privée dérivée d'une adresse de blockchain qui est dépendante d'une adresse de blockchain d'un second billet de banque (100), dans lequel le second billet de banque (100) comprend un élément de sécurité (102) avec un processeur (124) et une mémoire (120) avec des instructions de programme (128),
dans lequel l'adresse de blockchain du second billet de banque (100) est stockée dans la mémoire (120) de l'élément de sécurité (102), dans lequel une clé cryptographique spécifique d'un billet de banque du second billet de banque (100) est stockée dans une zone de mémoire protégée (122) de la mémoire (120) de l'élément de sécurité (102) du second billet de banque (100),
dans lequel l'étape consistant à dériver la clé cryptographique privée du premier terminal portable mobile (100) comprend les étapes consistant à :
• recevoir une requête de dérivation pour faire dériver la clé cryptographique privée pour le premier terminal portable mobile (100) par le second billet de banque (100),
• initier une dérivation de la clé cryptographique privée pour le premier terminal portable mobile (100) en utilisant une fonction unidirectionnelle et la clé cryptographique spécifique d'un billet de banque du second billet de banque (100),
• faire envoyer le premier numéro de série (106) au premier terminal portable mobile (100) par le second billet de banque (100).

3. Procédé selon l'une quelconque des revendications précédentes, dans lequel la première adresse de blockchain est le premier numéro de série (106) du premier terminal portable mobile (100) ou la première adresse de blockchain est dérivée du premier numéro de série (106) du premier terminal portable mobile (100),
dans lequel, par exemple, une clé cryptographique publique (116) de la paire de clés asymétriques du premier terminal portable mobile (100) est attribuée à la première adresse de blockchain par une transaction, initialisant la première adresse de blockchain, à la première adresse de blockchain, avec laquelle la clé cryptographique publique (116) de la paire de clés asymétriques du premier terminal portable mobile (100) est entrée dans la première blockchain (148), ou
dans lequel la première adresse de blockchain est la clé cryptographique publique (116) de la paire de clés asymétriques du premier terminal portable mobile (100) ou la première adresse de blockchain est dérivée de la clé cryptographique publique (116) de la paire de clés asymétriques du premier terminal portable mobile (100),
dans lequel, par exemple, le premier numéro de série (106) est attribué à la première adresse de blockchain par une transaction initiale à la première adresse de blockchain, avec laquelle le premier numéro de série (106) est entré dans la première blockchain (148).

4. Procédé selon l'une quelconque des revendications précédentes, dans lequel le message est transféré au premier serveur de blockchain (140) en utilisant une table de routage qui identifie, pour chacune des plages de la pluralité de numéros de série, un ou plusieurs serveurs de blockchain attribués qui gèrent la blockchain attribuée à la plage correspondante de numéros de série,
dans lequel la table de routage identifie en outre, par exemple, une adresse de réseau respective des serveurs de blockchain (140, 141, 161).

5. Procédé selon l'une quelconque des revendications précédentes, dans lequel les étapes consistant à recevoir et transférer le message sont mises en œuvre par un système informatique de terminal (130, 180, 190) ou un serveur (170, 200).

6. Procédé selon l'une quelconque des revendications 1 à 4, dans lequel les étapes consistant à recevoir et transférer le message sont réalisées par un serveur de blockchain (141, 161) du système de blockchain (156).

7. Procédé selon la revendication 6, dans lequel le serveur de blockchain (141, 161) est en outre configuré pour fractionner l'une des blockchains (148, 149, 167) du système de blockchain (156) si un critère prédéfini est rempli, dans lequel l'étape consistant à fractionner la blockchain comprend une étape consistant à fractionner la plage de numéros de série attribués à la blockchain pour les fractionner en deux sous-plages ou plus, dans lequel chacune des sous-plages est attribuée à une blockchain indépendante au cours de l'étape consistant à fractionner.

8. Procédé selon la revendication 7, dans lequel le serveur de blockchain (141, 161) surveille une charge de la blockchain, dans lequel le critère prédéfini est un dépassement d'une valeur de seuil prédéfinie de la charge par une charge actuelle détectée au cours de la surveillance,
dans lequel, par exemple, il est déterminé pour chacune des sous-plages dans chaque cas la proportion de la charge actuelle détectée qui peut être attribuée à la sous-plage correspondante, et la division en les sous-plages est adaptée de telle sorte qu'une différence entre les sous-plages qui peut être attribuée aux sous-plages est inférieure ou égale à une première valeur maximale prédéfinie.

9. Procédé selon la revendication 7, dans lequel le critère prédéfini est un dépassement d'une valeur de seuil prédéfinie d'une somme de soldes associés aux numéros de série de la plage de numéros de série de la blockchain correspondante,
dans lequel, par exemple, pour chacune des sous-plages, une somme des soldes attribués aux numéros de série de la sous-plage correspondante est déterminée, et l'étape consistant à fractionner en les sous-plages est ajustée de telle sorte qu'une différence entre les sommes des soldes des sous-plages est inférieure ou égale à une deuxième valeur maximale prédéfinie.

10. Procédé selon l'une quelconque des revendications 7 à 9, dans lequel la plage de numéros de série à diviser est divisée de telle sorte que les différences de taille des sous-plages par rapport au nombre de numéros de série compris dans les sous-plages sont inférieures ou égales à une troisième valeur maximale prédéfinie.

11. Procédé selon l'une quelconque des revendications 7 à 10, dans lequel la blockchain à diviser est attribuée à une première des sous-plages et est en outre utilisée pour consigner des paiements d'adresses de blockchain de numéros de série de la première sous-plage, dans lequel pour chaque sous-plage supplémentaire, une blockchain indépendante supplémentaire est générée dans chaque cas, dans lequel la génération des blockchains supplémentaires comprend dans chaque cas les étapes consistant à :
• entrer une note de division pour chaque adresse de blockchain des numéros de série de la sous-plage supplémentaire dans la blockchain à diviser,
• entrer un bloc de genèse pour chaque adresse de blockchain des numéros de série de la sous-plage supplémentaire dans la blockchain supplémentaire, dans lequel les blocs de genèse comprennent chacun une indication d'un solde actuel qui est attribué au numéro de série correspondant au moment de la division dans la blockchain à diviser, ou
dans lequel la blockchain à diviser est terminée et une blockchain indépendante supplémentaire est créée pour chacune des sous-plages, dans lequel la création des blockchains supplémentaires comprend dans chaque cas les étapes consistant à :
• entrer une note de division pour chaque adresse de blockchain des numéros de série de la sous-plage supplémentaire dans la blockchain à diviser,
• entrer un bloc de genèse pour chaque adresse de blockchain des numéros de série de la sous-plage supplémentaire dans la blockchain supplémentaire, dans lequel les blocs de genèse comprennent chacun une indication d'un solde actuel qui est attribué au numéro de série correspondant au moment de la division dans la blockchain à diviser.

12. Procédé selon l'une quelconque des revendications précédentes, dans lequel la seconde adresse de blockchain du bénéficiaire est une seconde adresse de blockchain d'un second terminal portable mobile du bénéficiaire, dans lequel le message comprend un second numéro de série du second terminal portable mobile du bénéficiaire,
dans lequel le procédé comprend en outre les étapes consistant à :
• lors d'une entrée de la transaction libérée par la libération de transaction dans la première blockchain (148), contrôler si le second numéro de série est inclus dans une plage de numéros de série qui est attribuée à une seconde blockchain de la pluralité de blockchains (148, 149, 167) différente de la première blockchain,
• si le second numéro de série est attribué à une autre seconde blockchain (149, 167), déterminer la seconde blockchain (149, 167) à laquelle le second numéro de série est attribué,
• générer une entrée de confirmation de la transaction libérée dans la première blockchain, qui inclut la libération de transaction,
• envoyer la confirmation d'entrée à un second serveur de blockchain (141, 161), qui gère la seconde blockchain (149, 167), pour une entrée supplémentaire de la transaction libérée dans la seconde blockchain (149, 167),
dans lequel, par exemple, la confirmation d'entrée comprend le second numéro de série dans un en-tête, et/ou
dans lequel, par exemple, la confirmation d'entrée est signée par le premier serveur de blockchain (140), et/ou
dans lequel, par exemple, le procédé comprend en outre l'étape consistant à faire contrôler la confirmation d'entrée par le second serveur de blockchain (141, 161), dans lequel le second serveur de blockchain (141, 161) entre de plus la transaction libérée par la libération de transaction dans la seconde blockchain (149, 167) lors d'un contrôle réussi.

13. Système informatique (130, 141, 161, 170, 180, 190, 200) pour exécuter un paiement en utilisant un terminal portable mobile (100) d'une pluralité de terminaux portables mobiles et un système de blockchain (156),
dans lequel le système de blockchain (156) comprend une pluralité de blockchains (148, 149, 167), dans lequel chacune des blockchains (148, 149, 167) est associée à un ou plusieurs serveurs de blockchain (140, 141, 161) qui gèrent la blockchain (148, 149, 167) correspondante,
dans lequel chaque terminal portable mobile (100) de la pluralité de terminaux portables mobiles se voit attribuer un numéro de série respectif depuis un espace de numéros de série, dans lequel l'espace de numéros de série est divisé en une pluralité de plages de numéros de série, dans lequel chacune des plages de numéros de série se voit attribuer l'une des blockchains (148, 149, 167) respectives du système de blockchain (156) qui consigne les paiements depuis les adresses de blockchain attribuées aux terminaux portables mobiles avec des numéros de série de la plage correspondante de numéros de série,
dans lequel le système informatique (130, 141, 161, 170, 180, 190, 200) comprend un processeur (134, 143, 163, 174, 184, 194, 204), une mémoire (132, 147, 167, 172, 182, 192, 202) avec des instructions de programme (136, 145, 165, 176, 186, 196, 206) et une interface de communication (138, 153, 169, 178, 188, 198, 208), dans lequel le processeur (134, 143, 163, 174, 184, 194, 204) est configuré pour réaliser ce qui suit lors de l'exécution des instructions de programme (136, 145, 165, 176, 186, 196, 206) :
• recevoir un message du terminal portable mobile (100) avec une libération de transaction par l'intermédiaire de l'interface de communication (138, 153, 169, 178, 188, 198, 208), dans lequel la libération de transaction est signée en utilisant une clé cryptographique privée (118) d'une paire de clés asymétriques du terminal portable mobile (100), dans lequel la paire de clés asymétriques est attribuée à une adresse de blockchain du terminal portable mobile (100), dans lequel la libération de transaction comprend l'adresse de blockchain du terminal portable mobile (100), une adresse de blockchain du bénéficiaire et une somme à payer,
• déterminer, en utilisant un numéro de série (106) du terminal portable mobile (100) comprenant le message, une blockchain (148) de la pluralité de blockchains (148, 149, 167) attribuées à la plage de numéros de série comprenant le numéro de série (106),
• transférer le message par l'intermédiaire de l'interface de communication (138, 153, 169, 178, 188, 198, 208) à un serveur de blockchain (140), qui gère la blockchain (148) particulière, pour contrôler et entrer la transaction libérée par la libération de transaction dans la blockchain (148).

14. Système (157) comprenant un système informatique selon la revendication 13 et un terminal portable mobile (100), dans lequel le terminal portable mobile (100) comprend un élément de sécurité (102) avec un processeur (124) et une mémoire (120) avec des instructions de programme (128),
dans lequel les clés cryptographiques privées (118) du terminal portable mobile (100) sont stockées dans une zone de mémoire protégée (122) de la mémoire (120),
dans lequel le processeur (124) est configuré pour exécuter ce qui suit lors de l'exécution des instructions de programme (128) :
• recevoir une requête de paiement pour un paiement avec le terminal portable mobile (100) sous la forme de la transaction de la somme à payer depuis l'adresse de blockchain du terminal portable mobile (100) à l'adresse de blockchain du bénéficiaire, dans lequel la requête de paiement spécifie la somme à payer et l'adresse de blockchain du bénéficiaire,
• signer la libération de transaction avec la clé cryptographique privée (118) du terminal portable mobile (100),
• envoyer le message avec la libération de transaction signée.

15. Système (157) selon la revendication 14, comprenant en outre un système de blockchain (156) ayant une pluralité de blockchains (148, 149, 167), dans lequel chacune des blockchains (148, 149, 167) est associée à un ou plusieurs serveurs de blockchain (140, 141, 161) qui gèrent la blockchain (148, 149, 167) correspondante, dans lequel un espace de numéros de série de terminaux portables mobiles utilisés est divisé en une pluralité de plages de numéros de série, dans lequel chacune des plages de numéros de série est associée à l'une des blockchains (148, 149, 167) du système de blockchain (156), qui consigne les paiements depuis les adresses de blockchain associées aux terminaux portables mobiles avec des numéros de série depuis la plage correspondante de numéros de série.
